# EUROPEAN PATENT APPLICATION

(11) **EP 3 338 564 A1**
(43) Date of publication of application: **27.06.2018**
(21) Application number: 16837195.3
(22) Date of filing: 20.08.2016
(51) Int. Cl.: A23L 29/269, A23L 2/00, A23L 27/00, A23L 35/00

(54) **WELAN GUM-CONTAINING COMPOSITION**

(30) Priority: 20.08.2015 JP 2015163193; 26.08.2015 JP 2015166379; 09.09.2015 JP 2015177125; 09.10.2015 JP 2015201487; 30.10.2015 JP 2015214981; 02.06.2016 JP 2016110580; 29.07.2016 JP 2016149194; 01.08.2016 JP 2016151612
(71) Applicant: San-Ei Gen F.F.I., INC., Toyonaka-shi, Osaka 561-8588 (JP)
(72) Inventor: KONDA, Takashi, Toyonaka-shi Osaka 561-8588 (JP); SATO, Yasuharu, Toyonaka-shi Osaka 561-8588 (JP); TOYOIZUMI, Satoshi, Toyonaka-shi Osaka 561-8588 (JP); ONODERA, Makoto, Toyonaka-shi Osaka 561-8588 (JP); YAMASAKI, Hiroki, Toyonaka-shi Osaka 561-8588 (JP); SHIMA, Yuri, Toyonaka-shi Osaka 561-8588 (JP); MIHARA, Hiroyasu, Toyonaka-shi Osaka 561-8588 (JP); OKUDA, Eiji, Toyonaka-shi Osaka 561-8588 (JP); TAKESONO, Minami, Toyonaka-shi Osaka 561-8588 (JP); NAKAMURA, Kyousuke, Toyonaka-shi Osaka 561-8588 (JP); FUJITA, Yusuke, Toyonaka-shi Osaka 561-8588 (JP); IWAI, Kazumi, Toyonaka-shi Osaka 561-8588 (JP); SATO, Yudai, Toyonaka-shi Osaka 561-8588 (JP)
(74) Representative: Hoffmann Eitle
(86) International application number: PCT/JP2016/074304
(87) International publication number: WO 2017/030206

(57) **Abstract**

An object of the present invention is to provide a dispersion stabilizer that has an effect of improving or stabilizing the dispersibility of solids insoluble in aqueous media and/or liquid components immiscible therewith. The above object can be achieved by a dispersion stabilizer comprising welan gum.

## Description

### Technical Field

The present invention relates to a welan gum-containing composition and the like.

More specifically, the present invention relates to the following technical fields (1) to (7).
(1) The present invention relates to a dispersion stabilizer. Specifically, the present invention relates to a dispersion stabilizer that has an effect of improving or stabilizing the dispersibility of solids insoluble in aqueous media and/or liquid components immiscible therewith.
   More specifically, the present invention relates to a dispersion stabilizer that is important for liquid products (e.g., liquid foods) in which the uniformity of the product content causes problems because insoluble solids or immiscible liquid components contained as a dispersoid in aqueous media are precipitated or separated during production and following storage; and that is also useful for solid foods in which precipitation, separation, etc., of the dispersoid in a liquid mixture cause problems during production and following storage.
   Further, the present invention relates to a processed food product or a material composition thereof, wherein the dispersibility of solids or liquid components in liquid is improved, precipitation or separation does not occur even after they are left for a long time, and the uniformity of content components is excellent.
(2) The present invention also relates to a burst inhibitor of batter coating for deep-fried foods. Specifically, the present invention relates to a burst inhibitor of batter coating for deep-fried foods which enables preparing deep-fried foods that are less likely to undergo a burst phenomenon in which the batter coating of deep-fried foods (e.g., cream croquette) bursts open during cooking (during deep-frying in oil).
(3) The present invention also relates to a fruit preparation obtained by processing fruits in a solution containing sugar and/or other water-soluble solids. Specifically, the present invention relates to a fruit preparation that has good dispersibility in solutions, has pleasant sharpness with less of the sliminess particularly from polysaccharide thickeners, forms almost no aggregates when added to yogurt etc., and has high shape retention.
(4) The present invention also relates to an acidic oil-in-water emulsified condiment, such as mayonnaise and emulsified liquid dressings. Specifically, the present invention relates to an acidic oil-in-water emulsified condiment comprising welan gum.
   More specifically, the present invention relates to a novel acidic oil-in-water emulsified condiment having a good perceived meltability in the mouth, while also having an excellent fatty sensation.
(5) The present invention also relates to a method for imparting richness to beverages. Specifically, the present invention relates to a method for imparting richness to dairy-free soft drinks, dairy component-containing neutral beverages, or dairy component-containing acidic beverages.
(6) The present invention also relates to a multilayer food comprising a plurality of layers that differ in texture, color, etc.
(7) The present invention also relates to a stabilizer for fat-containing liquid foods.

### Background Art

The following is the background art of the technical fields (1) to (7).

Regarding the technical field (1), various studies have been conducted on methods for improving the dispersibility or stability of insoluble solids or liquid components in a liquid. In particular, in the food field, for example, processed food products, such as dressings, soups, and fruit juice-containing beverages, have had serious drawbacks. Specifically, when they are in a liquid state (a beverage etc. as a final product or a mix etc. as an intermediate obtained during the manufacturing process), solid particles, even when stirred, are immediately precipitated to stay at the bottom of the container; therefore, the drink is diluted and becomes watery, and it thus we cannot enjoy homogeneity during consumption. Such precipitation and separation also greatly reduce the commercial value due to the bad appearance. Therefore, to develop commercial products that necessitate distribution or long-term storage, the above problem absolutely must be solved.

To solve the above problem, the following methods have been proposed; use of a stabilizer comprising a combination of xanthan gum and galactomannan (Patent Literature (PTL) 1); a dispersion stabilizer comprising native gellan gum (PTL 2); a dispersion stabilizer comprising water-soluble carrageenan (PTL 3); and use of a stabilizer comprising at least one of sodium alginate, carboxymethyl cellulose (CMC), gelatin, starch, and agar, together with an emulsifier, such as sucrose fatty acid ester and glycerin fatty acid ester.

These methods, however, offer an insufficient dispersion stability effect, and also suffer from sedimentation of the solids of the contained components or separation of immiscible liquid components from one another. These problems have only been overcome by consumers by shaking or stirring the products at the time of eating or drinking. Additionally, the use of a stabilizer may overly increase the viscosity depending on its type and amount, possibly resulting in unpleasant texture or mouthfeel etc.

Regarding the technical field (2), various studies have been made on texture improvement, flavor improvement, inhibition of bursting open, etc., with respect to the batter coating (battering) (typically coating of bread crumbs) of deep-fried foods. However, when ingredients of deep-fried food, such as cream croquette, have a high water content, the batter coating is likely to be damaged or burst open during deep-frying in oil, often resulting in defective products.

To avoid such defects in the coating of deep-fried food, studies have been conducted to propose: a powder premix comprising wheat flour, a wheat gluten decomposition product, pregelatinized starch, glucomannan, and an alkaline coagulant, the premix being a batter mix for deep-fried food, the mix being stable at a water addition ratio of 90 to 120 mass%, with respect to 10 mass% of the powder (PTL 4); a batter material for deep-fried food, the material comprising a skimmed milk powder (PTL 5); a batter material for deep-fried food, the material comprising 85 mass% or more of particles having a particle size of 8 to 80 µm and 20 mass% or more of particles having a particle size of 8 to 20 µm, wheat flour having a protein value of less than 7.0 mass%, a dietary fiber material having a dietary fiber content of 50 mass% or more according to the AOAC method (PTL 6); and the like.

However, problems remain in that the texture of the batter coating of deep-fried food becomes too rigid, and in that the coating will still burst open (be ruptured) during deep-frying in oil.

The "fruit preparation" mentioned with regard to the technical field (3) refers to fruit processed in a solution containing sugar and/or other water-soluble solids (hereinafter referred to as "syrup"), and is a fruit processed food that is used in place of fresh fruit to be added to yogurt, ice cream, or the like. The viscosity of these fruit preparations are usually adjusted to moderate to improve the dispersibility of fruit in the syrup and the mixing properties with respect to yogurt, ice cream, or other foods.

Examples include a fruit sauce containing a gum, such as xanthan gum or guar gum, and a fruit sauce containing a combination of a gum and a low methoxyl pectin (PTL 7); a method for producing a fruit sauce, the method comprising placing frozen pulp into a container, and then introducing to the container a solution portion that has been prepared beforehand by mixing and dispersing a thickener, such as guar gum or locust bean gum, in a sugar solution, followed by heating and cooling (PTL 8); and the like. Although the use of xanthan gum, pectin, guar gum, etc., contributes to the achievement of excellent dispersibility of fruit sauces etc. in syrup, when the fruit sauce etc. are added to yogurt or other foods, aggregation undesirably occurs, and slimy, heavy and unsharp textures are undesirably provided.

Further, PTL 9 discloses a method for producing a food product, such as gel-like or paste-like jam, filling, and sauce, the method comprising mixing, without heating, a stabilizer with fruits, vegetables, and other starting materials, placing the mixture into a container, a packaging material, or the like, and hermetically sealing the container, packaging material, or the like, followed by heating at a maximum temperature of 75°C. As examples of stabilizers usable in this method, PTL 9 discloses pectin, sodium alginate, gellan gum, carrageenan, guar gum, xanthan gum, locust bean gum, pregelatinized starch, etc. However, deacylated gellan gum or native gellan gum may not be fully dissolved, because their dissolution temperature could be increased by the presence of cations; thus, these are expected to be used in limited systems. The jam and the like of PTL 9 are produced in relation to food in the form of a gel or a paste; it is not an object of PTL 9 to achieve pulp dispersion in syrup, or to improve the texture when added to yogurt etc.

Further, the use of a thickener, such as native gellan gum, in pulp-containing yogurt has also been proposed. Examples include a method for producing yogurt by fermenting a starting material mixture comprising raw milk, lactobacilli, native gellan gum, and a solid food (PTL 10); yogurt in which solids are almost uniformly dispersed in the entire curd of yogurt, and in which alginate is used as a stabilizer (PTL 11); and the like. However, when native gellan gum or alginate is used before fermentation, yogurt may aggregate during or after fermentation, and grittiness may remain in the texture, possibly deteriorating a pleasant perceived meltability in the mouth. Further, an increased amount thereof is likely to increase the viscosity of the starting material mixture before fermentation.

Regarding the technical field (4), various studies have been conducted on methods for producing mayonnaise or an emulsified liquid dressing. For example, PTL 12 discloses a low-fat mayonnaise product comprising edible oil, water, egg white, microcrystalline cellulose, and polydextrose.

Studies have also been conducted on methods for improving the texture or the rapid melting mouthfeel with respect to emulsified condiments, such as mayonnaise and dressings. Specific examples include the use of pectin, vinegar, salt, and calcium salt for preparing a dressing etc. having excellent flavor release and texture (PTL 13); a mayonnaise-like food product comprising a raw bean curd skin, an edible fat and oil, both or either one of vinegar and/or citrus fruit juice, and a seasoning (PTL 14); a dressing containing 5 to 50 wt% of fat and oil, and having an average particle diameter of 1 to 2 µm and a viscosity of 5 Pa•s or lower (PTL 15); a processed food composition containing a dextrin having specific properties (PTL 16); a mayonnaise-like condiment containing a soy milk fermented material having a viscosity of 6.0 Pa•s or more and an aqueous seasoning liquid, and containing no purified oil and fat nor a yolk (PTL 17); an emulsion-type dressing containing a water-soluble cellulose ether whose 2 wt% solution has a viscosity of 15 mPa•s or less at 25°C (PTL 18); a mayonnaise-like food containing an emulsified composition containing egg yolk and a polysaccharide, the mayonnaise-like food being obtained by using a method comprising a step of heating a mixed solution containing egg yolk and a polysaccharide to a temperature equal to or below the thermocoagulation temperature of egg yolk protein (PTL 19); an oil-in-water type acidic emulsified food containing an egg white-like coagulated material containing a cooling coagulating material, oils and fats, and an emulsifying material, and being made as a solid in a state of an oil in water, as the ingredient (PTL 20); an acidic oil-in-water type emulsified condiment containing 10% or more of an edible oil and fat based on the product, and having an entire viscosity of 100,000 mPa•s or more, and also containing yolk treated with phospholipase A and octenylsuccinic acid-modified starch (PTL 21); and the like.

However, low-fat mayonnaise or low-fat emulsified liquid dressings inevitably have poor fatty sensation, which could not be sufficiently overcome with the above techniques. Further, these products have a slimy or sticky texture, causing a poor perceived meltability in the mouth. Furthermore, semi-solid dressings, such as mayonnaise, have low shape retention, possibly greatly reducing the commercial value.

Regarding the technical field (5), the "richness" is described here. Foods and beverages contain various components, which are believed to be intricately combined to produce tasty foods and beverages. The basic elements of taste are considered to be sweetness, saltiness, sourness, bitterness, and *umami.* In addition to components having these tastes, dairy components, proteins, fats and oils, etc., also affect the taste.

In particular, richness is important in foods and beverages. The "richness" refers to the deep taste or *umami* of foods and beverages, and plays a key role in various foods and beverages.

Examples of methods for imparting richness to foods and beverages include a taste improver comprising a high-boiling-point component mixture of animal and vegetable oil and fat subjected to oxidation treatment (PTL 22); an organic acid fermentation liquid prepared by fermenting a protein and a carbohydrate(PTL 23); a flavor- and taste-improving agent produced by filtering milk, defatted milk, or whey with a separation membrane, and treating the permeated liquid with a protease (PTL 24); a method for producing a new body-taste enhancer, the method comprising heating a mixture containing at least one nitrogen compound selected from creatine and creatinine, and a ω-3 fatty acid (PTL 25); a body-taste enhancer containing nicotinamide or a derivative thereof or a salt thereof as an active ingredient (PTL 26); a *kokumi* (richness)-imparting agent having calcium receptor activation activity, and containing at least one active ingredient selected from specific low-molecular weight peptides (PTL 27); a method for imparting a body taste to a low-sugar or a sugarless coffee-containing beverage or a tea beverage by adding dextrin derived from potato, and having a DE of 2 or more and less than 5 (PTL 28); and the like.

In terms of coffee-containing beverages, tea beverages, and alcoholic beverages, such as cocktails and *chuhai* (cocktails based on liquors made from sweet potato or rice), low-calorie products, which contain a reduced amount of a saccharide, such as sugar, have recently gained popularity. However, a reduction in saccharide content in beverages, which have a high water content, directly results in a reduction in richness, and causes less satisfying to many consumers than previous products.

PTL 29 discloses a technique of adding a cyclodextrin to a beverage to enhance richness and at the same time weaken sourness, bitterness, astringency, and sweetness, to thus produce a beverage that gives a mild sensation to the throat. However, a cyclodextrin, which has a function of encapturing a substance inside the cyclic structure, problematically decreases the flavor release of coffee or tea beverages, thus greatly deteriorating the flavor sensation.

PTL 30 discloses a method for producing a tea beverage, the method comprising adding 0.5 to 4 mass% of a starch hydrolyzate that manifests an iodide coloration at 460 to 520 nm to a tea extract. An object of the invention disclosed in PTL 30 is to inhibit becoming cloudy (cream-down) of a tea beverage. PTL 30 nowhere discloses improving richness of tea beverages, but explicitly discloses that a solution of dextrin with a DE of about 10 or less is susceptible to aging except in special cases; and that if the solution is stored for a long time, the solution itself becomes cloudy. Further, even if dextrin with a DE of 9 or more disclosed in PTL 30 is used, it is impossible to impart sufficient richness to tea beverages.

PTL 31 discloses a functional coffee obtained by mixing 5 parts by weight or less of water-soluble less-digestable dextrin per 1 part by weight of soluble coffee powder. Although digestion resistant dextrins have various functions as a kind of dietary fiber, a high amount thereof, i.e., more than 1%, must be used to impart richness to coffee or tea beverages, which problematically causes deterioration of the flavor release of beverages, or a change in the taste.

Regarding the technical field (6), various studies have been conducted on methods for industrially advantageously producing a multilayer food comprising a plurality of layers. In particular, studies have been actively conducted in the field of multilayer foods comprising a plurality of gel layers. In this field, methods for successively introducing gel solutions for two layers have widely been considered. Examples thereof include a method for producing a multilayer food, the method comprising successively introducing two mix solutions having a different specific gravity and a different viscosity, and allowing the mix solution with a larger specific gravity to sediment to form a gel as the lower layer (PTL 32 and PTL 33). However, a jelly product produced by this method would have a poor texture, and would not be able to be considered a jelly. Further, in this method, a delicate operation is required since the vibration of a container could result in a layer separation failure; thus, this method may not be suitable for industrial production.

Additionally, studies have been conducted on a method for producing a two-layered jelly, the method comprising first introducing a mix solution with a higher brix, and subsequently introducing a mix solution with a lower brix, followed by solidification by cooling. Examples include a method in which xanthan gum is added beforehand as a thickener to each starting material of jelly (PTL 34); and a method for producing a two-layered jelly, the method comprising mixing an aqueous solution in which a gelatinizing agent is dissolved in water and an aqueous solution in which xanthan gum and glucomannan are dissolved in water, followed by cooling (PTL 35). However, the xanthan gum used in these jellies possibly interacts with other polysaccharides, which problematically limits the formula. Further, since xanthan gum imparts spinability, the handling at the time of filling would be problematic.

Regarding the technical field (7), there are various types of fat-containing liquid foods. For example, milk-containing coffee beverages and milk-containing tea beverages are known as milk-fat-containing beverages. However, these fat-containing liquid foods suffer from the occurrence of "creaming," in which lipid globules emerge during storage, which problematically reduces the commercial value.

In view of these problems, the development of techniques using cellulose-based materials and emulsifiers has progressed. For example, PTL 36 discloses a method for stabilizing a dairy component-containing beverage, the method comprising incorporating microfibrous cellulose made from plant cell walls as a raw material. Further, PTL 37 discloses a dairy component-containing coffee beverage comprising an emulsifier and a cellulose complex. PTL 38 discloses a method for producing a coffee beverage, the method comprising adding an emulsifier and microcrystalline cellulose to a coffee extract solution containing a dairy product. PTL 39 discloses a stabilizer for a sealed bottled dairy drink containing stearoyl lactate as an emulsifier.

### Citation List

### Patent Literature

PTL 1: JPH02-018817B
PTL 2: JPH10-234316A
PTL 3: JP2002-186431A
PTL 4: JPH09-070263A
PTL 5: JP2002-065194A
PTL 6: JP2003-023896A
PTL 7: JPH03-052942B
PTL 8: JP2003-102443A
PTL 9: JPH11-243877A
PTL 10: JP2001-095482A
PTL 11: JPH02-227028A
PTL 12: JPH04-229154A
PTL 13: JP2013-215164A
PTL 14: JP2011-130681A
PTL 15: JP2010-227044A
PTL 16: JP2010-011781A
PTL 17: JP2008-054540A
PTL 18: JP2007-209288A
PTL 19: JP2004-222561A
PTL 20: JP2002-325564A
PTL 21: JP2002-153237A
PTL 22: JP2007-110984A
PTL 23: JP2007-289181A
PTL 24: JP2006-081502A
PTL 25: JP2011-1253215A
PTL 26: JP2011-125316A
PTL 27: JP2011-115186A
PTL 28: JP2012-115247A
PTL 29: JPS54-145268A
PTL 30: JP2003-000145A
PTL 31: JP2000-316478A
PTL 32: JPS50-036652A
PTL 33: JPS61-001349A
PTL 34: JPS61-128846A
PTL 35: JPH07-079715A
PTL 36: JP2004-305005A
PTL 37: Japanese Patent No. 3526604
PTL 38: JPH06-245703A
PTL 39: JP2004-173636A

### Summary of Invention

### Technical Problem

In consideration of the circumstances described regarding the above technical field (1), an object of the present invention is to provide a dispersion stabilizer that improves the dispersibility of solids insoluble in aqueous media and/or liquid components immiscible therewith during distribution or long-term storage, that ensures stability, and that provides an excellent texture when used in processed food products or material compositions thereof.

In consideration of the circumstances described regarding the above technical field (2), because the above problems occur in improving burst of the deep-fried food coating, another object of the present invention is to provide a burst inhibitor for deep-fried foods, whereby ingredients of deep-fried food are improved, so that the texture of the batter coating does not become too rigid, and so that the ingredients of the deep-fried food can retain their shape during deep-frying thereby a burst phenomenon is less likely to occur particularly when ingredients of the deep-fried food have a high water content (e.g., cream croquette).

In consideration of the circumstances described regarding the above technical field (3), another object of the present invention is to provide a fruit preparation that has excellent dispersibility in syrup, and that has a light and sharp texture when added to yogurt or the like.

In consideration of the circumstances described regarding the above technical field (4), another object of the present invention is to provide a novel acidic oil-in-water emulsified condiment that solves drawbacks of conventional semi-solid dressings (e.g., mayonnaise) and emulsified liquid dressings, including reduced fatty sensation, poor perceived meltabilily in the mouth, decreased shape retention, and like.

In consideration of the circumstances described regarding the above technical field (5), another object of the present invention is to provide a beverage with body by imparting richness and suitable viscosity.

In consideration of the circumstances described regarding the above technical field (6), another object of the present invention is to easily provide a multilayer food having a plurality of layers that differ in texture or color, wherein the plurality of layers are clearly separated.

There are the following problems with respect to the background art of the above technical field (7).

The fibrous cellulose derived from plant cell walls disclosed in PTL 36 has a problem in term of convenience, because it is necessary to activate the fibrous cellulose by applying mechanical shearing force before addition to beverages. Moreover, the microcrystalline cellulose disclosed in PTL 37 and PTL 38 has problems in that it is necessary to add a large amount (i.e., 0.2 mass%) of the microcrystalline cellulose to beverages, consequently affecting the texture or mouthfeel of the beverages and increasing the viscosity. Furthermore, the stearoyl lactate disclosed in PTL 39 has an insufficient creaming-prevention effect. This effect is not satisfactory even if the stearoyl lactate is used in combination with polysaccharide thickeners, such as xanthan gum, gum arabic, guar gum, and locust bean gum, which are described as polysaccharides preferable for combined use.

The present invention has been developed in consideration of these circumstances, and an object of the present invention is to provide a stabilizer for fat-containing liquid foods, the stabilizer preventing the occurrence of creaming in fat-containing liquid foods during storage.

### Solution to Problem

As a result of extensive research, the present inventors found that the above problems can be solved by using welan gum. Thus, the present invention has been completed.

The outline of the problems of the respective technical fields (1) to (7) is described below.

Regarding the technical field (1), the present inventors conducted extensive research to solve the above problems, and consequently found that in processed food products or material compositions thereof in which the dispersibility of solids insoluble in aqueous media and/or liquid components immiscible therewith causes problems, the dispersibility of the insoluble solids and/or the immiscible liquid components can be improved and stabilized by incorporating welan gum into the aqueous media.

As shown in Examples, provided later, the same effects could not be obtained by using polysaccharides other than welan gum, without adversely affecting the characteristics of the food etc.

For example, gellan gum and agar do not have an effect of stabilizing the dispersion of cocoa powder or salad oil in aqueous media.

Moreover, in order to obtain the effect by the use of xanthan gum or carrageenan, it is necessary to increase viscosity; consequently, the characteristics of the food are impaired.

Furthermore, the desired effect cannot be obtained by the use of guar gum, locust bean gum, tara gum, and tamarind gum, even if the viscosity is increased.

In addition, native gellan gum has a dispersion-stabilizing effect, but has a drawback when it is used in processed food products because their unique texture would be lost by its thickening effect.

One embodiment of the present invention has been developed based on these findings, and includes the following aspects.

Specifically, the present invention relates to the following dispersion stabilizer and its applications.
[Item 1-a-1] A dispersion stabilizer comprising welan gum.
[Item 1-a-2] A processed food product or a material composition thereof, comprising the dispersion stabilizer according to Item 1-a-1.
[Item 1-a-3] A method for improving or stabilizing the dispersibility of a solid insoluble in an aqueous medium and/or a liquid component immiscible therewith in a processed food product or a material composition thereof containing the aqueous medium, the method comprising adding welan gum to the aqueous medium.
[Item 1-a-4] A method for producing a processed food product or a material composition thereof, the method comprising adding the dispersion stabilizer according to Item 1-a-1.
[Item 1-b-1] A processed food product or a material composition thereof, comprising welan gum.
[Item 1-b-2] The processed food product or the material composition thereof according to Item 1-b-1, wherein the content of welan gum is 0.01 to 1 mass% (preferably 0.03 to 1 mass%).
[Item 1-b-3] The processed food product or the material composition thereof according to Item 1-b-1 or 1-b-2, wherein the processed food product or the material composition thereof is a beverage, dressing, *tare* sauce, or powdered soup.
[Item 1-b-4] A method for stabilizing the dispersion of a processed food product or a material composition thereof, the method comprising adding welan gum to the processed food product or the material composition thereof.
[Item 1-b-5] The method for stabilizing the dispersion of a processed food product or a material composition thereof according to Item 1-b-4, wherein 0.01 to 1 part by mass (preferably 0.03 to 1 part by mass) of welan gum is added based on 100 parts by mass of the processed food product or the material composition thereof.
[Item 1-b-6] The method for stabilizing the dispersion of a processed food product or a material composition thereof according to Item 1-b-4 or 1-b-5, wherein the processed food product or the material composition thereof is a beverage, dressing, tare sauce, or powdered soup.
[Item 1-b-7] A dispersion stabilizer for a processed food product or a material composition thereof, the dispersion stabilizer comprising welan gum.
[Item 1-c-1] A method for stabilizing the dispersion of a water-insoluble substance, the method comprising adding welan gum to a processed food product or a material composition thereof, comprising the water-insoluble component.
[Item 1-c-2] The method for stabilizing the dispersion according to Item 1-c-1, wherein 0.01 to 1 part by mass (preferably 0.03 to 1 part by mass) of welan gum is added based on 100 parts by mass of the processed food product or the material composition thereof.
[Item 1-c-3] A processed food product or material composition containing insoluble component and welan gum.
[Item 1-c-4] The processed food product or the material composition thereof according to Item 1-c-3, wherein 0.01 to 1 part by mass (preferably 0.03 to 1 part by mass) of welan gum is added based on 100 parts by mass of the processed food product or the material composition thereof.
[Item 1-d-1] A method for improving shape retention of a processed food product or a material composition thereof, the method comprising adding welan gum to the processed food product or the material composition thereof.

Regarding the technical field (2), the present inventors conducted extensive research to solve the above problems, and consequently found that it is possible to prepare a deep-fried food whose texture does not become too rigid, and which is less likely to undergo a burst phenomenon particularly when the ingredients of the fried food have a high water content (e.g., cream croquette), by adding welan gum as a burst inhibitor to the ingredients of the deep-fried food.

One embodiment of the present invention has been developed based on these findings, and includes the following aspects.
[Item 2-1] A burst inhibitor for deep-fried food comprising welan gum.
[Item 2-2] A deep-fried food comprising 0.1 to 1 mass% of the burst inhibitor for deep-fried food according to Item 2-1.
[Item 2-3] A method for inhibiting burst of a deep-fried food, the method comprising adding 0.1 to 1 mass% of a burst inhibitor for deep-fried food comprising welan gum to an ingredient of the deep-fried food.
[Item 2-4] A method for producing a deep-fried food, the method comprising adding 0.1 to 1 mass% of a burst inhibitor for deep-fried food comprising welan gum to an ingredient of the deep-fried food.

Regarding the technical field (3), the present inventors conducted extensive research in consideration of the problems of the prior art, and consequently found that when a fruit preparation contains welan gum as an essential component as a stabilizer used therein, the fruit preparation has excellent dispersibility in syrup, and has a light and sharp texture when added to yogurt etc. The present inventors also found that a fruit preparation having an effect of improving the shape retention of stirred yogurt can be obtained.

One embodiment of the present invention has been developed based on these findings, and includes the following embodiments.
[Item 3-1] A fruit preparation comprising welan gum.
[Item 3-2] The fruit preparation according to Item 3-1, wherein the fruit preparation is for stirred yogurt.
[Item 3-3] A method for preparing fruit-containing stirred yogurt, the method comprising adding the fruit preparation according to Item 3-1 or 3-2.

Regarding the technical field (4), the present inventors focused on the poor perceived meltability in the mouth of acidic oil-in-water emulsified condiments, and examined their mechanical properties and production methods in various ways. Consequently, the present inventors found that the above problems of an acidic oil-in-water emulsified condiment can be solved by the use of welan gum . Upon further examination, the present inventors confirmed that it is possible to obtain an acidic oil-in-water emulsified condiment with good stability that does not undergo a decrease in shape retention, and does not undergo separation etc. during production or storage.

One embodiment of the present invention has been developed based on these findings, and includes the following aspects.
[Item 4-1] An acidic oil-in-water emulsified condiment comprising welan gum.
[Item 4-2] A method for improving the texture or mouthfeel of an acidic oil-in-water emulsified condiment, the method comprising adding welan gum.
[Item 4-3] An agent for improving the texture or mouthfeel of an acidic oil-in-water emulsified condiment, the agent comprising welan gum.
[Item 4-4] A method for producing an acidic oil-in-water emulsified condiment having improved texture, the method comprising adding welan gum.

Regarding the technical field (5), the present inventors conducted extensive research to solve the above problems, and consequently found that it is possible to provide beverages, specifically dairy component-free soft drinks, dairy component-containing neutral beverages, and dairy component-containing acidic beverages, to which sufficient richness is imparted, by adding welan gum to the beverages, without affecting the original taste or flavor of these beverages.

One embodiment of the present invention has been developed based on these findings, and includes the following aspects.
[Item 5-1] A beverage to which richness is imparted, the beverage comprising welan gum.
[Item 5-2] The beverage according to Item 5-1, wherein the beverage is a dairy component-free soft drink, a dairy component-containing neutral beverage, or a dairy component-containing acidic beverage.
[Item 5-3] The dairy component-free soft drink according to Item 5-2, wherein 0.01 to 0.5 mass% of welan gum is added based on the whole amount of the drink.
[Item 5-4] The dairy component-containing neutral beverage according to Item 5-2, wherein 0.002 to 0.5 mass% of welan gum is added based on the whole amount of the beverage.
[Item 5-5] The dairy component-containing acidic beverage according to Item 5-2, wherein 0.01 to 0.5 mass% of welan gum is added based on the whole amount of the beverage.
[Item 5-6] A method for enhancing the richness of a beverage, the method comprising adding welan gum.
[Item 5-7] The method for enhancing the richness of a beverage according to Item 5-6, wherein the beverage is a dairy component-free soft drink, a dairy component-containing neutral beverage, or a dairy component-containing acidic beverage.
[Item 5-8] The method for enhancing the richness of a dairy component-free soft drink according to Item 5-7, wherein 0.01 to 0.5 mass% of welan gum is added based on the whole amount of the drink.
[Item 5-9] The method for enhancing the richness of a dairy component-containing neutral beverage according to Item 5-7, wherein 0.002 to 0.5 mass% of welan gum is added based on the whole amount of the beverage.
[Item 5-10] The method for enhancing the richness of a dairy component-containing acidic beverage according to Item 5-7, wherein 0.01 to 0.5 mass% of welan gum is added based on the whole amount of the beverage.

Regarding the technical field (6), the present inventors conducted extensive research, and consequently found that the above problems can be solved by incorporating welan gum into at least one layer of a multilayer food.

One embodiment of the present invention has been developed based on these findings, and includes the following aspects.
[Item 6-1] A multilayer food comprising welan gum in at least one layer.
[Item 6-2] The multilayer food according to Item 6-1, wherein at least one layer is gel.
[Item 6-3] The multilayer food according to Item 6-1 or 6-2, wherein a layer containing welan gum has a welan gum content of 0.01 to 3 mass% based on the on the whole amount of the layer.

This embodiment further includes the following aspects. [Item 6-4] A method for producing a multilayer food comprising welan gum in at least one layer, the method comprising continuously applying different constituents that form layers of the multilayer food.
[Item 6-5] The method for producing a multilayer food according to Item 6-4, wherein at least one layer of the multilayer food is gel.
[Item 6-6] The method for producing a multilayer food according to Item 6-5, the method comprising:
   (1) applying, in a container, different constituents that form layers of the multilayer food, and
   (2) performing gelling after step (1).

Regarding the technical field (7), the present inventors conducted extensive research to solve the above problems, and consequently found that welan gum can prevent the occurrence of creaming in fat-containing liquid foods, thus reaching to the present invention.

One embodiment of the present invention has been developed based on these findings, and includes the following aspects.
[Item 7-1] A stabilizer for a fat-containing liquid food, the stabilizer comprising welan gum.
[Item 7-2] The stabilizer for a fat-containing liquid food according to item 7-1, wherein the liquid food is a beverage.
[Item 7-3] The stabilizer for a fat-containing liquid food according to item 7-1 or 7-2, wherein the stabilizer is a creaming preventing agent.
[Item 7-4] A fat-containing liquid food comprising the stabilizer for a fat-containing liquid food according to any one of items 7-1 to 7-3.
[Item 7-5] A fat-containing liquid food comprising 0.001 to 0.5 mass% of welan gum based on the whole amount of the food.
[Item 7-6] A method for stabilizing a fat-containing liquid food, the method comprising adding the stabilizer for a fat-containing liquid food according to any one of items 7-1 to 7-3 to the fat-containing liquid food.

### Advantageous Effects of Invention

One embodiment of the present invention can improve and stabilize the dispersibility of processed food products or material compositions thereof, containing solids insoluble in and/or immiscible with aqueous media. Furthermore, one embodiment of the present invention can provide foods and beverages in which pulverized food material, pulp, cut jelly, etc., are uniformly dispersed without aggregation, and to which deep richness is imparted.

One embodiment of the present invention can prepare deep-fried foods whose texture does not become too rigid, and which are less likely to undergo a burst phenomenon particularly when the ingredients of the deep-fried foods have a high water content (e.g., cream croquette).

One embodiment of the present invention can prepare fruit preparations that have excellent dispersibility in syrup, and that have a texture with pleasant sharpness and with less of the slime particular to polysaccharides when added to yogurt or the like. Moreover, it is also possible to provide stirred yogurt with improved shape retention by adding the fruit preparation of the present invention.

The effect of one embodiment of the present invention, which is newly achieved by using welan gum, is to improve reduced fatty sensation of acidic oil-in-water emulsified seasonings, their reduced shape retention, and/or their perceived meltabiilty in the mouth. All these attitude cannot be improved coincidently by using cellulose (e.g., microcrystalline cellulose), xanthan gum, or starch. That is, conventionally used polysaccharides, such as starch or xanthan gum, can impart fatty sensation, but cause sliminess, stickiness or pasty feeling at the same time, and the desired texture, especially perceived meltability in mouth cannot be obtained. It has not been known that the acidic oil-in-water emulsified condiment with a good perceived meltability in the mouth can be obtained by using welan gum as in the present invention.

One embodiment of the present invention can provide various beverages (e.g., coffee and tea) with sufficient richness, without affecting the original flavor profile of the beverages. Moreover, it is also possible to provide richness and body with dairy component- or fruit juice-containing beverages.

One embodiment of the present invention can easily produce multilayer foods with good texture comprising a plurality of layers that differ in texture, color, etc., wherein the layers are clearly separated.

One embodiment of the present invention can prevent the occurrence of creaming in fat-containing liquid foods.

### Brief Description of Drawings

Fig. 1 is a photograph of the appearance of the emulsified dressing of Comparative Example 4-2 after one-week storage at 20°C.
Fig. 2 is a photograph of the appearance of the emulsified dressing of Example 4-3 after one-week storage at 20°C.
Fig. 3 is a photograph of the appearance of the emulsified dressing of Example 4-4 after one-week storage at 20°C.
Fig. 4 is a photograph of the appearance of the emulsified dressing of Comparative Example 4-3 after one-week storage at 20°C.
Fig. 5 is a photograph of the appearance of the emulsified dressing of Comparative Example 4-4 after one-week storage at 20°C.
Fig. 6 is a graph showing the temperature change with time of a hot-lemon beverage.
Fig. 7 is a photograph immediately after the sauce from Comparative Example 7-1 was mixed with the pasta.
Fig. 8 is a photograph immediately after the sauce from Example 7-1 was mixed with the pasta.
Fig. 9 is a photograph one hour after the sauce from Comparative Example 7-1 was mixed with the pasta.
Fig. 10 is a photograph one hour after the sauce from Example 7-1 was mixed with the pasta.
Fig. 11 is a photograph immediately after the inversion of a bottle containing the dairy-containing coffee beverage from Comparative Example 9-2-1 after four-week storage at 37°C.
Fig. 12 is a photograph immediately after the inversion of a bottle containing the dairy-containing coffee beverage from Comparative Example 9-2-2 after four-week storage at 37°C.
Fig. 13 is a photograph immediately after the inversion of a bottle containing the dairy-containing coffee beverage from Example 9-2-1 after four-week storage at 37°C.

### Description of Embodiments

### Terms

Unless otherwise specified, the symbols and abbreviations used in the present specification can be understood to have the meanings generally used in the technical field with which the present invention associates, in accordance with the context of the present specification.

In the present specification, the term "comprise" is used with the intention of including the terms "consist essentially of" and "consist of."

Welan gum is a polysaccharide obtained from a culture medium of bacteria of the genus *Sphingomonas* (*Sphingomonas* sp.). Simply, commonly distributed commercial products can be used. Specific examples include VIS TOP W (produced by San-Ei Gen F.F.I., Inc.) and the like.

### (1) Dispersion Stabilizer and Its Applications

Embodiments of the "Dispersion Stabilizer and Its Applications" described above are related to each other, and are understood in consideration of the following explanation based on common technical knowledge in the technical field with which the present invention associates.

The dispersion stabilizer of the present invention can improve the dispersibility of water-insoluble substances in aqueous media, thus improving the stability. The water-insoluble substances can be (1) solids that are insoluble in aqueous media, or (2) liquid components that are immiscible with aqueous media (aqueous phase).

That is, the dispersion stabilizer of the present invention can improve the dispersibility of solids insoluble in aqueous media and liquid components immiscible with aqueous media (aqueous phase), thus improving the stability.

Examples of aqueous media include water and liquid foods or food ingredients (e.g., vinegar and liquid sugar).

Examples of the "solids insoluble in aqueous media" include the following solids:
(1) plant components (e.g., pulverized spices (e.g., pepper and basil), fiber components of vegetables or fruits, pulp, vegetable chips, fruit juice, and vegetable juice);
(2) nuts (e.g., azuki beans, peanuts, and almonds);
(3) jellies (e.g., jelly particulates and jelly pieces);
(3) protein components;
(4) plastic beads;
(5) pigments; and
(6) coating compositions.

The dispersion stabilizer of the present invention has a function of helping such solids to be quickly dispersed in aqueous media, and also water-miscible organic solvents, and preventing aggregations or sedimentation of the solids.

Examples of the "liquid components immiscible with aqueous media" include edible oily components, such as salad oil, olive oil, and sesame oil.

In general, aqueous component and oily component are not miscible with each other, and are immediately separated even when they are suspended by shaking or stirring.

In contrast, the dispersion stabilizer of the present invention stably maintains the dispersibility and uniformity of an oily component contained in an aqueous component. Even when the aqueous component is mixed with an oily component, such as salad oil, olive oil, or sesame oil, both components can be uniformly mixed by treatment, such as stirring with a homomixer or the like, or homogenization with a homogenizer or the like, and the uniformity of mixture can be stably maintained.

Therefore, the dispersion stabilizer of the present invention has a function of helping an oily component to be easily dispersed or suspended in an aqueous component, and preventing separation of both components by stabilizing the dispersed or suspended state.

Thus, the dispersion systems targeted by the dispersion stabilizer of the present invention are not particularly limited, as long as the dispersant is an aqueous medium, and the dispersoid is a solid phase or liquid phase that is not miscible with the aqueous medium. Examples include processed food products, material compositions thereof, and the like.

In the present specification, the "food" refers to various substances that are processed, semi-processed, or unprocessed, intended for human consumption.

In the present specification, the "processed food product" refers to food that is a processed substance.

In the present specification, the material composition of the "processed food product" (i.e., a composition for food processing) can be a part for the final consumer products, or a composition containing an unprocessed substance.

In the present specification, the "food" includes, in addition to narrowly defined food, all substances used for the production, preparation, or processing of beverages, chewing gum, and food.

In the present specification, the "food" includes "Food with Health Claims", "Foods with Function Claims", "Foods for Specified Health Uses", "Foods with Nutrient Function Claims", and "Food for Special Dietary Uses".

The processed food product or the material composition thereof of the present invention is characterized by comprising welan gum.

Although again later, more specific examples include sweet red bean soup, sweet bean jelly, fruit preparation, beverages containing plant components, such as fruit juice and/or vegetable juice, and jelly-containing beverages; soups, such as corn soup, potage soup, egg-containing soup, powdered soup, and *miso* soup; liquid condiments, such as dressing, *tare* sauce, and sauce; and the like.

More specifically, the liquid condiments as mentioned in the present invention refer to dressings, such as separate-type dressing, emulsified type dressings, and non-oil dressings; sauces, such as Worcestershire sauce, oyster sauce, pork cutlet sauce, *yakisoba* (fried noodles) sauce, *okonomiyaki* (Japanese pancake) sauce, soy sauce, chili sauce, dressing type sauce, barbecue sauce, dumpling sauce, *kabayaki* (spitchcock) sauce, thick starchy sauce for *ankake* (food dressed with a thick starchy sauce), pasta sauce, curry sauce, and white sauce; processed tomato products, such as ketchup and pizza sauce; *tare* sauces, such as barbecue sauce, dumpling sauce, *kabayaki* (spitchcock) sauce, and thick starchy sauce for *ankake* (food dressed with a thick starchy sauce); and similar foods.

The above liquid condiments contain welan gum in an amount of 0.01 to 1 mass%, preferably 0.05 to 0.8 mass%, and more preferably 0.1 to 0.5 mass%. If the welan gum content of the liquid condiment is less than 0.01 mass%, shape retention may not be sufficiently imparted. In contrast, if the welan gum content exceeds 1 mass%, the viscosity of the liquid condiment may be too high and may not have desirable characters.

The dispersion stabilizer of the present invention can also be used, not only in the field of food, but also in industrial fields, such as cosmetics, dye/pigment compositions, and cement.

The amount of welan gum used in such a dispersion system is not particularly limited within a range in which the target dispersion system is not gelled, and it can be suitably selected depending on the type and content components of the target dispersion system.

For both the prevention of precipitation of insoluble solids and their stabilization in the aqueous medium, welan gum is generally used in an amount of 0.01 to 1 mass%, preferably 0.03 to 1.0 mass%, and more preferably 0.1 to 0.8 mass%, in the dispersion system.

Regarding the dispersion stabilizer of the present invention and its applications, welan gum is generally used in an amount of 0.01 to 1 part by mass, preferably 0.03 to 1.0 part by mass, and more preferably 0.1 to 0.8 parts by mass, based on 100 parts by mass of the processed food product or the material composition thereof.

Regarding the dispersion stabilizer of the present invention and its applications, welan gum is generally used in an amount of 0.01 to 1 mass%, preferably 0.03 to 1.0 mass%, and more preferably 0.1 to 0.8 mass%, in the processed food product or the material composition thereof.

In particular, the dispersion stabilizer of the present invention exhibits a remarkable dispersion-stabilizing effect for dispersion systems that are immiscible with aqueous media.

Regarding the present invention, the processed food product can be food having a form in which (A) water-insoluble solids or (B) water-immiscible liquid components are dispersed in aqueous media (e.g., water, cow milk, or fruit juice). Examples of the (A) water-insoluble solids include:
(a) azuki beans,
(b) peanuts,
(c) almonds,
(d) chocolate,
(e) cocoa powder,
(f) green tea powder,
(g) calcium,
(h) fiber components, pulp, flesh, etc., of vegetables or fruits, and
(i) protein components etc. contained in soups, sweet red bean soup, or liquid condiments.

Specific examples include the above-mentioned beverages, soups, *miso* soups, liquid condiments, frozen desserts, confectionery, bread, and the like.

More specifically, examples of the processed food products include:
(1) beverages (e.g., cocoa beverages, calcium-enriched beverages, green tea-containing beverages, vegetable- or fruit juice-containing beverages, soy milk beverages, jelly-containing beverages, and sweet red bean soup drinks);
   soups (e.g., corn soup, potage soup, egg-containing soup, and *miso* soup);
(2) liquid condiments (e.g., dressings, sauces and *tare* sauces);
(3) frozen desserts (e.g.:
   (a) ice creams (ice cream, ice milk, lacto ice, and the like that contain insoluble solids, such as azuki beans, chocolate, or nuts) (specific examples: azuki ice pops and ice creams containing chocolate); and
   (b) soft ice cream, ice cream cake, sherbet, and frozen desserts, such as ice pops, shaved ice, *mizore,* and frozen yogurt;
(4) confectionery (e.g., cakes); and
(5) breads (e.g., bread and steamed bread) and jellies (e.g., sweet bean jelly and soft sweet bean jelly) containing fruits or nuts.

The processed food product can be, for example,
(1) a processed food product prepared through a state in which a dispersoid is contained in a dispersant, or
(2) a processed food product that has a state in which insoluble solids are dispersed in a liquid.

The stage or time at which the processed food product has such a state is not particularly limited, and may be, for example, in the production stage of the processed food product, and when they are served.

Examples of processed food products that have such a state in the production stage include confectionery, bread, frozen desserts, sweet bean jelly, liquid soups, dressings, *tare* sauces, and beverages (e.g., cocoa beverages and green tea beverages).

Examples of processed food products that have such a state when they are served include powder beverages (e.g., cocoa) and powder foods (e.g., soup).

In the present invention, material compositions of processed food products, that is, "compositions for processed food products," can be compositions for preparing the above-mentioned processed food products.

Moreover, in the present invention, the "compositions for processed food products" may be compositions having (1) a form in which insoluble solids are dispersed in an aqueous medium, or (2) a form containing immiscible liquids, regardless of the form of the processed food products.

Examples of the former (1) include powder cocoa, powdered sweet red bean soup, powder beverages (green tea-containing beverages, calcium-enriched skim milk, etc.), powder or solid soups, and the like that are generally called instant foods (dried preparations).

This is based on the fact that they have high compatibility with cold water or warm water (hot water) because they contain welan gum, and this can be useful not only in that dispersibility and suspensibility are improved, but also in that when dissolved preparations of the compositions are allowed to stand for a certain period of time, there are no problems such that precipitates are formed and the content remains in the bottom, so that the supernatant tastes weak during drinking.

Examples of the latter (2) include frozen-dessert mixes, concentrates of liquid beverages (cocoa beverages, green tea beverages, fruit-juice beverages, etc.), compositions for preparing bread, steamed bread, cake, etc.

This is based on the fact that the dispersoid is stably and uniformly dispersed in the above compositions because they contain welan gum, and this can be useful in that these compositions can be used to prepare foods etc. in which there is no variation in the content of dispersoid, and in which the dispersoid is uniformly and stably dispersed.

Examples of cosmetics mentioned above include liquid cosmetics, such as hair cosmetic, facial wash, skin toner, and lotion, which contain solids or oily components as components.

For example, solid-containing lotions, such as lotions containing pearl powder or gold powder, and calamine lotions containing calamine powder, require shaking when used, because the solids are precipitated. Moreover, such lotions have problems in that the component composition varies between the start of use and around the end of use (that is, the time at which the lotion runs out) (for example, the solid content increases as the product is reduced by use).

However, such solids can be uniformly dispersed in aqueous media for a long period of time by the use of the dispersion stabilizer of the present invention, and the same component composition can be kept to the end of use.

The dispersion stabilizer of the present invention can thicken, if necessary, the dispersion system to suitable viscosity depending on the proportion.

Liquid foods using the dispersion stabilizer of the present invention (e.g., pasta sauce, *ankake* sauce, and *yakisoba* sauce) easily flow by share, while they have high shape retention when left to stand. Therefore, for example, when a pasta sauce using the dispersion stabilizer of the present invention is placed on top of pasta, the sauce is prevented from running down the pasta as time passes.

Conventionally, there was a problem in that when the above-mentioned liquid foods and liquid condiments were thickened in order to improve their shape retention, their flavor release were significantly decreased. However, according to the present invention, flavor release is not significantly decreased even when it is thickened, and the shape retention of the liquid foods and liquid condiments can be improved, while keeping excellent flavor.

Moreover, polysaccharide thickeners, such as xanthan gum, were often used conventionally for liquid foods in order to improve their shape retention by adding viscosity. However, there were problems in that the texture of liquid foods was degraded, resulting in a pasty texture, sticky texture, slimy texture, etc.; and in that the pasty texture, sticky texture, slimy texture, etc., remained in the oral cavity for a long time. However, according to the present invention, the shape retention of liquid foods can be improved while keeping an excellent texture, without impairing the texture of the liquid foods as described above.

### (1-b-i) Processed Food Product or Material Composition Thereof, Comprising Welan Gum

The present invention also provides a processed food product or a material composition thereof, comprising welan gum.

The details of the processed food product or the material composition thereof are understandable from, for example, the explanation for the processed food product or the material composition thereof, comprising the above dispersion stabilizer.

### (1-b-ii) Method for Stabilizing Dispersion of Processed Food Product or Material Composition Thereof

The present invention also provides a method for stabilizing the dispersion of a processed food product or a material composition thereof.

The method comprises adding welan gum to a processed food product or a material composition thereof.

The details of the method are understandable from, for example, the explanation for the processed food product or the material composition thereof, comprising the above dispersion stabilizer.

### (2) Burst Inhibitor for Deep-Fried Food and Method for Inhibiting Burst of Deep-Fried Food

The Deep-fried food burst inhibitor of the present invention is characterized by comprising welan gum.

The amount of welan gum added to the burst inhibitor for deep-fried foods can be suitably adjusted, depending on the water content and/or preparation method of the deep-fried food to be prepared. Preferably, the amount of welan gum can be increased when the deep-fried food has a high water content, whereas the amount of welan gum can be decreased when the deep-fried food has a low water content. For example, it is preferable to add, to the ingredients of the deep-fried food, 0.1 to 1 mass% of the burst inhibitor for deep-fried foods containing welan gum, the viscosity (a BL-type rotational viscometer, rotation speed: 60 rpm, room temperature) of which is 300 mPa·s or more (the upper limit can be 3,000 mPa·s, for example) when a 0.5% aqueous solution is prepared.

Examples of the deep-fried foods as mentioned in the present invention include croquettes, such as cream croquette, curry-flavored croquette, and potato croquette; deep-fried meat, such as minced-meat cutlet, pork cutlet, beef cutlet, and chicken cutlet; deep-fried fish and shellfish, such as shrimp, squid, octopus, tuna, scallop, sand borer, porgy, and flounder; deep-fried vegetables, such as onion, nameko mushroom, shiitake mushroom, enoki mushroom, and ginkgo nuts; spring roll, *gyoza* (Japanese dumplings), *tempura*, fritter, *tatsutaage* (marinated deep-fried chicken), and the like. In particular, it is possible to prepare deep-fried foods in which a burst phenomenon that occurs during deep-frying in oil, particularly when the fillings of the deep-fried foods have a high water content (e.g., cream croquette), is significantly prevented; and whose texture does not become too rigid.

In addition to welan gum, the burst inhibitor for deep-fried foods of the present invention may contain components used for general deep-fried foods, as long as the effects of the present invention are not significantly adversely affected. Specifically, such other components can be one or more components selected from the group consisting of starch, polysaccharide thickeners, bread crumbs, oil and fat, wheat flour, emulsifiers, seasonings, flavors, colorants, sweeteners, acidulants, baking powder, shelf life-improving agents, preservatives, antioxidants, etc. The amount thereof may be an amount that can be generally selected depending on the type and application of the component. The burst inhibitor for deep-fried foods of the present invention can be prepared by mixing welan gum and such one or more other components at a predetermined ratio, and dispersing or dissolving the mixture.

Examples of starch widely include starch derived from potato, corn, wheat, and tapioca, and their modified starch.

Examples of polysaccharide thickeners include gellan gum, carrageenan (e.g., kappa carrageenan, iota carrageenan, and lambda carrageenan), xanthan gum, locust bean gum, glucomannan, agar, guar gum, alginic acid, sodium alginate, alginate ester, tamarind seed gum, tara gum, gum arabic, tragacanth gum, karaya gum, pectin (e.g., HM pectin and LM pectin), pullulan, water-soluble cellulose ethers (e.g., hydroxypropylmethylcellulose (HPMC), methylcellulose (MC), carboxymethylcellulose (CMC), and hydroxypropylcellulose (HPC)), microfibrous cellulose, fermentation-derived cellulose, furcellaran, soybean soluble polysaccharides, psyllium seed gum, ghatti gum, curdlan, succinoglycan, rhamsan gum, macrophomopsis gum, and the like.

The burst inhibitor for deep-fried foods of the present invention may optionally contain vitamins; calcium, such as calcium carbonate, calcium lactate, and calcium gluconate; minerals, such as iron, magnesium, phosphorus, and potassium; and the like.

The present invention can effectively prevent the burst of deep-fried foods during deep-frying in oil by adding welan gum as a burst inhibitor for deep-fried foods to the ingredients of the deep-fried food, as described above.

It is also possible to efficiently prevent the burst of conventional deep-fried foods which requires battering twice to prevent the burst thereof, even by battering once. Thus, the preparation processes can be reduced. Moreover, the effects of the present invention are not impaired even when the fillings are battered twice, and battering may be applied two or more times, as necessary. Furthermore, deep-fried foods with an excellent texture in which the batter is well attached to the fillings can also be prepared.

### (3) Fruits Preparation

The fruit preparation of the present invention is characterized by comprising a syrup portion and a fruit (pulp) portion, and using welan gum as a stabilizer in the syrup portion.

The amount of welan gum added to the fruit preparation of the present invention can be suitably adjusted depending on the type of fruit preparation to be prepared, and the raw materials contained therein. For example, it is preferable to add welan gum in an amount of 0.05 to 1.0 mass%, and preferably 0.2 to 0.5 mass%, based on the total weight. If the amount of welan gum is lower than 0.05 mass%, the dispersion effect may be insufficient. In contrast, even if 1.0 mass% or more of welan gum is added, the same or greater effect cannot be expected; rather, increased viscosity etc. reduce the production and operation efficiency.

Further, welan gum may be added as a single stabilizer, or may be used in combination with one or more materials selected from xanthan gum, guar gum, tara gum, locust bean gum, pectin, carrageenan, native gellan gum, or starch (e.g., modified starch). It was conventionally possible to disperse fruits in syrup by using stabilizers, such as xanthan gum, guar gum, tara gum, locust bean gum, pectin, carrageenan, native gellan gum, and starch; however, very high viscosity was required to increase dispersibility. There were problems in that when they were added to yogurt or like food, the texture of the yogurt etc. became slimy and heavy, and in that the yogurt aggregated, causing a rough texture. The present invention allows fruits to be stably dispersed in syrup by using welan gum alone or in combination with one or more of the above stabilizers, forms almost no aggregate when added to yogurt or like food, and can impart high shape retention.

The amount of one or more materials selected from xanthan gum, guar gum, tara gum, locust bean gum, pectin, carrageenan, native gellan gum, or starch (e.g., modified starch) added to the fruit preparation is, for example, 0.01 to 2.0 mass%, preferably 0.03 to 1.0 mass%, and more preferably 0.05 to 0.8 mass%, based on the syrup portion except for the fruit portion.

Other stabilizers may also be added within a range that does not adversely affect the effects of the present invention. Examples of other stabilizers include deacylated gellan gum, agar, gelatin, whey protein, carrageenan, gum arabic, glucomannan, psyllium seed gum, pullulan, tamarind seed gum, tragacanth gum, karaya gum, alginic acid, sodium alginate, macrophomopsis gum, ghatti gum, rhamsan gum, carboxymethylcellulose, methylcellulose, hydroxypropylmethylcellulose, hydroxypropylcellulose, microcrystalline cellulose, microfibrous cellulose, fermentation-derived cellulose, soybean soluble polysaccharides, furcellaran, curdlan, succinoglycan, dextrin, and the like.

Moreover, it is desirable to use syrup after the water-soluble solid content (brix) is adjusted to about 10 to 80 mass%. The water-soluble solid content can be adjusted by adjusting the amount of edible water-soluble solids. Examples of general water-soluble solid components include carbohydrates, but are not limited thereto.

Usable examples of carbohydrates include sugar, fructose, glucose, lactose, maltose syrup, reduced maltose syrup, high-fructose corn syrup, honey, isomerized sugar, invert sugar, oligosaccharides (isomaltooligosaccharide, reduced xylooligosaccharide, reduced gentiooligosaccharide, xylooligosaccharide, gentiooligosaccharide, nigerooligosaccharide, teandeoligosaccharide, soybean oligosaccharide, etc.), trehalose, sugar alcohols (maltitol, erythritol, sorbitol, palatinit, xylitol, lactitol, etc.), sugar-binding maltose syrup (coupling sugar), and like carbohydrates. If sweetness is not sufficient with the use of carbohydrates alone, sweeteners with high sweetness, such as aspartame, acesulfame potassium, sucralose, alitame, neotame, advantame, licorice extract (glycyrrhizin), saccharin, saccharin sodium, stevia extract, and stevia powder, may be added.

In the present invention, fruits used in the fruit (pulp) portion are not particularly limited, as long as they are edible. Examples include pulp, mesophyll, seed, peel, etc., of strawberries, blueberries, raspberries, pears, peaches, apples, mandarin oranges, grapes, pineapples, melons, kiwis, bananas, aloes, and the like. These can be used in any shape by suitably cutting, pureeing, or grinding them. Moreover, the "fruits" used in the present invention may not only be fruits themselves, but also fruit analogs (e.g., jelly imitating these fruits). The fruits can be used in an amount of about 1 to 90 mass% based on the total amount of the fruit preparation. Further, a part or all of the fruits may be replaced by cut products, such as agar gel, nata de coco, and almond jelly.

Furthermore, examples of other possible additives of the fruit preparation of the present invention include flavors, color additives, acidulants, flavor-controlling agents, antioxidants, and the like. Moreover, vitamins, calcium (e.g., calcium lactate and calcium gluconate), and minerals (e.g., iron, magnesium, phosphorus, and potassium) may be added, if necessary. These may be added beforehand to the syrup portion, or may be added together with fruits to the prepared syrup.

The fruit preparation of the present invention may be produced according to a conventional method. For example, carbohydrates such as sugar and maltodextrin are mixed with welan gum alone or in combination with one or more stabilizers selected from xanthan gum, guar gum, tara gum, locust bean gum, carrageenan, native gellan gum, or starch. Then, this mixture is added to water, followed by heating for solubilization to prepare syrup. Fruits, and optionally other possible additives, are added, the mixture is further heated, optionally followed by a heat sterilization process, and the resultant is cooled, thereby producing the fruit preparation.

The fruit preparation of the present invention can be used, for example, in the production of fruit-containing stirred yogurt, in the same manner as the use of fruits.

### (4) Acidic Oil-in-Water Emulsified Condiment

The acidic oil-in-water emulsified condiment of the present invention is characterized by using welan gum as a stabilizer. In the present invention, welan gum may be formulated beforehand into an agent together with food additives and the like that are used for acidic oil-in-water emulsified condiments. Formulation of welan gum into a texture-improving agent has advantages in terms of handling ease during manufacturing process.

Examples of components that can be used in combination with welan gum to constitute a texture-improving agent include, without limitation, food additives and food materials that are used for acidic oil-in-water emulsified condiments, as described above. Specifically, examples of thickeners and stabilizers include xanthan gum, locust bean gum, tara gum, guar gum, gellan gum, carrageenan, cellulose, soybean soluble polysaccharides, starch (modified starch), and gelatin; examples of emulsifiers include lecithin, sucrose fatty acid ester, and glycerol fatty acid ester; and examples of bulking agents include dextrin, cyclodextrin, glucose, sucrose, lactose, and trehalose.

Regarding the composition ratio of the texture-improving agent, the amount and ratio may depend on the acidic oil-in-water emulsified condiment to be produced.

Moreover, the form of welan gum when added to the acidic oil-in-water emulsified condiment in the present invention is not limited, as long as it is a form used in food production. Welan gum may be formulated into a texture-improving agent, as described above; alternatively, welan gum may be added in any form, such as powder, solution, or paste.

The amount of welan gum added to the acidic oil-in-water emulsified condiment of the present invention is, for example, 0.01 to 1 mass%, and preferably 0.1 to 0.5 mass%, based on the total weight. If the amount of welan gum is less than 0.01 mass%, sufficient texture-improving effect and/or improvement in shape retention are not achieved. In contrast, it is not preferable to add welan gum in an amount exceeding 1.0 mass%, because of the higher viscosity of the emulsified condiment, causing handling difficulty during production, and the flavor of welan gum is strongly perceived. The amount of welan gum added can be suitably adjusted, depending on the type and state of the acidic oil-in-water emulsified condiment to which welan gum is added. Further, when a texture-improving agent comprising welan gum is prepared and added to the acidic oil-in-water emulsified condiment, the amount of the texture-improving agent may be adjusted so that the welan gum content of the acidic oil-in-water emulsified condiment is within the above range.

The acidic oil-in-water emulsified condiment of the present invention refers to those included in the range of "semi-solid dressings" including mayonnaise, creamy salad dressings, etc.; and "emulsified liquid dressings" having a state in which water and oil are emulsified. Both of these are defined in the Japanese Agricultural Standards (October 4, 1975, Ministry of Agriculture and Forestry Notification No. 955) of dressings.

Hereinafter, these are collectively called "acidic oil-in-water emulsified condiments."

Usable examples of components that constitute the acidic oil-in-water emulsified condiment of the present invention include, without limitation, those that can be conventionally added to acidic oil-in-water emulsified condiments, in addition to welan gum mentioned above. Specific examples include emulsifiers, edible oils and fats, organic acids, salts, fruit juices, spices, sugars, and the like. Moreover, the production method and conditions do not require special requirements; therefore, existing production facilities etc. can be used as is. Thus, the present invention can be easily performed.

Examples of the emulsifier used in the present invention include sucrose fatty-acid esters and like synthetic emulsifiers, egg yolk, whole egg, lecithin, etc. These may be used as a single ingredient or in a combination of two or more. The amount of the emulsifier used is not particularly limited and can be suitably adjusted by a person skilled in the art, as long as the ultimately prepared semi-solid dressing is emulsified to a desired degree. For example, in order to obtain a texture similar to the texture of commercially available mayonnaise, 6 to 17 mass% of egg yolk is added to the semi-solid dressing in case of the use of egg yolk.

The edible oil and fat used in the present invention are not particularly limited, as long as they are oils and fats that can be eaten. Examples include vegetable fats and oils, such as soybean oil, rapeseed oil, cotton seed oil, corn oil, coconut oil, and palm oil; animal fats and oils, such as beef tallow and lard; hydrogenated fats thereof, fractionated fats thereof, transesterified fats thereof, and the like. These can be used as a single ingredient or in a combination of two or more. The amount of edible oil and fat used is preferably 15 to 80 mass%, based on the semi-solid dressing.

The organic acid used in the present invention is not particularly limited, as long as it is an organic acid or its salt thereof. Examples include fermented vinegar, lactic acid, tartaric acid, malic acid, citric acid, fumaric acid, sodium acetate, sodium malate, citrus fruit juice, and the like. These may be used as a single ingredient or in a combination of two or more. The amount of organic acid is not particularly limited, but is generally 3 to 15 mass%. In terms of flavor and storage stability, an acidity of 0.3 to 10% (as acetic acid) is preferable. In the present invention, semi-solid dressings with a good perceived meltability in the mouth can be prepared without using organic acids; however, organic acids have a remarkable effect in terms of allowing flavor enhancement.

The following method is an example of the method for preparing a semi-solid dressing, among the acidic oil-in-water emulsified condiments of the present invention; however, the scope of the present invention also includes semi-solid dressings prepared by other methods, as long as they comprise welan gum. That is, the essence of the present invention is a semi-solid dressing comprising welan gum. The production method thereof may be not only a general method, but any other method whereby a semi-solid dressing is ultimately prepared.

### Example of Method for Producing Emulsified Dressing

Welan gum is added to water and stirred for 10 minutes. Food materials and food additives, such as an emulsifier, organic acid, and monosodium glutamate, are added thereto and stirred. While stirring the mixture with homodisper (4000 to 5000 rpm), edible oil and fat are added, and the total amount of the mixture is treated with a homomixer (10000 rpm) to prepare an emulsified dressing.

### (5) Richness Imparting

Examples of beverages that can use the present invention include:
beverages, such as coffee-containing beverages, tea beverages (e.g., black tea, green tea, and oolong tea), and cocoa beverages;
fruit-juice beverages (which may contain pulp, juice or part of tomato, juice or part of vegetables, etc., in addition to fruit juices);
alcoholic beverages, such as cocktails, *chuhai,* beer, beer-flavored beverages, plum wine, and liqueur; and
dairy beverages, including dairy component-containing soft drinks (e.g. acidified milk beverages, probiotic dairy beverages, including yogurt drinks, coffee milk, and green tea with milk).

Other examples include carbonated soft drinks; and healthy beverages, such as functional soft drinks, drug-based drinks, sports drinks, functional beverages, and healthy vinegar drinks.

Extensive research conducted on the above various beverages revealed that they could be classified into the following groups depending on the range of the amount of welan gum added, and the type of beverage:
I. Dairy component-free soft drinks, amount of welan gum: 0.01 to 0.5 mass%;
II. Dairy component-containing neutral beverages, amount of welan gum: 0.002 to 0.5 mass%; and
III. Dairy component-containing acidified beverages, amount of welan gum: 0.01 to 0.5 mass%.

The above classification is described below.

### 5-I. Dairy Component-Free Soft Drinks

The dairy component-free soft drinks targeted by the present invention refer to soft drinks that do not contain dairy and dairy-derived components as ingredients.

Examples of the dairy components as mentioned herein include milk, such as cow milk; and processed dairy products, such as skim-milk powder, whole-milk powder, concentrated milk, fresh cream, condensed milk, butter, defatted milk, cream powder, sweetened-milk powder, modified-milk powder, whey powder, and buttermilk powder.

The dairy component-free soft drinks refer to soft drinks that do not contain the above dairy components. Specific examples include fruit-juice beverages, pulp beverages, tomato beverages, vegetable beverages, vegetable-containing mixed fruit-juice beverages, coffee and tea beverages, drinkable jellies, cocoa beverages, chocolate drinks, sweet mild sake, sweet red bean soup, soup beverages, powdered soup beverages, carbonated beverages, alcohol-containing beverages (e.g., *chuhai,* cocktails, beer, low-malt beer, beer-flavored alcoholic beverages, wine, plum wine, liqueur, and makgeolli), beer-flavored non-alcoholic beverages, healthy beverages (e.g., drug-based beverages, health-supporting beverages, functional soft drinks, sports drinks, vinegar drinks, and malt drinks), vegetable beverages (e.g., cereal beverages mainly comprising rice, soybean milk, or almonds), and the like.

The amount of welan gum added to the above beverages is within the range of 0.01 to 0.5 mass%, preferably 0.02 to 0.3 mass%, and more preferably 0.03 to 0.2 mass%. Although the amount of welan gum added to the beverages may exceed 0.5 mass%, the improvement in the richness-imparting effect cannot be particularly expected; rather, welan gum is added for the purpose of thickening to the beverages. However, if the amount of welan gum is 0.5 mass% or more, the flavor of the beverages and smoothness perceived in the throat may be deteriorated. In contrast, if the amount of welan gum added is less than 0.01 mass%, a sufficient richness-enhancing effect may not be obtained.

The pH of the above beverages is not particularly limited, but is generally 2 to 7.5, and preferably 3 to 6.8.

Specific examples of the above beverages are explained. Coffee-containing beverages refer to beverages using coffee beans as raw materials, and beverages obtained by adding sugars, emulsified edible oils and fats, other edible products, etc., to the above beverages. Specific examples include coffee, coffee beverages, coffee-containing soft drinks, and the like that do not contain dairy components.

Examples of tea beverages include black tea, oolong tea, green tea, dark tea, *sencha* green tea, *matcha* green tea, roasted green tea, blended tea (e.g., blended tea containing one or more extracts selected from the group consisting of grains, such as adlay, barley, brown rice, soybean, and corn; leaves, such as persimmon leaves, loquat leaves, *Sasa veitchii* leaves, *Gynostemma pentaphyllum* leaves, *Angelica keiskei* leaves, and *Houttuynia cordata* leaves; kelp, safflower, shiitake mushroom, and litchi; etc.), and like beverages that can generally be called "tea" or "tea-based beverages," that do not contain dairy components, and that contain, as a main raw material, extract from plant-derived materials, such as various tea leaves, regardless of the degree of fermentation, and regardless of whether they are derived from a tea plant (*Camellia sinensis*).

Beverages obtained by adding dairy components to these coffee-containing beverages and tea beverages will be described in the subsequent section "4-II. Dairy Component-Containing Neutral Beverages."

The amount of welan gum of the present invention added to coffee-containing beverages or tea beverages is, for example, 0.01 to 0.5 mass%, and preferably 0.01 to 0.3 mass%. If the amount of welan gum exceeds 0.5 mass%, the flavor of the beverages and smoothness perceived in the throat may be deteriorated. In contrast, if the amount of welan gum is less than 0.01 mass%, a sufficient richness-enhancing effect may not be obtained.

The fruit-juice beverages of the present invention are described. Examples of the raw materials of the fruit-juice beverages include those commonly used as raw materials of fruit-juice beverages, such as citrus fruits (from citrus fruit trees) (e.g., mandarin orange, orange, lemon, lime, and grapefruit); tropical fruits (e.g., pineapple, banana, guava, mango, acerola, papaya, and passion fruit); other fruits; foods that are conventionally recognized as fruits (e.g., strawberry, apple, peach, grape, plum, pear, apricot, Japanese plum, kiwi fruit, and melon); and vegetables (e.g., tomato and carrot).

Seeds, peel, pulp, etc., are removed from these raw materials to obtain squeezed juices (straight juices), optionally followed by addition of antioxidants for prevention of browning, heat treatment for enzyme inactivation, filtration, etc. The obtained squeezed juices may be further subjected to, if necessary, a process of concentrating the squeezed juices to obtain concentrated juices, a process of diluting the concentrated juices to obtain reduced fruit juices, a process of adding various sugars, flavors, and/or acidulants etc., a sterilization process, and like commonly used processes or treatments, thereby obtaining fruit-juice beverages. In the present invention, the effects of welan gum can be exhibited on fruit juices in any stage described above, irrespective of whether they are clear fruit-juice beverages or turbid fruit-juice beverages.

Examples of the carbonated beverages of the present invention include general soft drinks that contain carbon dioxide gas and do not contain dairy components, such as cola and soda pop. The amount of welan gum added to these beverages is, for example, 0.03 to 0.1 mass%.

It is also possible to provide richness with healthy drinks containing health-related materials and functional materials, and sports drinks through addition of welan gum. The amount of welan gum added to these healthy drinks and sports drinks is, for example, 0.03 to 0.2 mass%.

Subsequently, the alcoholic beverages refer to beverages (alcoholic beverages) with an alcohol content of 1 volume% (1 V/V%) or more, and preferably 3 to 40 volume%. Examples include beer (e.g., beer, low-malt beer), brewages (e.g., fruit wine and *sake*), distilled liquors (e.g., *shochu* (distilled spirit), whiskey, brandy, and spirits), mixed liquors (e.g., liqueurs made from spirits mixed with additives, such as sugars), and cocktails, fizz, *chuhai,* and the like made from such alcoholic beverages mixed with fruit juice, flavor, and/or carbon dioxide gas, etc. These beverages do not contain dairy components.

Further, the target of the present invention also includes non-alcoholic beer, non-alcoholic cocktails, and the like that do not contain alcohol components.

In the present invention, the amount of welan gum added to the alcoholic beverages is 0.01 to 0.2 mass%, and preferably 0.03 to 0.1 mass%, based on the total weight of the alcoholic beverage. If the amount of welan gum added to the alcoholic beverage is less than 0.01 mass%, the richness-imparting effect is not sufficient. In contrast, if the amount of welan gum added to the alcoholic beverage is greater than 0.2 mass%, the flavor of the beverages and smoothness perceived in the throat are deteriorated, which is not preferable or palatable.

The method for adding welan gum to an alcoholic beverage can be depend on the method for producing the beverage; however, it is preferable to add welan gum after dissolving it in water.

The alcoholic beverages of the present invention may be seasoned by using one or more materials selected from sweeteners, such as sucrose, glucose, fructose, and like sugars; sorbitol, maltitol, and like sugar alcohols; sucralose, aspartame, neotame, advantame, thaumatin, glycyrrhizin, stevia extract, grosvenorii extract, saccharin sodium, acesulfame potassium, and like high-sweetness sweeteners; etc.

Further, cocktails, *chuhai,* etc., may also contain fruit juice and/or flavor of citruses (e.g., lemon, orange, and grapefruit), apple, peach, mango, or the like.

In addition, flavors, colorants, etc., conventionally used for alcoholic beverages can be used within a range that does not impair the effects of the present invention.

### 5-II. Dairy Component-Containing Neutral Beverages

The dairy component-containing neutral beverages targeted by the present invention refer to neutral beverages containing dairy components mentioned above. Specific examples include cow milk for drinking, dairy beverages, dairy component-containing coffee beverages, dairy component-containing tea beverages, dairy component-containing cocoa beverages, milk shake, fruits juice with milk, dairy component-containing alcoholic beverages, and the like.

The dairy component-containing coffee beverages are obtained by adding dairy components to the coffee-containing beverages described in the above section "5-I. Dairy Component-Free Soft Drinks." Specific examples include beverages using coffee beans as raw materials, and beverages obtained by adding sugars, dairy components, emulsified edible oils and fats, other edible products, etc., to the above beverages. The amount of welan gum added to such dairy component-containing coffee beverages is, for example, 0.002 to 0.5 mass%, and preferably 0.005 to 0.3 mass%.

The dairy component-containing tea beverages are obtained by using dairy components and the tea beverages mentioned in the above section 5-I as raw materials. The amount of welan gum added to such dairy component-containing tea beverages is, for example, 0.002 to 0.5 mass%, and preferably 0.005 to 0.3 mass%.

In addition, the dairy component-containing cocoa beverages, milk shake, etc., are generally available beverages, and their raw materials and production methods can be those commonly used. The amount of welan gum added to these beverages is within the range of 0.002 to 0.5 mass%, preferably 0.003 to 0.2 mass%, and more preferably 0.005 to 0.1 mass%. Although the amount of welan gum added to the beverages may exceed 0.5 mass%, the improvement in the richness-imparting effect cannot be particularly expected; rather, welan gum is added for the purpose of thickening to the beverages. However, if the amount of welan gum is 0.5 mass% or more, the flavor of the beverages and smoothness perceived in the throat may be deteriorated; this requires sufficient consideration. In contrast, if the amount of welan gum is less than 0.002 mass%, a sufficient richness-enhancing effect may not be obtained.

The pH of the dairy component-containing neutral beverages is generally 6 to 7.5, and preferably 6.3 to 6.8.

### 5-III. Dairy Component-Containing Acidified Beverages

The dairy component-containing acidified beverages targeted by the present invention refer to acidic beverages containing dairy components mentioned above. Specific examples include acidified milk beverages, weakly acidified milk beverages, probiotic dairy beverages, probiotic beverages, yogurt drinks, sterilized probiotic beverages, milk-containing soft drinks, dairy component-containing carbonated beverages, dairy component-containing alcoholic beverages, and the like.

Examples of the acidified milk beverages as mentioned in the present invention include:
yogurt drinks, fermented dairy beverages such as probiotic dairy beverages (including both non-sterilized type and sterilized type), dairy beverages obtained by a process including fermentation, and foods containing such dairy beverages (yogurt-drink type); and
beverages acidified by adding lactic acid, other organic acid (e.g., citric acid), or inorganic acid to dairy ingredients, such as cow milk, whole-milk powder, or skim-milk powder (directly acidified type).

Further, examples of the acidified milk beverages as mentioned in the present invention include those prepared by suitably adding dairy components and/or food additives (e.g., flavors, sweeteners, acidulants, color additives, bittering agents, emulsifiers, stabilizers, and thickeners) to the above-mentioned fruit juices, carbonated beverages, or alcoholic beverages.

The amount of welan gum added to these beverages is within the range of 0.01 to 0.5 mass%, preferably 0.03 to 0.4 mass%, and more preferably 0.05 to 0.3 mass%. Although the amount of welan gum added to the beverages may exceed 0.5 mass%, the improvement in the richness-imparting effect cannot be particularly expected; rather, welan gum is added for the purpose of thickening to the beverages. However, if the amount of welan gum is 0.5 mass% or more, the flavor of the beverages and smoothness perceived in the throat may be deteriorated. In contrast, if the amount of welan gum is less than 0.01 mass%, a sufficient richness-enhancing effect may not be obtained.

The pH of the dairy component-containing acidified beverages is generally 2.0 or more and less than 6.0, and preferably 3.5 or more and less than 6.0.

The dairy component-containing beverages targeted by the present invention may be beverages that contain dairy components, although they are classified into neutral beverages and acidified beverages depending on pH differences.

Examples of dairy components include milk, such as cow milk; and processed dairy products, such as skim milk powder, whole milk powder, concentrated milk, fresh cream, condensed milk, butter, defatted milk, cream powder, sweetened milk powder, modified milk powder, whey powder, and buttermilk powder.

Cow milk, skim milk powder, and whole milk powder are preferable. The ratio of the dairy component contained in the beverages is, in terms of solids-not-fat, 0.5 to 10 wt.%, preferably 1 to 5 wt.%, and more preferably 2 to 4 wt.%.

Specific examples of preferable dairy beverages targeted by the present invention are as follows, depending on whether they are neutral or acidic dairy beverages:
Neutral dairy beverages: coffee milk beverages (e.g., dairy component-containing coffee and milk coffee), milk tea (e.g., dairy component-containing tea beverages), green tea with milk (e.g., dairy component-containing green tea beverages), milk shake, milk cocoa, strawberry milk, cream soup, etc.

Acidified dairy beverages: dairy component-containing fruit juice and fruit beverages, such as strawberry milk, banana milk, melon milk, and smoothies; yogurt drinks, probiotic beverages, acidified milk beverages, dairy component-containing carbonated beverages, etc.

Of the above examples, strawberry milk, banana milk, and melon milk are classified in both groups because they can have a form belonging to both neutral and acidified beverages.

The beverages targeted by the present invention can be produced by general production methods. For example, the beverages can be prepared by dissolving at least the welan gum mentioned above, together with other raw materials, in water; adding other components thereto; then adding a raw material depending on the type of beverage, such as separately extracted coffee extract, black tea extract, or fruit juice component; optionally adjusting the pH, followed by mixing or homogenization; and placing the resultant in containers. Further, sterilization treatment is generally performed after the beverages are filled in containers. Method for sterilization is not particularly limited, and general retort sterilization, plate sterilization, autoclave sterilization, and like methods can be used.

Alternatively, it is also possible to formulate welan gum into a richness-imparting agent together with other components used in the production of beverages.

The richness-imparting agent of the present invention may consist of, for example, welan gum described above, or may further comprise other known compounds that have richness-imparting activity (e.g., glutathione and alliin), and various additives or food materials. Examples are as follows:
(1) flavors, sweeteners, acidulants, coclor additives, bittering agents, emulsifiers, stabilizers, thickeners, vitamins, minerals, and functional materials;
(2) pulp or fruit juice; seeds, rhizomes, skins (e.g., bark), leaves, and flowers of plants; and extracts from them; and
(3) animal fats and oils, vegetable fats and oils, animal protein, vegetable protein, starch, partially hydrolyzed starch (dextrin), water-soluble dietary fiber, hardly soluble dietary fiber, polyphenols, peptides, amino acids, and alcohols.

For the addition of welan gum or a richness-imparting agent comprising welan gum to the above beverages, welan gum or the richness-imparting agent comprising welan gum may be in any form, such as powder, solution, or paste. The amount thereof may be suitably adjusted so that the amount of welan gum added is within the above-mentioned range.

As described above, the amount of welan gum added to beverages in the present invention depend on the type of beverage to be produced; however, the amount of welan gum can be suitably adjusted depending on the purpose of thickening the beverages, in addition to the purpose of imparting richness.

The beverages of the present invention can be produced according to general methods, except that welan gum is added. Moreover, the present invention provides a method for enhancing the richness of beverages, the method comprising adding welan gum. For the explanation regarding welan gum and beverages, reference can be made to the above description.

As the emulsifier that can be used in the present invention, materials that have both hydrophilic portion and hydrophobic portion, have interfacial activity, and are usable for beverages can be widely used. Examples include emulsifiers, such as sucrose fatty acid esters, glycerol fatty acid esters (e.g., monoglycerol fatty acid ester, diglycerol fatty acid ester, organic acid monoglyceride, polyglycerol fatty acid ester, and polyglycerol condensed ricinoleic acid ester), sorbitan fatty acid esters, propylene glycol fatty acid esters, yucca extract, saponin, lecithin, and polysorbate; and polysaccharides having interfacial activity, such as gum arabic and octenyl succinate-modified starch. Preferable among these are sucrose fatty acid esters and/or glycerol fatty acid esters.

In addition, additives and the like that can be used for beverages can also be used within a range that does not impair the effects of the present invention.

### (6) Multilayer Food

It is necessary, for the "multilayer food" as mentioned in the present invention, that at least one layer contains welan gum. The multilayer state is, for example, a combination of a gel layer and another gel layer adjacent to each other, a combination of a gel layer and a non-gel layer adjacent to each other, or a combination of a non-gel layer and another non-gel layer adjacent to each other. Preferable is the combination of a gel layer and another gel layer adjacent to each other, or the combination of a gel layer and a non-gel layer adjacent to each other. In the case of the combination of a gel layer and a non-gel layer adjacent to each other, either the gel layer or the non-gel layer can be an upper layer.

Furthermore, the "multilayer food" as mentioned in the present invention may be a combination of three or more gel layers and/or non-gel layers.

The "gel layer" as mentioned in the present invention specifically means a layer that has shape retention when allowed to stand at a product temperature of 20°C for 1 to 2 minutes, and that does not flow under its own weight; that is, the "gel layer" refers to a layer whose shape does not change between 1 minute and 2 minutes after being allowed to stand at a product temperature of 20°C. The "non-gel layer" means a layer that flows under its own weight and does not have shape retention when allowed to stand at a product temperature of 20°C for 2 minutes, or a layer whose shape changes between 1 minute and 2 minutes after being allowed to stand at a product temperature of 20°C. Both layers are supposed to be in a state under standard atmospheric pressure (1 atm).

The gel layer of the present invention is not particularly limited, as long as it corresponds to the above definition. Examples include a wide range of foods, including Western-style and Japanese-style confectionery and desserts, such as jelly, mousse, pudding, bavarois, furan, blancmange, cup-set type yogurt, sweet bean jelly, jam, and gummy candy; and jelly-like foods and mousse-like foods, such as jellied broth, aspic, and terrine. In the multilayer food of the present invention, the same or different gel layers may be used in combination. Examples include a two-color jelly in which a colored jelly is piled up on an another colored jelly, a jelly-in-jelly in which pieces of jelly are dispersed in a jelly, a two-color dessert in which mousse or rice cake-like food is disposed in pudding, and the like.

The non-gel layer of the present invention is not particularly limited, as long as it corresponds to the above definition. Examples include a wide range of foods, such as sauce, cream, and the like that can be eaten together with gel layers. Specific examples include caramel sauce for puddings, fruit sauce for milk puddings, whipped cream for desserts, syrup, jam, curry sauce for gelled rice, and the like.

Moreover, the multilayer food of the present invention can also be prepared by combining the same or different non-gel layers (e.g., fruit-juice beverages, yogurt drinks, and dressings).

### 6-1. Multilayer Food

The present invention is characterized in that the multilayer food comprises welan gum in at least one layer.

The multilayer food of the present invention may comprise welan gum in two or more layers, or each of the adjacent layers may contain welan gum. Moreover, welan gum may be contained in a gel layer and/or a non-gel layer.

In the multilayer food of the present invention, the welan gum content in the welan gum-containing layer is not particularly limited, but is generally 0.01 to 3.0 mass%, preferably 0.05 to 1.0 mass%, and more preferably 0.1 to 0.8 mass%. If the welan gum content exceeds 3.0 mass%, the texture may become heavy. In contrast, if the welan gum content is less than 0.01 mass%, the layers may not be clearly separated.

Conventionally, in order to clearly separate the layers of multilayer foods, it was necessary to increase the brix difference between the adjacent layers (e.g., a brix difference of 20 degrees or more). However, according to the present invention, a multilayer food having clearly separated layers can be prepared even when the brix difference between a layer containing welan gum and another layer adjacent to this layer is 15 degrees or less, or further 10 degrees or less. Either of the layer with a greater brix and the layer with a lower brix may contain welan gum.

The gel layer and/or the non-gel layer may contain polysaccharides other than welan gum depending on the purpose, within a range that does not impair the effects of the present invention. The polysaccharides are not particularly limited, as long as they are those generally used for food as gelling agents, thickeners, stabilizers, etc. Examples include carrageenan, locust bean gum, xanthan gum, furcellaran, alginic acid, alginates, pectin, guar gum, gum arabic, gellan gum, pullulan, tamarind seed gum, glucomannan, psyllium seed gum, fermentation-derived cellulose, microcrystalline cellulose, agar, gelatin, and the like. The gel layer and/or the non-gel layer may contain these polysaccharides as a single ingredient or in a combination of two or more.

The content of one or more polysaccharides other than welan gum in the gel layer and/or the non-gel layer can be determined in a suitable manner, depending on the type and purpose of the usage of the polysaccharides used, the type of food to be prepared, etc.

Furthermore, the multilayer food of the present invention may contain, if necessary, sugars, sweeteners, high-intensity sweeteners, dairy raw materials, foaming agents, acidulants, seasonings, neutralizers, caramel, colorants, flavors, fruit juice, puree, preservatives, extract, pH adjusters, thickening agents, liquors, vitamins, minerals, jelly beads, and solids such as fruits cut into cubes of several millimeters, pulps of citrus fruits, and nata de coco, within a range that does not impair the effects of the present invention.

### 6-2. Method for Producing Multilayer Food

The multilayer food of the present invention can be produced, for example, by a method comprising:
(1) introducing, in a container, all raw material mixes that form layers of the multilayer food, and
(2) performing gelation of the mixes after step (1).

This production method may comprise one or more other steps, in addition to steps (1) and (2). Although it is merely described as a precaution, the production method may comprise one or more other steps between steps (1) and (2).

The method for producing the multilayer food of the present invention is described in more detail.

The multilayer food of the present invention can be produced by separately preparing formulations that form layers of the multilayer food, and continuously introducing another formulation. In this case, formulations may be supplied in any order. For example, either of the following methods can be used: a method in which a formulation with a lower brix is introduced, and then another formulation with a greater brix is continuously introduced; or a method in which a formulation with a greater brix is introduced, and then another formulation with a lower brix is continuously introduced.

The multilayer food of the present invention can also be produced by separately preparing formulations that form layers of the multilayer food, and simultaneously introducing formulations; however, the continuous-introduction method described above is preferably employed.

When the multilayer food of the present invention contains a gel layer, a multilayer food having clearly separated layers can be produced by a simple method in which a gelation step is performed after all of the formulations are supplied, without using a complicated method in which a formulation that forms the gel layer is supplied and gelled, and then another formulations are supplied. The gelation step is not particularly limited, as long as it is a known method. Examples of the method include cooling to a temperature equal to or lower than the gel point of the formulation that forms the gel layer.

Moreover, according to the present invention, a multilayer food having clearly separated layers can be prepared, even when heat sterilization is performed. Specifically, a multilayer food with an excellent appearance having clearly separated layers can be prepared, even when raw material mixes that form layers of the multilayer food are supplied after UHT sterilization at 120 to 150°C for 1 to 120 seconds, or when the raw material mixes are supplied before boiling sterilization at 85°C for 30 minutes or retort sterilization at 121°C for 20 minutes.

Furthermore, the texture of the multilayer food obtained by the present invention is not impaired by incorporating welan gum in at least one layer, and the multilayer food has a good texture. Moreover, the taste quality of the multilayer food is not impaired because syneresis from the layer containing welan gum is suppressed.

### (7) Fat-Containing Liquid Food and Fat-Containing Beverage

### 7-1. Stabilizer for Fat-Containing Liquid Food

The stabilizer for fat-containing liquid foods of the present invention is characterized by comprising welan gum.

Welan gum mainly comprises polysaccharides obtained from a culture medium of bacteria of the genus *Sphingomonas* (*Sphingomonas* sp.). Simply, commonly distributed commercial products can be used. Specific examples include VIS TOP W (produced by San-Ei Gen F.F.I., Inc.) and the like.

The welan gum content in the stabilizer for fat-containing liquid foods of the present invention is not particularly limited. In general, the welan gum content can be suitably determined within a range of 0.1 to 100 mass%.

Moreover, the stabilizer for fat-containing liquid foods of the present invention may contain various components that are allowed to be used in foods and beverages, within a range that does not impair the effects of the invention. In the case of polysaccharides, examples include xanthan gum, galactomannans (e.g., locust bean gum, guar gum, and tara gum), deacylated gellan gum, native gellan gum, carrageenan (e.g., kappa carrageenan, iota carrageenan, and lambda carrageenan), tamarind seed gum, glucomannan, psyllium seed gum, macrophomopsis gum, agar, gelatin, pectins (e.g., HM pectin and LM pectin), alginic acid, alginates (e.g., sodium alginate, potassium alginate, and calcium alginate), pullulan, curdlan, tragacanth gum, ghatti gum, gum arabic, arabinogalactan, karaya gum, furcellaran, chitin, celluloses (e.g., carboxymethylcellulose sodium, carboxymethylcellulose calcium, carboxymethylcellulose, hydroxypropylcellulose, hydroxypropylmethylcellulose, hydroxypropylethylcellulose, hydroxyethylcellulose, hydroxymethylcellulose, ethylcellulose, methylcellulose, fermentation-derived cellulose, and crystalline cellulose), starches (e.g., starch, sodium carboxymethyl starch, carboxymethyl starch, hydroxypropyl starch, pregelatinized starch, distarch phosphate, octenyl succinic acid starch, and acetic acid starch), dextrins (e.g., indigestible dextrin), soybean soluble polysaccharides, and the like.

In the case of emulsifiers, examples include glycerol fatty acid esters (e.g., monoglycerol fatty acid ester, diglycerol fatty acid ester, organic acid monoglyceride, polyglycerol fatty acid ester, and polyglycerol condensed ricinoleic acid ester), sucrose fatty acid ester, sorbitan fatty acid ester, propylene glycol fatty acid ester, yucca extract, saponin, lecithin, polysorbate, casein sodium, and the like.

Other examples of various components include organic acids, sweeteners, flavors, colorants, edible salts, bulking agentes, amino acids, vitamins, minerals, antioxidants, preservatives, antibacterial agents, bacteriostatic agents, plant extracts, fruit juices, and the like.

The stabilizer for fat-containing liquid foods of the present invention may have any form, as long as it at least comprises the welan gum described above. Examples of the form include powder, flake, paste, liquid, and the like.

### 7-2. Fat-Containing Beverage

Fat-containing liquid foods in which the stabilizer for fat-containing liquid foods of the present invention is contained are not particularly limited, as long as they are liquid foods containing fats. Fats usable herein are generally animal fats/oils or vegetable fats/oils; animal fats are preferable in terms of the flavor of the liquid food to be obtained.

Animal fats are not particularly limited, as long as they are fats derived from animals. For example, milk fats contained in dairy components obtained from mammals, such as cows and goats, can be suitably used. Examples of dairy components containing milk fats include fresh milk, cow milk, goat milk, concentrated milk, condensed milk, evaporated milk, whole powdered milk, cream, fermented milk, butter, processed milk, cheese, and the like. Examples of animal fats other than milk fats include beef tallow, lard, fish oil, etc. In the present invention, these fats may be used as a single ingredient or in combination as a fat/oil source. Other usable examples include animal fats/oils modified with enzymes, such as amylase, protease, lipase, and phospholipase; and liquid or powder emulsions, such as coffee whitener and whipped cream, obtained by processing animal fats with emulsifiers, binders, etc.

Vegetable fats/oils are not particularly limited, as long as they are fats/oils derived from plants. Examples include soybean milk, soybean oil, cacao butter, coconut oil, palm oil, palm kernel oil, coconut oil, corn oil, sunflower oil, rice oil, rapeseed oil, cotton seed oil, sesame oil, peanut oil, safflower oil, camellia oil, olive oil, canola oil, coffee oil, perilla oil, elemi resin, mastic resin, and the like. Other examples include purified vegetable fats/oils; vegetable fats/oils treated by hydrogenation, transesterification, etc.; and liquid or powder emulsions, such as vegetable-fat/oil coffee whitener, vegetable-fat/oil whipped cream, and vegetable-fat/oil cream, obtained by processing vegetable fats/oil with emulsifiers, binders, etc.

In the present invention, the fat/oil content of the fat-containing liquid food is not particularly limited; however, in general, creaming is more likely to occur as the fat content becomes high. According to the present invention, the occurrence of creaming can be significantly prevented even when the fat/oil content of the fat-containing liquid food is 0.1 mass% or more, preferably 0.3 mass% or more, more preferably 0.5 mass% or more, even more preferably 0.8 mass% or more, and particularly preferably 1 mass% or more. The upper limit of the fat/oil content of the fat-containing liquid food is 5 mass%, for example.

Specific example of liquid foods include beverages, such as water, cow milk, dairy beverages, probiotic dairy beverages, yogurt drinks, fruit juice-containing soft drinks, fruit-juice beverages such as orange juice, vegetable juice beverages, tea beverages, coffee beverages, cocoa beverages, sports drinks, functional beverages, ionic beverages, vitamin supplement beverages, and liquid nutrition beverages; frozen dessert mixes, such as soft-cream mix; alcoholic beverages, such as *sake,* beer, low-malt beer, beer-flavored alcoholic beverages, *shochu,* whiskey, brandy, wine, spirits (rum, vodka, gin, tequila, etc.), liqueur, various cocktails containing drinkable alcohols, and fruit wine such as red wine; soups, such as consommé soup, potage soup, cream soup, Chinese soup, and *ramen* soup; liquid end-products, such as soups (*miso* soup, clear soup, stew, curry, etc.), sauces (white sauce, cream sauce, pasta sauce, *ankake* sauce, etc.), custard cream, starch gruel, and *tare* sauce (for *yakiniku* (barbecue), *yakitori* (grilled chicken), etc.); special diets and therapeutic diets, such as protein-, phosphorus-, and potassium-controlled food, salt-controlled food, oil-and-fat controlled food, intestinal regulation food, calcium-, iron-, and vitamin-enriched food, low-allergy food, high-density liquid diet, liquid diet for persons with difficulty in digestion and swallowing, pureed food, and minced food; liquid condiments, such as soy sauce, dressing, and sauce; and the like.

The fat-containing liquid food of the present invention is not particularly limited, as long as it contains fat/oil among the above liquid foods. Preferable examples are fat-containing beverages, and particularly preferable are milk fat-containing beverages, such as milk-containing coffee beverages, milk-containing tea beverages, milk-containing cocoa beverages, milk shake, acidified milk beverages, and milk-containing fruit juice beverages.

Moreover, the form of the fat-containing liquid food of the present invention is not particularly limited. Examples include product forms, such as cans, bottles, plastic bottles, paper packs, and laminated packs; and various distribution forms for chilled foods, room-temperature foods, hot foods, etc.

### 7-3. Method for Stabilizing Fat-Containing Liquid Food

The stabilizer for fat-containing liquid foods of the present invention can significantly prevent the creaming that occurs when fat-containing liquid foods are stored, even though a small amount of the stabilizer is used. Moreover, since the occurrence of creaming is prevented, the following various phenomena are suppressed: "neck ring," in which floating fat globules look like layers; "white floating matter," in which floating fat globules aggregate and solidify; and "oil-off, oil ring," in which aggregated fat globules combine together and destroy the emulsified state, allowing the fat globules to float as oil droplets on the liquid food surface. Thus, the commercial value as liquid foods can be maintained. Furthermore, "precipitation," that is, aggregation and sedimentation of minor components and dairy components in fat-containing liquid foods, can also be suppressed.

Moreover, according to the stabilizer for fat-containing liquid foods of the present invention, even when neck rings are formed during storage of fat-containing liquid foods, the neck rings can be easily dispersed. Specifically, for example, neck rings can be dispersed by a simple method of inverting a container containing the fat-containing liquid food of the present invention.

The amount of the stabilizer for fat-containing liquid foods of the present invention added to a fat-containing liquid food is not particularly limited. In general, the stabilizer of the present invention can be added so that the welan gum content in the fat-containing liquid food is 0.001 to 0.5 mass%, preferably 0.008 to 0.3 mass%, and more preferably 0.015 to 0.1 mass%. If the welan gum content in the food is less than 0.001 mass%, the occurrence of creaming may not be sufficiently prevented. In contrast, if the welan gum content of the fat-containing liquid food is greater than 0.5 mass%, the viscosity of the food will be too high, which may affect the texture negatively, thereby making the food unsuitable.

The method for adding the stabilizer for fat-containing liquid foods of the present invention to a corresponding food is not particularly limited, as long as the food ultimately contains the corresponding stabilizer. Known methods can be used. The method for sterilization treatment is not particularly limited by the conditions and apparatuses, sterilizer, etc. Generally used sterilization conditions, such as retort sterilization, UHT sterilization (e.g., indirect sterilization, including plate sterilization and tubular sterilization; and direct sterilization, including steam injection sterilization and steam infusion sterilization), and autoclave sterilization, can be widely used.

The substances (agents, materials, foods, etc.) of the present invention can be produced by conventional methods depending on their composition, form, etc., and in consideration of the description of the present specification.

The methods (stabilization method etc.) of the present invention can be performed in a manner similar to that of conventional methods, depending on the purpose etc., and in consideration of the description of the present specification.

### Examples

The present invention is described in detail below with reference to the Examples, Comparative Examples, etc. However, the present invention is not limited to these Examples.

In the formulas, the unit of values is "part by mass," unless otherwise specified.

The term "part" refers to "part by mass," unless otherwise specified.

The expression "%" refers to "mass%," unless otherwise specified.

In this specification, *1 represents a product of San-Ei Gen F.F.I., Inc.

In this specification, *2 represents a registered trademark of San-Ei Gen F.F.I., Inc.

The evaluation expression "AA" represents "particularly excellent," "A" represents "excellent," "B" represents "good," and "C" represents "defect."

The "blank" in each table represents a blank for the Examples or Comparative Examples in the table (or in a group in the table).

### Test Example 1-1: Sweet Red Bean Soup

Sweet red bean soups were prepared based on the following formula (Table 1-1) and preparation method. Table 1-2 shows the types and amounts of thickeners used.

The viscosity of the obtained sweet red bean soup was measured (measurement conditions: a B-type viscometer, measurement temperature: 20°C, rotation speed: 60 rpm, after 1 minute rotation).

The appearance of the dispersion state (immediately after sterilization and after one-week storage at 60°C) was visually evaluated. Table 1-2 also shows these results.

### - Formula

**Table 1-1**

| | | |
|---|---|---|
| Ingredient 1. | Strained sweet bean jam | 12 parts |
| Ingredient 2. | Sugar | 7 parts |
| Ingredient 3. | Salt | 0.1 parts |
| Ingredient 4. | Sucrose fatty acid ester (Ryoto Sugar Ester P-1670, Mitsubishi-Chemical Foods Corporation) | 0.25 parts |
| Ingredient 5. | Thickener | See Table 1-2 |
| Total with water | | 100 parts |

**Table 1-2**

| Thickener | Fermentation-derived cellulose blend (SAN ARTIST^{*2} PN^{*1}) | Xanthan gum (SAN ACE^{*2*1}) | Microcrystalline cellulose blend (Ceolus SC-900S, Asahi Kasei Corporation) | Welan gum (VIS TOP^{*2}W^{*1}) | Viscosity** (mPa·s) | Appearance (Immediately after sterilization) | Appearance (After storage) |
|---|---|---|---|---|---|---|---|
| Blank | | | | | 28.0 | C | C |
| Comp. Ex. 1-1 | 0.27 | | | | 172.5 | C | C |
| Comp. Ex. 1-2 | 0.41 | | | | 235.0 | B | B |
| Comp. Ex. 1-3 | 0.55 | | | | 307.5 | A | A |
| Comp. Ex. 1-4 | 0.68 | | | | 427.5 | A | A |
| Comp. Ex. 1-5 | | 0.1 | | | 190.3 | C | C |
| Comp. Ex. 1-6 | | 0.3 | | | 825.2 | C | A |
| Comp. Ex. 1-7 | | | 0.5 | | 130.0 | C | B |
| Ex. 1-1 | | | | 0.1 | 170.0 | C | C |
| Ex. 1-2 | | | | 0.15 | 280.0 | A | C |
| Ex. 1-3 | | | | 0.2 | 352.0 | A | A |
| Ex. 1-4 | | | | 0.25 | 392.5 | A | A |

| | | | | | | | |
|---|---|---|---|---|---|---|---|
| ** the viscosity measurement method: the viscosity after 1 minute rotation was measured at a measurement temperature of 20°C and a rotation speed of 60 rpm, using a B-type viscometer. | | | | | | | |

### - Evaluation Criteria for Dispersion

A (Excellent): Dispersed
B (Good): Dispersed, but partly separated
C (Defect): Separated

### - Preparation Method

Step 1) A strained sweet bean jam was dispersed in water, and a sucrose fatty acid ester and a thickener were added thereto, followed by stirring under heating for dissolution at 80°C for 10 minutes.

Step 2) Sugar and salt were added to the dispersion liquid obtained in step 1) above, and the resulting mixture was stirred for dissolution, followed by the addition of water to adjust the total amount.

Step 3) After the temperature was adjusted at 75°C, homogenization (at 10 MPa) was performed.

Step 4) The resulting product was placed into a round media storage bottle, and retort-sterilized at 125°C for 60 minutes.

Additionally, the F values of the sweet red bean soups of blank, Comparative Example 1-4, and Example 1-4 were measured.

The F value is a numerical value representing the sterilization effect achieved in the entire heating process equivalent to the minutes of sterilization at 121°C (250°F). The F value was calculated by measuring, with a thermal sensor equipped with a retort sterilizer, the temperature of the sweet red bean soup while being sterilized. Table 1-3 shows the results.

**Table 1-3**

| Thickener (Amount added) | F value |
|---|---|
| Blank | 84.0 |
| Fermentation-derived cellulose (0.68%) | 63.5 |
| Welan gum (0.25%) | 107.3 |

### -Evaluation Results

The addition of 0.15 parts or more of welan gum enabled the strained sweet bean jam to be dispersed even during sterilization.

The addition of 0.2 parts or 0.25 parts of welan gum enabled the strained sweet bean jam to be dispersed stably. As is clear from these results, the addition of welan gum achieves an excellent dispersion effect with a smaller amount than the fermentation-derived cellulose blend known to have the same effect.

Further, the F value of the sweet red bean soup that contained welan gum was higher than that of the fermentation-derived cellulose blend. The results clarified that shortening the time for sterilization, thereby improving the production efficiency makes the production of sweet red bean soups with less heat damage.

In this formula, the sweet red bean soups that contained welan gum had a slightly sharper aftertaste.

### Test Example 1-2: Non-Oil Dressing

Non-oil dressings were prepared based on the formula in the following Table 1-4 and the preparation method described below. Table 1-5 shows the types and amounts of thickeners used. Table 1-5 also shows the viscosity of the obtained non-oil dressings, as well as the evaluation results of the stability of dispersion of the insoluble solids, including basil, pepper and onion.

**Table 1-4**

| | Formula 1 | Formula 2 | Formula 3 |
|---|---|---|---|
| High-fructose corn syrup | 8.0 parts | 8.0 parts | 8.0 parts |
| Brewed vinegar (acidity: 10%) | 3.0 parts | 3.0 parts | 3.0 parts |
| Apple vinegar (acidity: 5%) | 5.0 parts | 5.0 parts | 5.0 parts |
| Clarified lemon juice | 4.0 parts | 4.0 parts | 4.0 parts |
| Salt | 3.0 parts | 3.0 parts | 3.0 parts |
| Monosodium glutamate | 0.5 parts | 0.5 parts | 0.5 parts |
| Seasoning (SAN-LIKE^{*2} AMINO BASE NAG^{*1}) | 0.5 parts | 0.5 parts | 0.5 parts |
| DL-malic acid | 0.15 parts | 0.15 parts | 0.15 parts |
| Thickener | See Table 1-5 below | | |
| Basil | 0.1 parts | - | - |
| Pepper | - | 0.1 | - |
| Onion | - | - | 3.0 |
| Total with water | 100.0 parts | 100.0 parts | 100.0 parts |

### - Preparation Method

Step 1) Water and high-fructose corn syrup were heated up to 80°C, and a thickener was added thereto, followed by stirring for 10 minutes for dissolution.

Step 2) Each seasoning and fruit juice were added to the solution obtained in step 1) above, followed by stirring under heating for 5 minutes while the temperature was maintained at 80°C. Step 3) After water was added to adjust the total amount, and after the temperature was adjusted at 90°C, the resulting product was hot-packed in a screw-capped bottle that contained the insoluble solids, including basil, pepper and onion.

**Table 1-5**

| NO. | Thickener | Amount (parts) | Viscosity^{**} (mPa•s) | Stability of dispersion of ingredients | | | | | |
|---|---|---|---|---|---|---|---|---|---|
| | | | | After seven-day storage at 37°C | | | After boil sterilization at 85°C for 30 min. | | |
| | | | | Basil | Pepper | Onion | Basil | Pepper | Onion |
| Comp. Ex. 1-5 | Xanthan gum (SAN ACE^{*2*1}) | 0.3 | 211 | Precipitated | Precipitated | Precipitated | Slightly precipitated | Slightly precipitated | Uniformly dispersed |
| Ex. 1-5 | Welan gum (VIS TOP^{*2} W^{*1}) | 0.24 | 215 | Precipitated | Precipitated | Precipitated | Slightly precipitated | Slightly precipitated | Uniformly dispersed |
| Ex. 1-6 | | 0.3 | 311 | Precipitated | Precipitated | Precipitated | Uniformly dispersed | Uniformly dispersed | Uniformly dispersed |

| | | | | | | | | | |
|---|---|---|---|---|---|---|---|---|---|
| ** the viscosity measurement method: the viscosity after 1 minute rotaion was measured at a measurement temperature of 20°C and a rotation speed of 60 rpm, using a B-type viscometer. | | | | | | | | | |

### - Evaluation Results

When viscosity of welan gum was equivalent to that of xanthan gum, similar results were obtained in terms of the texture and the stability of dispersion of the ingredients.

When the amounts of welan gum and xanthan gum were the same, welan gum imparted more excellent dispersion stability.

Further experiments were performed in which the amount of welan gum was increased to compare the results with other additives. Non-oil dressings were prepared in accordance with the formula of Table 1-6 and the preparation method described below. Table 1-7 shows the thickeners used and the amounts thereof, as well as the evaluation results of the state of the obtained non-oil dressings.

**Table 1-6**

| | | |
|---|---|---|
| Ingredient 1 | High-fructose corn syrup | 8.0% |
| Ingredient 2 | Brewed vinegar (acidity: 10.0%) | 3.0% |
| Ingredient 3 | Apple vinegar (acidity: 5.0%) | 5.0% |
| Ingredient 4 | Clear lemon juice | 4.0% |
| Ingredient 5 | Salt | 3.0% |
| Ingredient 6 | L-monosodium glutamate | 0.5% |
| Ingredient 7 | Seasoning (SAN-LIKE^{*2} AMINO BASE NAG^{*1}) | 0.5% |
| Ingredient 8 | DL-malic acid | 0.15% |
| Ingredient 9 | Thickener | See Table 1-7 |
| | With the addition of water | 100% |

As insoluble solids, 0.1% of basil, 0.1% of pepper (powder), and 3% of minced onion (cut into about 3-mm squares) were added to the non-oil dressing. The state in which these insoluble solids were dispersed in the non-oil dressing was visually evaluated.

### - Preparation Method

Step 1) Water and high-fructose corn syrup were heated up to 80°C, and the thickener was added thereto, followed by stirring for 10 minutes for dissolution.

Step 2) Ingredients 2 to 8 of the formula were added to the solution obtained in step 1) above, followed by stirring for another 5 minutes.

Step 3) After water was added to adjust the total amount, the resulting mixture was heated to 90°C and hot-packed in a 100-mL screw-capped bottle that contained the insoluble solids.

The resulting product was placed in a hot-water bath at 85°C, and 30 minutes later, the dispersibility of basil, pepper, and onion was evaluated.

After cooling to 20°C, the viscosity (60 rpm, rotor: No. 2) and the texture were evaluated.

**Table 1-7**

| Thickener | | Comp. Ex. 1-9 | Comp. Ex. 1-10 | Comp. Ex. 1-11 | Comp. Ex. 1-12 | Comp. Ex. 1-13 | Ex. 1-7 | Ex. 1-8 | Ex. 1-9 | Ex. 1-10 | Ex. 1-11 | Ex. 1-12 | Ex. 1-13 | Ex. 1-14 |
|---|---|---|---|---|---|---|---|---|---|---|---|---|---|---|
| Xanthan gum (San Ace^{*2*1}) | | 0.2 | 0.24 | 0.3 | | | | | | | | | | |
| Guar gum (VIS TOP^{*2} D-20^{*1}) | | | | | 0.24 | 0.3 | | | | | | | | |
| Welan gum (VIS TOP^{*2} W^{*1}) | | | | | | | 0.1 | 0.14 | 0.16 | 0.2 | 0.24 | 0.3 | 0.4 | 0.5 |
| State of pepper | Precipitated | +++ | +++ | + | +++ | +++ | +++ | ++ | ++ | + | + | - | - | - |
| State of onion | Precipitated | +++ | ++ | - | +++ | +++ | + | + | - | - | - | - | - | - |

### - Evaluation Criteria

The state of pepper and onion in the non-oil dressing was evaluated based on the following criteria.
Pepper: completely precipitated: +++ < ++ < + < ± < -: uniformly dispersed
Onion: completely precipitated: +++ < ++ < + < ± < -: uniformly dispersed

### Test Example 1-3: Sweet Bean Jelly

Sweet bean jellies were prepared based on the formula in the following Table 1-8, and the preparation method described below. Table 1-9 shows the types and amounts of thickeners used. Table 1-9 also shows the dispersibility and viscosity of the obtained sweet bean jellies.

**Table 1-8**

| | |
|---|---|
| Maltose syrup | 13.6 parts |
| Sugar | 3.28 parts |
| Ina Agar UP-37 (Ina Food Industry Co., Ltd.) | 0.35 parts |
| Thickener | See Table 1-9 |
| Strained sweet bean jam | 23.4 parts |
| with the addition of water | 100.0 parts |

### - Preparation Method

Step 1) While water and maltose syrup were being stirred, a powder mixture of sugar, agar, and a thickener was added, followed by stirring under heating for dissolution at 80°C for 10 minutes.

Step 2) A strained sweet bean jam was added to the solution obtained in step 1), and water was added thereto to adjust the total amount.

Step 3) The preparation product obtained in step 2) was filled into a container.

Step 4) Retort sterilization was performed at 121 °C for 20 minutes.

Step 5) The preparation product in the container after retort sterilization was set to gel by cooling.

**Table 1-9**

| Thickener | | Amount (part) | Dispersibility | Viscosity** (mPa·s) |
|---|---|---|---|---|
| Blank | Comp. Ex. 1-14 | - | | |
| Welan gum (VIS TOP^{*2} W^{*1}) | Ex. 1-15-1 | 0.03 | B | 61.4 |
| | Ex. 1-15-2 | 0.05 | B | 81.2 |
| | Ex. 1-15-3 | 0.1 | A | 160.5 |
| | Ex. 1-15-4 | 0.15 | A | 241.2 |
| | Ex. 1-15-5 | 0.3 | A | 572.0 |
| Fermentation-derived cellulose blend (SAN ARTIST^{*2} PN^{*1}) | Comp. Ex. 1-15-1 | 0.08 | C | 29.6 |
| | Comp. Ex. 1-15-2 | 0.14 | C | 44.6 |
| | Comp. Ex. 1-15-3 | 0.27 | B | 71.8 |
| | Comp. Ex. 1-15-4 | 0.41 | A | 110.3 |
| | Comp. Ex. 1-15-5 | 0.82 | A | 339.4 |
| Xanthan gum (SAN ACE^{*2*1}) | Comp. Ex. 1-16-1 | 0.05 | C | 60.5 |
| | Comp. Ex. 1-16-2 | 0.1 | B | 113.4 |
| | Comp. Ex. 1-16-3 | 0.15 | A | 186.7 |
| | Comp. Ex. 1-16-4 | 0.3 | A | 384.7 |
| Native gellan gum (Kelcogel HM, CP Kelco) | Comp. Ex. 1-17-1 | 0.1 | C | 27.5 |
| | Comp. Ex. 1-17-2 | 0.3 | C | 127.6 |

| | | | | |
|---|---|---|---|---|
| ** the viscosity measurement method: the viscosity after 1 minute rotation was measured at a measurement temperature of 20°C and a rotation speed of 60 rpm, using a B-type viscometer. | | | | |

### - Evaluation Criteria for Dispersibility

A: Dispersed
B: Dispersed, but partly separated.
C: Separated.

### - Evaluation Results

The use of welan gum made it possible to disperse the strained sweet bean jam during the retort sterilization. The effect achieved with the use of welan gum was equal to or even greater than that achieved with the use of xanthan gum or the fermentation-derived cellulose blend, which has been known to show similar functionality. In particular, welan gum achieved the effect with a smaller amount than the fermentation-derived cellulose blend or xanthan gum.

Further, the use of welan gum favorably did not affect the texture.

### Test Example 1-4: Potato Soup Powder

Potato soup powders were prepared in accordance with the formula in the following Table 1-10 and the preparation method described below. Table 1-11 shows the types and amounts of thickeners used. Table 1-11 also shows the viscosity and texture of the obtained potato soup, as well as the dispersion state of the insoluble solids.

**Table 1-10**

| | |
|---|---|
| Dried potato granules | 35.0 parts |
| Powdered oil and fat (N Neo powder P, NOF Corporation) | 5.0 parts |
| Cheese powder (Cheese powder parmesan CR17901, Kerry inc.) | 4.0 parts |
| Sugar | 7.0 parts |
| Salt | 6.0 parts |
| Seasoning (SAN-LIKE^{*2} BACON SEASONING 4105P^{*1}) | 7.5 parts |
| Seasoning (SAN-LIKE^{*2} CHEESE ENHANCER 1111P^{*1}) | 0.5 parts |
| Spice (coarse-ground black pepper) | 0.5 parts |
| Dextrin (SMART TASTE^{*2*1}) | 4.0 parts |
| Modified starch (Microlith FH, Oji Cornstarch Co., Ltd.) | 10.0 parts |
| Flavor (SAN-FIX^{*2} No. 23034^{*1}) | 1.7 parts |
| Dextrin (TK-16, Matsutani Chemical Industry Co., Ltd.) | 8.0 parts |
| Thickener | see Table 1-11 |
| Total with dextrin | 100.0 parts |

### - Preparation Method

Step 1) Powder ingredients other than coarse-ground black pepper and a thickener were mixed.

Step 2) Coarse-ground black pepper and a thickener were added thereto, and the resulting mixture was made up to 100 parts with the dextrin to prepare a soup powder.

Step 3) 18 grams of soup powder was added to water (150 ml) of room temperature with stirring, followed by stirring for 5 minutes for dissolution.

**Table 1-11**

| NO. | Thickener | Amount in soup powder | Amount** (%) | Viscosity*** (mPa•s) | Texture | Dispersion state of insoluble solids (after being left to stand at 37°C for 30 min) |
|---|---|---|---|---|---|---|
| Comp. Ex. 1-18 | λ-carrageenan (CARRAGEENIN CSL-2^{*1}) | 1.05 parts | 0.7 | 196 | Standard, with a slimy texture | Excellent (uniformly dispersed) |
| Ex. 1-16 | Welan gum (VIS TOP^{*2} W^{*1}) | 0.15 parts | 0.1 | 216 | A less-slimy texture than the comparative example | Excellent (uniformly dispersed) |

| | | | | | | |
|---|---|---|---|---|---|---|
| ** the amount added per 150 ml of the resulting soup *** the viscosity measurement method: the viscosity after 1 minute rotation was measured at a measurement temperature of 20°C and a rotation speed of 60 rpm, using a B-type viscometer. | | | | | | |

### - Evaluation Method

The soup prepared at room temperature was left to stand in a incubator at 37°C for 30 minutes, and the precipitation of the insoluble solids was visually observed.

### - Evaluation Results

Compared with the λ-carrageenan-containing soup of the Comparative Example, the welan gum-containing soup achieved a reduction in precipitation of insoluble solids even though welan gum was used in a smaller amount; the welan gum-containing soup had a less-slimy texture.

Further, a test was performed for the potato soup powders using different types of thickeners in different amounts based on the composition in Table 1-12, and the preparation method described below. Tables 1-13 and 1-14 show the types and amounts of thickeners used, as well as the test results.

**Table 1-12**

| | Composition of soup powder | Part |
|---|---|---|
| Ingredient 1 | Dried potato granules | 35 |
| Ingredient 2 | Powdered oil and fat (N Neo powder P, NOF Corporation) | 5 |
| Ingredient 3 | Cheese powder (Cheese powder parmesan CR17901, Kerry inc.) | 4 |
| Ingredient 4 | Sugar | 7 |
| Ingredient 5 | Salt | 6 |
| Ingredient 6 | Seasoning (SAN-LIKE² BACON SEASONING 4105P^{*1}) | 7.5 |
| Ingredient 7 | Seasoning (SAN-LIKE^{*2}, CHEESE ENHANCER 1111P^{*1}) | 0.5 |
| Ingredient 8 | Spice (coarse-ground black pepper) | 0.5 |
| Ingredient 9 | Maltodextrin (SMART TASTE^{*2*1}) | 4 |
| Ingredient 10 | Modified starch (Mirolith FH, Oji Cornstarch Co., Ltd.) | 10 |
| Ingredient 11 | Flavor (SAN-FIX^{*2} No. 29034^{*1}) | 1.7 |
| Ingredient 12 | Dextrin (TK-16, Matsutani Chemical Industry Co., Ltd.) | 8.0 |
| Ingredient 13 | Thickener | See Tables 1-13 and 1-14 |
| | Total | 90 |

### - Preparation Method

Step 1) Ingredients 1 to 7 and 9 to 12 in Table 1-12 were mixed.

Step 2) After ingredients 8 and 13 were added to the mixture of step 1, the resulting mixture was made up to 100 parts with the dextrin(TK-16) to prepare a soup powder.

Step 3) 18 grams of the soup powder obtained in step 3) was added to water of room temperature (150 ml) with stirring, followed by stirring for dissolution for 5 minutes to obtain a potato soup for evaluation.

### - Evaluation Method

The soup prepared at room temperature was left to stand in a incubator at 37°C for 30 minutes, and the precipitation of the insoluble solids was visually observed.

**Table 1-13**

| Thickener | Blank | Comp. Ex. 1-19 | Comp. Ex. 1-20 | Comp. Ex. 1-21 | Ex. 1-17 | Ex. 1-18 | Ex. 1-19 | Ex. 1-20 | Ex. 1-21 | Ex. 1-22 | Ex. 1-23 |
|---|---|---|---|---|---|---|---|---|---|---|---|
| Carrageenan (CARRAGEENIN CSL-2^{*1}) | - | 0.15 parts (0.1%) | 0.3 parts (0.2%) | 0.6 parts (0.4%) | - | - | - | - | - | - | - |
| Welan gum (VIS TOP^{*2} W^{*1}) | - | - | - | - | 0.075 parts (0.05%) | 0.11 parts (0.075%) | 0.14 parts (0.09%) | 0.15 parts (0.1%) | 0.3 parts (0.2%) | 0.6 parts (0.3%) | 0.75 parts (0.5%) |
| Evaluation of Dispersibility | Precipitated | Precipitated | Precipitated | | | | | | | | |
| Viscosity^{**} (mPa·s) | 10 | 12 | 42 | 118 | 92 | 135 | 164 | 215 | 325 | 454 | 532 |

| | | | | | | | | | | | |
|---|---|---|---|---|---|---|---|---|---|---|---|
| ** the viscosity measurement method: the viscosity after 1 minute rotation was measured at a measurement temperature of 20°C and a rotation number of 60 rpm, using a B-type viscometer. | | | | | | | | | | | |

### - Evaluation Results

Precipitation was observed in the systems in which carrageenan was added as a thickener (Comparative Examples 1-19 to 1-21) and the system in which 0.05 mass% of welan gum was added (Example 1-17). However, in the systems in which 0.075 to 0.5 mass% of welan gum was added (Examples 1-18 to 1-23), no precipitation was observed, and the stability of the soup was maintained.

**Table 1-14**

| Thickener | Comp. Ex. 1-22 | Comp. Ex. 1-23 | Comp. Ex. 1-24 | Comp. Ex. 1-25 | Comp. Ex. 1-26 | Comp. Ex. 1-27 | Comp. Ex. 1-28 | Comp. Ex. 1-29 |
|---|---|---|---|---|---|---|---|---|
| Xanthan gum (SAN-ACE^{*2*1}) | 0.15 parts | 0.6 parts | | | | | | |
| | 0.1% | 0.3% | - | - | - | - | - | - |
| Guar gum (VIS TOP^{*2} D-20^{*1}) | | | 0.15 parts | 0.6 parts | | | | |
| | - | - | 0.1% | 0.3% | - | - | - | - |
| Locust bean gum (VIS TOP^{*2} D-30^{*1}) | | | | | 0.15 parts | 0.6 parts | | |
| | - | - | - | - | 0.1% | 0.3% | - | - |
| Gellan gum (Kelcogel LT-100, CP Kelco) | | | | | | | 0.15 parts | 0.6 parts |
| | - | - | - | - | - | - | 0.1% | 0.3% |
| Evaluation of dispersibility | Precipitated | Dispersed | Precipitated | | | | | |
| Viscosity (mPa•s) | 164 | 664 | 98 | 369 | 36 | 40 | 34 | 48 |

| | | | | | | | | |
|---|---|---|---|---|---|---|---|---|
| ** the viscosity measurement method: the viscosity after 1 minute rotation was measured at a measurement temperature of 20°C and a rotation speed of 60 rpm, using a B-type viscometer. | | | | | | | | |

### - Evaluation Results

Except for Comparative Example 1-23, precipitation was observed in the systems shown in Table 1-14 in which xanthan gum, guar gum, locust bean gum, or gellan gum was used as a thickener (Comparative Examples 1-22 to 1-29). In Comparative Example 1-23, although precipitation does not occur, the viscosity greatly increased to such a degree that it had an adverse effect on the texture.

The above test results reveal that the use of welan gum achieved stable dispersion of potato soup powder, which could not be achieved with the use of other thickeners.

### Test Example 1-5: Consommé Soup

Consommé soups were prepared based on the formula in the following Table 1-15, and the preparation method described below. Table 1-16 shows the types and amounts of thickeners used. Table 1-16 also shows the evaluation of the dispersion state of the ingredients after the obtained consomme soup was left to stand at 60°C for 15 minutes.

**Table 1-15**

| | | % |
|---|---|---|
| Ingredient 1 | Salt | 0.4 |
| Ingredient 2 | Sugar | 0.3 |
| Ingredient 3 | Seasoning (SAN-LIKE^{*2} BEEF DX-1^{*1}) | 1.0 |
| Ingredient 4 | Seasoning (SAN-LIKE^{*2} CONSOMME 0316P^{*1}) | 0.5 |
| Ingredient 5 | Seasoning (SAN-LIKE^{*2} SAUTEED ONION 9Y55E^{*1}) | 0.1 |
| Ingredient 6 | Spice (PEPPER SP-61524^{*1}) | 0.04 |
| Ingredient 7 | Thickener | see Table 1-16 |
| Ingredient 8 | Carrot | 1.0 |
| Ingredient 9 | Onion | 1.5 |
| | Total with water | 100 |

### - Preparation Method

Step 1) Ingredient 7 was added to water, and the resulting mixture was heated to 80°C.

Step 2) Ingredients 1 to 5, 8, and 9 of the formula in Table 1-15 were added, followed by stirring for 10 minutes with a propeller.

Step 3) After ingredient 6 in Table 1-15 was added, the total amount was adjusted with the addition of water, and the resulting mixture was placed into a 200-ml glass container.

Step 4) After placing into the container, retort sterilization was performed (121°C for 30 minutes).

**Table 1-16**

| Test group | Thickener and its amount (%) thereof | | Dispersion state of insoluble solids (after being left for 15 min at 60°C) |
|---|---|---|---|
| Comp. Ex. 1-30 | Xanthan gum (SAN ACE^{*2*1}) | 0.2 | Precipitated |
| Comp. Ex. 1-31 | | 0.24 | Precipitated |
| Comp. Ex. 1-32 | | 0.3 | Precipitated |
| Comp. Ex. 1-33 | Welan gum (VIS TOP^{*2} W^{*1}) | 0.1 | Precipitated |
| Ex. 1-24 | | 0.16 | Uniformly dispersed |
| Ex. 1-25 | | 0.2 | Uniformly dispersed |
| Ex. 1-26 | | 0.24 | Uniformly dispersed |
| Ex. 1-27 | | 0.3 | Uniformly dispersed |
| Ex. 1-28 | | 0.4 | Uniformly dispersed |

### - Evaluation Results

Precipitation was observed in the consomme soups obtained by adding xanthan gum. However, when welan gum was added in the same amounts as xanthan gum, a dispersion-stabilizing effect was achieved. When the amount of welan gum was 0.1%, however, a sufficient effect was not achieved, resulting in precipitation.

### Test Example 1-6: Cocoa Beverage

Cocoa beverages were prepared based on the following formula and preparation method described below.

### - Formula

| | (Mass%) |
|---|---|
| 20% skimmed milk powder-containing aqueous solution | 3.2 |
| 20% whole milk powder-containing aqueous solution | 1 |
| Coconut oil | 0.4 |
| Corn syrup | 5 |
| Cocoa | 1 |
| Salt | 0.1 |
| Microcrystalline cellulose blend (Ceolus SC-900) | 0.2 |
| Welan gum (VIS TOP^{*2} W^{*1}) | See Table 1-17 |
| Sweetener (Acesulfame K) | 0.01 |
| Total with water | 100.0 |

### - Preparation Method

Step 1) Water was filled into a container that contains corn syrup, to which microcrystalline cellulose preparation and acesulfame K were added, followed by stirring with heating for dissolution at 80°C for 10 minutes.

Step 2) A 20% skimmed milk powder-containing aqueous solution, a 20% whole milk powder-containing aqueous solution, cocoa, salt, and coconut oil were added to the product obtained in step 1) above, and water was added to adjust the total amount. Step 3) After the temperature was adjusted at 70°C, homogenization was performed with a homogenizer (first step: 10 MPa, and second step: 5 MPa).

Step 4) After sterilization was performed at 130°C for 2 seconds with a UHT plate sterilizer, the resulting product was aseptically filled into a PET container.

### - Evaluation Results

The cocoa beverage filled into the PET container was stored at 5°C for 2 weeks, and the appearance, taste, and texture after the storage were evaluated. Table 1-17 shows the results.

**Table 1-17**

| | Welan gum amount (mass%) | Appearance | Presence of precipitation | Taste and texture |
|---|---|---|---|---|
| Comp. Ex. 1-34 | 0 | Separated into two layers at about 40 mm from the top of the container (height: 100 mm) (the upper layer had high transparency) | + | Slightly gritty, with insufficient *umami* and long lingering aftertaste |
| Ex. 1-29 | 0.05 | No layer separation | - to ± | No grittiness, with sufficient *umami* and sharp aftertaste |
| Ex. 1-30 | 0.08 | No layer separation | - to ± | No grittiness, with sufficient *umami* and sharp aftertaste |
| Ex. 1-31 | 0.1 | No layer separation | - to ± | No grittiness, with sufficient *umami* and sharp aftertaste |

### - Evaluation Criteria for the presence or absence of precipitation

Excellent: - (no precipitation), ± (substantially no precipitation), + (slight precipitation), ++ (a small degree of precipitation), +++ (a large degree of precipitation): defect

The above results reveal that the use of welan gum in combination with the microcrystalline cellulose blend achieves an effect of stabilizing the cocoa beverage. The results also reveal that effects such as a reduction in grittiness, an improvement in *umami,* and an improvement in a sharp aftertaste could also be obtained.

### Test Example 1-7: Ginger-Flavored Sauce

As a control, a ginger-flavored sauce that contained 3.0 mass% of modified starch was prepared in accordance with a known method.

A ginger-flavored sauce of Example 1-7 was prepared as in the control, except that the amount of the modified starch used in the sauce of the control was reduced to 1.5 mass% while 0.2 mass% of welan gum (VIS TOP^{*2} W^{*1}) was added, so as to obtain the same viscosity.

The following table shows the formulas.

**Table 1-18**

| | | Control (kg) | Ex. 1-32 (kg) |
|---|---|---|---|
| Ingredient 1 | Dark soy sauce | 23.0 | 23.0 |
| Ingredient 2 | High-fructose corn syrup | 20.0 | 20.0 |
| Ingredient 3 | Ginger paste | 8.0 | 8.0 |
| Ingredient 4 | Brewed vinegar (acidity: 10%) | 3.0 | 3.0 |
| Ingredient 5 | *Miso* | 3.0 | 3.0 |
| Ingredient 6 | Sugar | 2.5 | 2.5 |
| Ingredient 7 | Pure mirin | 3.0 | 3.0 |
| Ingredient 8 | Roasted sesame seeds (white) | 0.6 | 0.6 |
| Ingredient 9 | Pureed garlic | 0.5 | 0.5 |
| Ingredient 10 | SAN-LIKE AMINO BASE NAG^{*1} | 0.5 | 0.5 |
| Ingredient 11 | SAN-LIKE YEAST 0409P^{*1} | 0.5 | 0.5 |
| Ingredient 12 | GINGEER SP-75799^{*1} | 0.15 | 0.15 |
| Ingredient 13 | Paprika base 70R^{*1} | 0.2 | 0.2 |
| Ingredient 14 | L-ascorbic acid (crystal) Crystalline^{*1} | 0.3 | 0.3 |
| Ingredient 15 | Modified starch | 3.0 | 1.5 |
| Ingredient 16 | VIS TOP^{*2} W^{*1} | - | 0.25 |
| Ingredient 17 | ART FRESH No. 101^{*1} | 0.5 | 0.5 |
| | Total | 100.0 | 100.0 |

The viscosity after 1 minute rotation was measured at 6 rpm at 20°C using a B-type rotational viscometer. As a result, the viscosity of the control was 11100 mPa•s, while the viscosity of Example 1-32 was 10700 mPa•s; i.e., these viscosities were almost the same.

The results of the sensory evaluation of these sauces reveal that the sauce of the control had a strong pasty texture, while the sauce of Example 1-32 had enhanced ginger flavor but did not have a pasty texture.

Further, these sauces were mixed with pork loin in accordance with a known method to cook stir-fried pork with ginger. The results reveal that the sauce of Example 1-32 was well mixed with the meat, and the ginger flavor was enhanced while oil-floating after cooking was reduced, compared with the case in which the sauce of the control was used.

Furthermore, when the cooked stir-fried pork with ginger was refrigerated for 24 hours, the stir-fried pork with ginger cooked using the sauce of the control showed a great degree of oil-floating and noticeable fat precipitation, while the stir-fried pork with ginger cooked using the sauce of Example 1-32 showed almost no oil-floating, and no fat precipitation.

This confirms that the use of the sauce of Example 1-32 enables oils and fats to be highly dispersed, and the dispersion to be sufficiently maintained.

### Test Example 2-1: Cream Croquette

A cream croquette was prepared based on the formula of Table 2-1. Table 2-2 shows the types and amounts of thickeners used. In Comparative Examples 2-1 and 2-2, methylcellulose was used, which is generally used for the purpose of preventing deep-fried food from bursting open.

**Table 2-1**

| | |
|---|---|
| Wheat flour | 6.0 |
| Skimmed milk powder | 5.4 |
| Salad oil | 3.0 |
| Margarine | 2.0 |
| Protein powder blend (Mixing foamer SC, Chiba Flour Milling Co., Ltd.) | 1.5 |
| Salt | 0.5 |
| Seasoning (SAN-LIKE^{*2} TASTE BASE^{*2} A^{*1}) | 0.3 |
| Seasoning (SAN-LIKE^{*2} CHICKEN CONSOMME^{*1}) | 0.3 |
| White pepper powder | 0.1 |
| Cow milk | 30.0 |
| Thickener | See Table 2-2 |
| Total with water | 100.0% |

### - Preparation Method

Step 1) A thickener was added to water, and the mixture was stirred under heating for dissolution at 80°C for 10 minutes, followed by cooling.

Step 2) The remaining ingredients were added thereto, and the mixture was stirred under heating at 85°C for 10 minutes, followed by the addition of water to compensate lost water. Step 3) The preparation product obtained in step 2) was filled into a mold, divided into pieces (20 g/piece), and solidified by cooling down to 4°C.

Step 4) The solidified material filling obtained in step 3) was covered with a coating (battering), and quickly frozen at -40°C overnight.

Step 5) The resulting product in a freezing state was deep-fried in oil at 180°C for 4 minutes and 30 seconds.

**Table 2-2**

| | Thickener | Amount | Presence of burst | State of ingredients |
|---|---|---|---|---|
| Blank | - | - | Burst occurred, and the cream leaked out | - |
| Comp. Ex. 2-1 | Methylcellulose (Metolose MCE-4000, Shin-Etsu Chemical Co., Ltd.) | 0.5% | Burst occurred, and the cream slightly leaked out | - |
| Comp. Ex. 2-2 | | 0.75% | No burst | The filings were formed into a gel after deep-frying in oil. Further, the perceived meltability in the mouth was unsatisfactory with no creamy texture. |
| Ex. 2-1 | Welan gum (VIS TOP^{*2} W^{*1}) | 0.5% | No burst | The fillings after deep-frying in oil had slight shape retention, but were not formed into a gel. The perceived meltability in the mouth was excellent with a creamy texture. |

### - Evaluation Results

The cream croquette that contained welan gum showed the same results as that of the croquette that contained known methylcellulose; i.e., both of them did not burst open (did not burst). However, welan gum prevented the croquette from bursting open (rupturing) during deep-frying in oil with a smaller amount thereof than methylcellulose. As for the texture, the cream croquette that contained welan gum had a more excellent perceived meltability in the mouth, compared with the cream croquette that contained methylcellulose.

These results indicate that welan gum can produce more excellent cream croquettes, compared with methylcellulose.

### Test Example 2-2: Cream Croquette

Ten cream croquettes were prepared for each formula as in Test Example 2-1, except that the formula shown in Table 2-3 was used, and the burst rate during deep-frying in oil was analyzed. Table 2-4 shows the burst rate and sensory evaluation results (the texture of cream croquette).

As is clear from these results, this test also confirmed that the use of welan gum in the filling of cream croquettes achieves a burst-prevention effect during deep-frying in oil, and a good perceived meltability in the mouth in terms of the resulting cream croquettes.

**Table 2-3**

| Ingredient | Amount (%) |
|---|---|
| Roasted flour BF-B | 9.0 |
| Skimmed milk powder | 5.4 |
| Salad oil | 3.0 |
| Margarine | 2.0 |
| Mixing foamer SC | 1.5 |
| Salt | 0.5 |
| Seasoning (SAN-LIKE^{*2} TASTE BASE^{*2} A^{*1}) | 0.3 |
| Seasoning (SAN-LIKE^{*2} CHIKEN CONSOMME^{*1}) | 0.3 |
| White pepper powder | 0.1 |
| Cow milk | 30.0 |
| Thickener | See Table 2-4 |
| Total with water | 100.0(%) |

**Table 2-4**

| | Thickener | Amount | Burst rate | Texture of cream croquette |
|---|---|---|---|---|
| Blank | - | - | 100% | - |
| Comp. Ex. 2-3 | Methylcellulose (Metolose MCE-4000, Shin-Etsu Chemical Co., Ltd.) | 0.2% | 40% | Standard |
| Comp. Ex. 2-4 | Methylcellulose (Metolose MCE-4000, Shin-Etsu Chemical Co., Ltd.) | 0.4% | 0% | A heavier texture than Comp. Ex. 2-3 (standard), and an unpleasant perceived meltability in the mouth |
| Ex. 2-2 | Welan gum (VIS TOP^{*2} W^{*1}) | 0.1% | 30% | A better perceived meltability in the mouth than Comp. Ex. 2-3 (standard) |
| Ex. 2-3 | Welan gum (VIS TOP^{*2} W^{*1}) | 0.2% | 0% | A better perceived meltability in the mouth than Comp. Ex. 2-3 (standard) |

Burst rate: The burst rate was obtained when 10 cream croquettes were fried in oil at 180°C for 4 minutes and 30 seconds.

### Test Example 2-3: Cream Croquette

Ten cream croquettes were prepared for each formula as in Test Example 2-1, except that the formula shown in Table 2-5 was used, and the burst rate during deep-frying in oil was analyzed. Table 2-6 shows the burst rate and sensory evaluation results (the texture of cream croquette).

As is clear from these results, this test also confirmed that the use of welan gum in the filling of cream croquettes achieves a burst-prevention effect during deep-frying in oil, and a good perceived meltability in the mouth in terms of the resulting cream croquettes.

**Table 2-5**

| Ingredient | Amount (%) |
|---|---|
| Roasted flour BF-B | 8.0 |
| Skimmed milk powder | 5.4 |
| Salad oil | 3.0 |
| Margarine | 2.0 |
| Mixing foamer SC | 1.5 |
| Salt | 0.5 |
| Seasoning (SAN-LIKE^{*2} TASTE BASE^{*2} A^{*1}) | 0.3 |
| Seasoning (SAN-LIKE^{*2} CHIKEN CONSOMME^{*1}) | 0.3 |
| White pepper powder | 0.1 |
| Cow milk | 30.0 |
| Modified starch | 2.0 |
| Thickener | See Table 2-6 |
| Total with water | 100.0 (%) |

**Table 2-6**

| | Thickener | Amount | Burst rate | Texture of cream croquette |
|---|---|---|---|---|
| Blank | | - | 100% | - |
| Comp. Ex. 2-5 | Methylcellulose (Metolose MCE-4000, Shin-Etsu Chemical Co., Ltd.) | 0.1% | 30% | Standard |
| Comp. Ex. 2-6 | Methylcellulose (Metolose MCE-4000, Shin-Etsu Chemical Co., Ltd.) | 0.3% | 0% | A heavier texture than Comp. Ex. 2-5 (standard), and an unpleasant perceived meltability in the mouth. |
| Ex. 2-4 | Welan gum (VIS TOP^{*2} W^{*1}) | 0.05% | 20% | A better perceived meltability in the mouth than Comp. Ex. 2-5 (standard). |
| Ex. 2-5 | Welan gum (VIS TOP^{*2} W^{*1}) | 0.1% | 0% | A better perceived meltability in the mouth than Comp. Ex. 2-5 (standard). |

Burst rate: The burst rate was obtained when 10 cream croquettes were deep-fried in oil at 180°C for 4 minutes and 30 seconds.

### Test Example 3: Fruit Preparation

A fruit preparation was prepared in accordance with the following formula and preparation method.

**Formula**

| | |
|---|---|
| Apple preserve | 20.0 |
| Sugar | 30.0 |
| Stabilizer | See Table 3 |
| Trisodium citrate dihydrate | 0.05 |
| 50% Citric acid solution | Adjusted to pH 3.8 |
| Total with water | 100.0% |

### - Preparation Method

Step 1) Deionized water was mixed with sugar and a stabilizer, followed by stirring at 80°C for 10 minutes.

Step 2) The remaining ingredients were added.

Step 3) After the total amount was adjusted, the resulting product was filled into a heat-resistant bag.

Step 4) After sterilization at 85°C for 30 minutes, cooling down to 10°C was performed.

Fruit preparation-containing stirred yogurt was prepared according to the following method.

### - Method for Mixing with Yogurt

A stirred yogurt base and the fruit preparation were mixed at a ratio of 8:2.

**Table 3**

| | Thickener | Amount | Fruit preparation | | | After mixed with yogurt | |
|---|---|---|---|---|---|---|---|
| | | | Stability of dispersion of pulp (Immediately after sterilization) | Viscosity | Texture | Viscosity | Roughness (Aggregation) |
| Comp. Ex. 3-1 | Xanthan gum (SAN ACE^{*2*1}) | 0.4% | Floated | 1,233 | Light with a slightly slimy texture | 1,135 | Aggregation was observed |
| Comp. Ex. 3-2 | Xanthan gum (SAN ACE^{*2*1}) | 0.5% | Excellent (uniformly dispersed) | 1,494 | A very strong slimy texture | 1,235 | Noticeable aggregation was observed |
| Comp. Ex. 3-3 | Guar gum (VIS TOP^{*2} D-20^{*1}) | 0.6% | Floated | 5,530 | More slimy than Comp. Ex. 3-1 | 1,194 | No noticeable aggregation |
| Comp. Ex. 3-4 | Guar gum (VIS TOP^{*2} D-20^{*1}) | 0.7% | Excellent (uniformly dispersed) | 6,380 | Equivalent to Comp. Ex. 3-2, and an overly slimy texture | 1,319 | No noticeable aggregation |
| Comp. Ex. 3-5 | Xanthan gum (SAN ACE^{*2*1}) and Guar gum (VIS TOP^{*2} D-20^{*1}) used in combination | 0.05% | Floated | 2,193 | Equivalent to Comp. Ex. 3-1 | 1,358 | Noticeable aggregation was observed |
| | | 0.2% | | | | | |
| Comp. Ex. 3-6 | Xanthan gum (SAN ACE^{*2*1}) and Guar gum (VIS TOP^{*2} D-20^{*1}) used in combination | 0.1% | Excellent (uniformly dispersed) | 3,300 | Equivalent to Comp. Ex. 3-1 | 1,660 | Noticeable aggregation was observed |
| | | 0.2% | | | | | |
| Comp. Ex. 3-7 | Hydroxypropyl distarch phosphate, National Frigex | 3.5% | Floated | 8,420 | No slimy texture, but a strong pasty texture specific to starch | 1,498 | No noticeable aggregation |
| Comp. Ex. 3-8 | Hydroxypropyl distarch phosphate, National Frigex | 4.0% | Excellent (uniformly dispersed) | 17,830 | A stronger pasty texture specific to starch than Comp. Ex. 3-7 | 1,778 | No noticeable aggregation |
| Ex. 3-1 | Welan gum (VIS TOP^{*2} W^{*1}) | 0.2% | Excellent (uniformly dispersed) | 1,029 | A less-slimy texture than Comp. Ex. 3-1 | 2,069 | No noticeable aggregation |

### - Evaluation Method

- Stability of dispersion of pulp: the dispersion state of pulp immediately after sterilization was visually observed.
- Viscosity: the viscosity after 1 minute rotation was measured using a B-type viscometer (measurement temperature: 10°C, rotor Nos. 3 and 4, rotation speed: 30 rpm).
- Texture: sensory evaluated.
- Roughness of the yogurt after mixing: the presence or absence of aggregation and the state thereof was visually observed.

### - Evaluation Results

The results revealed that the use of welan gum made it possible to stabilize the dispersion of pulp during sterilization, with a smaller amount thereof and at a lower viscosity than xanthan gum, guar gum, a combination of xanthan gum and guar gum, or hydroxypropyl distarch phosphate. The use of welan gum provided a less polysaccharide-specific slimy texture, and a pleasantly sharp texture.

The results also revealed that although the fruit preparation containing welan gum had a low viscosity on its own, the viscosity increased when the fruit preparation was mixed with a stirred yogurt base, which made it possible to thicken yogurt, contributing to an improvement in shape retention. Even when mixed with yogurt, roughness (aggregation) was not observed.

### Test Example 4-1: Semi-Solid Dressing

Mayonnaise-like acidic oil-in-water emulsified condiments, which are semi-solid dressings, were prepared based on the following formula (Table 4-1). Table 4-2 shows the types and amounts of thickeners used.

**Table 4-1**

| | |
|---|---|
| Salad oil | 45.0 |
| Sugared egg yolk (sugar: 20%) | 11.25 |
| L-monosdium glutamate | 0.3 |
| Granulated sugar | 0.25 |
| Brewed vinegar | 4.3 |
| Salt | 1.7 |
| Thickener | See Table 4-2 below |
| Total with water | 100.0% |

**Table 4-2**

| | Thickener | Amount |
|---|---|---|
| Comp. Ex. 4-1 | Xanthan gum (SAN ACE^{*2*1}) | 0.5% |
| Ex. 4-1 | Welan gum (VIS TOP^{*2} W^{*1}) | 0.4% |
| Ex. 4-2 | Welan gum (VIS TOP^{*2} W^{*1}) | 0.5% |

### - Preparation Method

Step 1) Deionized water was mixed with salt and brewed vinegar, followed by stirring.

Step 2) The thickener shown in Table 4-2 was added, followed by stirring for 30 minutes.

Step 3) L-monosodium glutamate and granulated sugar were added, followed by stirring for 3 minutes.

Step 4) After sugared egg yolk was added, salad oil was slowly added.

Step 5) After salad oil was added, the mixture was stirred for 5 minutes.

Step 6) Treatment with a colloid mill was performed (slit width: 200 µm, rotation speed: 7,000 rpm).

### - Evaluation Results

Table 4-3 shows the evaluation results.

**Table 4-3**

| NO. | Thickener | Amount | Viscosity^{**} (mPa•s) | Shape retention^{***} | Texture |
|---|---|---|---|---|---|
| Comp. Ex. 4-1 | Xanthan gum (SAN ACE^{*2*1}) | 0.5% | 52431 | Standard | Standard |
| Ex. 4-1 | Welan gum (VIS TOP^{*2} W^{*1}) | 0.4% | 53591 | Higher than Comp. Ex. 4-1 | Fatty sensation equivalent to Comp. Ex. 4-1, and no slimy or sticky texture; the most excellent perceived meltability in the mouth |
| Ex. 4-2 | Welan gum (VIS TOP^{*2} W^{*1}) | 0.5% | 60120 | Higher than Comp. Ex. 4-1 or Ex. 4-1 | No slimy or sticky texture, although more fatty sensation than Comp. Ex. 4-1 or Ex. 4-1; and an excellent perceived meltability in the mouth |

| | | | | | |
|---|---|---|---|---|---|
| ** Viscosity measurement method: the viscosity was measured after 1 minute rotation at 20°C at 6 rpm with a rotor 95S using a Brookfield LVDV-II rotational viscometer. *** Evaluation for shape retention: the semi-solid dressing was filled into a mayonnaise bottle having a star-shaped opening, and the bottle was squeezed to extrude 10 g of the dressing from the opening, and the peaks after 5 minutes were visually observed. | | | | | |

To compare the difference between welan gum and xanthan gum, semi-solid dressings having the equivalent viscosity were prepared: the semi-solid dressing obtained using welan gum (Example 4-1) achieved excellent shape retention and fatty sensation while sliminess or stickiness was reduced, and achieved an excellent perceived meltability in the mouth. Further, when welan gum and xanthan gum were used in the same amount (Example 4-2), the semi-solid dressing that contained welan gum had a more excellent melting texture in the mouth although the viscosity was higher.

### Test Example 4-2: Emulsified Dressing

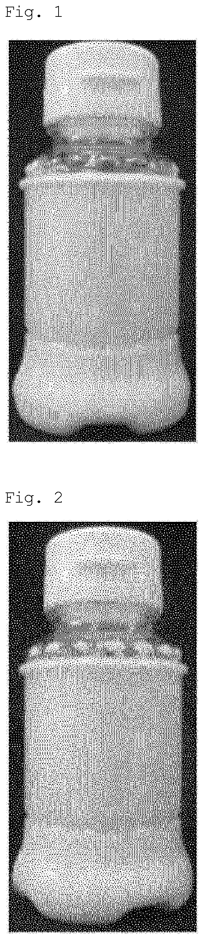

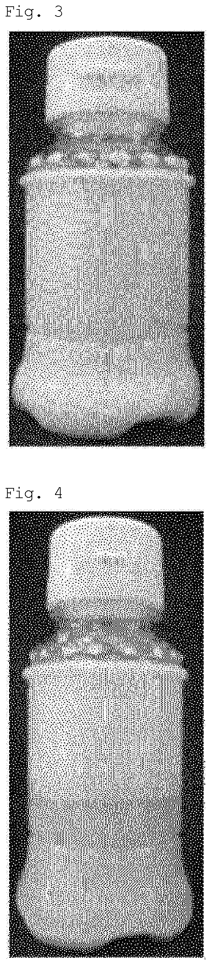

Emulsified dressings were prepared based on the formula shown in Table 4-4. The formula shows ingredients 12 to 16 as thickeners, and their amounts. For the prepared emulsified dressings, the viscosity (20°C, 60 rpm), the appearance after 1-week storage at 20°C, the dispersion state of oil, the texture, and the flavor release were evaluated. Table 4-5 shows the evaluation results. Figs. 1 to 5 show photographs showing the state of each Example after 1-week storage at 20°C.

**Table 4-4**

| Ingredient | | Comp. Ex. 4-2 (%) | Ex. 4-3 (%) | Ex. 4-4 (%) | Comp. Ex. 4-3 (%) | Comp. Ex. 4-4 (%) |
|---|---|---|---|---|---|---|
| Ingredient 1 | Salad oil | 30 | 30 | 30 | 30 | 30 |
| Ingredient 2 | Sugar | 7 | 7 | 7 | 7 | 7 |
| Ingredient 3 | Salt | 3.5 | 3.5 | 3.5 | 3.5 | 3.5 |
| Ingredient 4 | Brewed vinegar (acidity: 10%) | 10 | 10 | 10 | 10 | 10 |
| Ingredient 5 | Cheese powder (Cheese powder parmesan CR17901, Kerry imc.) | 2 | 2 | 2 | 2 | 2 |
| Ingredient 6 | Egg yolk | 2 | 2 | 2 | 2 | 2 |
| Ingredient 7 | Sweetener (sucralose) (SAN SWEET^{*2} SU-100^{*1}) | 0.03 | 0.03 | 0.03 | 0.03 | 0.03 |
| Ingredient 8 | Seasoning (SAN-LIKE^{*2} PORK RX-22^{*1}) | 0.5 | 0.5 | 0.5 | 0.5 | 0.5 |
| Ingredient 9 | Seasoning (SAN-LIKE^{*2} AMINO BASE UR (N)^{*1}) | 0.3 | 0.3 | 0.3 | 0.3 | 0.3 |
| Ingredient 10 | Garlic powder | 0.03 | 0.03 | 0.03 | 0.03 | 0.03 |
| Ingredient 11 | Black pepper | 0.1 | 0.1 | 0.1 | 0.1 | 0.1 |
| Ingredient 12 | Xanthan gum (SAN ACE^{*2*1}) | 0.2 | | | | 0.1 |
| Ingredient 13 | Welan gum (VIS TOP^{*2} W^{*1}) | | 0.1 | 0.5 | | |
| Ingredient 14 | LM pectin (DE = 30) (VIS TOP^{*2} D-402^{*1}) | | | | 0.9 | |
| Ingredient 15 | Calcium lactate | | | | 0.1 | |
| Ingredient 16 | Low-viscosity methylcellulose (Shin-Etsu Chemical Co., Ltd.) | | | | | 0.2 |
| Ingredient 17 | Flavor (DELICIOUS DAIRY^{*2} SV-4631^{*1}) | 0.05 | 0.05 | 0.05 | 0.05 | 0.05 |
| Ingredient 18 | Water | 44.3 | 44.4 | 44.0 | 45.5 | 46.4 |
| | Total | 100 | 100 | 100 | 101 | 102 |

### - Preparation Method

Step 1) Ingredient 18 of the formula was mixed with ingredients 2, 12 to 14, and 16, and the mixture was dissolved by heating at 80°C for 10 minutes.

Step 2) Ingredients 3 to 5, 7 to 11, and 15 were added to the solution obtained in step 1) above.

Step 3) After the preparation product obtained in step 2) above was cooled down to 60°C or lower, ingredient 6 was added thereto, followed by stirring.

Step 4) While the preparation product obtained in step 3) above was stirred with a homomixer, ingredients 1 and 17 were gradually added, followed by stirring at 9000 rpm for 5 minutes.

Step 5) After degassing, the resulting product was filled into a 200-ml glass bottle.

**Table 4-5**

| | Viscosity** | Dispersion state of oil | Texture | Flavor release |
|---|---|---|---|---|
| Comp. Ex. 4-2 | 628 | A | Rich but slimy, and an insufficient perceived meltability in the mouth | Poor |
| Ex. 4-3 | 313 | A | Rich, and pleasantly sharp | Excellent |
| Ex. 4-4 | 1502 | A | Noticeably rich, and pleasantly sharp | Excellent |
| Comp. Ex. 4-3 | 98 | C | Pleasantly sharp, but not rich | Excellent |
| Comp. Ex. 4-4 | 230 | C | Slightly rich, and pleasantly sharp | Slightly poor |

| | | | | |
|---|---|---|---|---|
| ** the viscosity measurement method: the viscosity after 1 minute rotation was measured at a measurement temperature of 20°C and a rotation speed of 60 rpm, using a B-type viscosimeter. | | | | |

### - Results

The emulsified dressing of Comparative Example 4-2, which contained xanthan gum as a thickener, achieved an excellent dispersion state of oil and excellent appearance after storage. When eaten, however, the texture was unsatisfactory since it was rich but slimy, and had a poor perceived meltability in the mouth. The flavor release was also poor, and dressing flavor was hardly perceived.

Comparative Examples 4-3 and 4-4 were respectively prepared in comparison with Patent Literature 13 and Patent Literature 18, which are disclosed as prior art. The emulsified dressing of Comparative Example 4-3 had a low viscosity, and separation occurred after storage. Moreover, the dispersion state was poor. When eaten, these dressings had sharpness but no richness, giving an impression of a plain taste. The dispersion state of the dressing of Comparative Example 4-4 was also poor. This dressing was slightly rich and had sharpness in texture, but the flavor release was poor.

In contrast, the dressings of Examples 4-3 and 4-4, which contained welan gum, were in a good state after storage, maintaining the oil dispersion. When eaten, these dressings had richness and pleasant sharpness, and the flavor release was also excellent.

These results reveal that the use of welan gum so as to stabilize emulsified dressings makes it possible to obtain emulsified dressings with excellent stability, an excellent texture, and good flavor release, over the conventional technique.

### Test Example 4-3: Semi-Solid Dressing

Semi-solid dressings were prepared based on the following formula (Table 4-6).

**Table 4-6**

| Ingredient | | Comp. Ex. 4-5 (%) | Ex. 4-5 (%) |
|---|---|---|---|
| Ingredient 1 | Salad oil | 22 | 22 |
| Ingredient 2 | Egg yolk | 8 | 8 |
| Ingredient 3 | Brewed vinegar (acidity: 10%) | 4.2 | 4.2 |
| Ingredient 4 | Granulated sugar | 4 | 4 |
| Ingredient 5 | Salt | 1.5 | 1.5 |
| Ingredient 6 | SAN-LIKE^{*2} AMINO BASE NAG^{*1} | 0.3 | 0.3 |
| Ingredient 7 | SAN ACE^{*2*1} (Xanthan gum) | 0.6 | 0.4 |
| Ingredient 8 | VIS TOP^{*2} D-20^{*1} (Guar gum) | 0.15 | 0.1 |
| Ingredient 9 | VIS TOP^{*2} W^{*1} (Welan gum) | | 0.05 |
| Ingredient 10 | Water | 59.3 | 59.5 |
| | Total | 100 | 100 |

### - Preparation Method

Step 1) Salt and brewed vinegar were added to water, followed by stirring.

Step 2) SAN ACE^{*2*1}, VIS TOP^{*2} D-20^{*1}, VIS TOP^{*2} W^{*1} were added to the resulting mixture, followed by stirring for 30 minutes.

Step 3) SAN-LIKE^{*2} Amino base NAG^{*1} and granulated sugar were added, followed by stirring for 3 minutes.

Step 4) After egg yolk was added thereto, salad oil was slowly added to the mixture, followed by stirring for 5 minutes.

Step 5) Treatment with a colloid mill was performed (slit width:
200 µm, rotation speed: 7000 rpm).

### - Evaluation Results

The following table (Table 4-7) shows the evaluation results.

**Table 4-7**

| | Viscosity^{**a1} (mPa•s) | Shape retention^{**a2} | Texture |
|---|---|---|---|
| Comp. Ex. 4-5 | 48269 | Standard | Standard |
| Ex. 4-5 | 49968 | Remarkably higher than the standard | Has body feeling and fatty sensation, no slimy or sticky texture, and has an excellent perceived meltability in the mouth, compared with the standard |

| | | | |
|---|---|---|---|
| **a1: The viscosity was measured after 1 minute rotation at 6 rpm at 20°C with a rotor 95S using LVDV-II rotational viscometer. **a2: 10 grams of semi-solid dressing was extruded from a star-shaped cap for mayonnaise, and the peak after 5 minutes was evaluated. | | | |

### - A. Preparation Examples of dairy-free soft drinks

### Test Example 5-1: Fruit-Juice Beverage

Various orange juice beverages were prepared using a thickener, based on the following formula (Table 5-1) and the preparation method described below. Welan gum or xanthan gum was used as a thickener. Table 5-1 shows the types and amounts of thickeners used. Each obtained orange juice beverage was subjected to an accelerated storage stability test (based on visual evaluation of the dispersibility of fruit juice), a viscosity measurement (measurement conditions: a B-type rotational viscometer, 5°C, 60 rpm, rotor No. 1 or No. 2), and a sensory evaluation of the quality of taste (in particular richness). Table 5-1 shows the results.

### Formula

| | |
|---|---|
| Concentrated citrus-fruit mixed fruit juice 53R (Ehime Beverage Inc.) | 4.4% |
| High-fructose corn syrup | 5.5% |
| Sugar | 3.0% |
| Thickener | See Table 5-1 |
| L-ascorbic acid (crystal)^{*1} | 0.03% |
| Citric acid (anhydrous) | 0.06% |
| Flavor (ORANGE MODIFIER No. 1^{*1}) | 0.1% |
| Total with water | 100.0% |

### - Preparation Method

Step 1) Water and a powder mixture of sugar and a thickener were put into a container that contained high-fructose corn syrup, and the resulting mixture was stirred under heating at 80°C for 10 minutes for dissolution, followed by cooling to room temperature. Step 2) Concentrated citrus-fruit mixed fruit juice, L-ascorbic acid, citric acid, and a flavor were added to the solution obtained in step 1) above, followed by the addition of water to compensate water loss.

Step 3) The preparation product obtained in step 2) above was sterilized by heating up to 93°C, and hot-packed.

**Table 5-1**

| | Thickener | | Viscosity (mPa·s) | Accelerated storage stability (5°C, 2 weeks) | Evaluation of the quality of taste of beverage (sensory evaluation) |
|---|---|---|---|---|---|
| | Welan gum | Xanthan gum | | | |
| Blank | - | - | 5.2 | Fruit juice and fiber were precipitated | No richness |
| Ex. 5-1 | 0.05% | | 25.2 | Fruit juice and fiber were almost dispersed | Excellent richness and increased fruit juice sensation |
| Ex. 5-2 | 0.075 % | | 41.5 | Fruit juice and fiber were fully dispersed | Excellent richness, thickness, and a pleasantly sharp aftertaste |
| Ex. 5-3 | 0.1% | | 62.0 | Fruit juice and fiber were fully dispersed | Excellent richness, thickness, and a pleasantly sharp aftertaste |
| Ex. 5-4 | 0.15% | | 107.5 | Fruit juice and fiber were fully dispersed | Thickness with body, and a pleasantly sharp aftertaste |
| Ex. 5-5 | 0.2% | | 158.5 | Fruit juice and fiber were fully dispersed | Body with a pleasantly sharp aftertaste and lighter sourness |
| Comp. Ex. 5-1 | | 0.05% | 16.5 | Fruit juice and fiber were precipitated | Rich, but slightly pasty |
| Comp. Ex. 5-2 | | 0.1% | 44.0 | Fruit juice and fiber were almost dispersed | Rich, but poor flavor and pasty |

| | | | | | |
|---|---|---|---|---|---|
| Welan gum ... VIS TOP^{*2} W^{*1} Xanthan gum ... SAN ACE^{*2*1} | | | | | |

### - Results

The use of welan gum as a thickener improved the stability of insoluble components derived from cloudy fruit juice, and imparted excellent richness.

The addition of 0.15% or more of welan gum provided thickness with a pleasantly sharp aftertaste, as well as a smoothie-like sensation. Although richness was provided with the use of xanthan gum (Comparative Examples), a lingering pasty aftertaste was also provided, which resulted in an unpleasantly sharp aftertaste.

### Test Example 5-2: Carbonated Beverage (Zero-Calorie)

Various carbonated beverages were prepared with the addition of a thickener, based on the following formula and the preparation method described below. As a thickener, welan gum, xanthan gum, or high methoxyl pectin (HM pectin) was used. Table 5-2 shows the types and amounts of thickeners used. Each of the obtained carbonated beverages was subjected to a viscosity measurement (measurement conditions: a B-type rotational viscometer, 5°C, 60 rpm, rotor No. 1) and a sensory evaluation of the quality of taste (in particular, richness). Table 5-2 shows the results.

### Formula

| | |
|---|---|
| Sweetener (SAN SWEET^{*2} SA-5050^{*1}) | 0.045% |
| Trisodium citrate (crystal) | 0.02% |
| Citric acid (anhydrous) | 0.1% |
| Maltodextrin (SMART TASTE*2*1) | 0.1% |
| Thickener | See Table 5-2 |
| Flavor (LEMON FLAVOR No. 2404^{*1}) | 0.1% |
| Subtotal with water | 40.0% |
| Carbonated water | 60.0% |
| Total | 100.0% |

### - Preparation Method

Step 1) A powder mixture of the sweetener, the maltodextrin, and a thickener was added to water, and the resulting mixture was dissolved by stirring and heating at 80°C for 10 minutes, followed by cooling to room temperature.

Step 2) Trisodium citrate, citric acid, and the flavor were added to the solution obtained in step 1) above, and water was added thereto so that the total was adjusted to 40 parts. Step 3) Sixty parts of carbonated water was added thereto, and the mixture was sterilized by heating at 75°C for 20 minutes.

**Table 5-2**

| | Thickener | | | Viscosity (mPa·s) | Evaluation of the quality of taste of beverage (sensory evaluation) |
|---|---|---|---|---|---|
| | Welan gum | Xanthan gum | HM pectin | | |
| Blank | - | - | - | 5.2 | No richness |
| Ex. 5-6 | 0.03% | | | 9.4 | Excellent richness, and a pleasantly sharp aftertaste |
| Ex. 5-7 | 0.05% | | | 16.2 | Excellent richness and thickness |
| Comp. Ex. 5-3 | | 0.05% | | 35.4 | Rich, but no cooling sensation |
| Comp. Ex. 5-4 | | | 0.05% | 7.5 | No richness |

| | | | | | |
|---|---|---|---|---|---|
| Welan gum ... VIS TOP^{*2} W^{*1} Xanthan gum ... SAN ACE^{*2*1} HM pectin ... SM-666^{*1} | | | | | |

### - Results

The addition of welan gum as a thickener successfully provided excellent richness without deteriorating the cooling sensation or refreshing sensation required to carbonated beverages. The carbonated beverage that contained xanthan gum (Comparative Example 5-3) provided richness, but no cooling sensation. The carbonated beverage that contained HM pectin (Comparative Example 5-4) did not even have richness.

### Test Example 5-3: Alcohol-Containing Beverage

Various alcoholic beverages were prepared with the addition of a thickener, based on the following formula and the preparation method described below. Welan gum, xanthan gum or HM pectin was added as a thickener. Table 5-3 shows the types and amounts of thickeners used. Each of the obtained alcoholic beverages was subjected to a viscosity measurement (measurement conditions: a B-type rotational viscometer, 5°C, 60 rpm, rotor No. 1) and a sensory evaluation of the quality of taste (in particular, richness). Table 5-3 shows the results.

### Formula

### (1) Concentrated syrup (3-fold)

| | |
|---|---|
| High-fructose corn syrup | 12.0% |
| Acesulfame K | 0.03% |
| Sucralose | 0.015% |
| Thickener | See Table 3 |
| Citric acid (anhydrous) | 0.6% |
| Trisodium citrate | 0.05% |
| Colorant (CAROTENE BASE No. 35468^{*1}) | 0.15% |
| Flavor (HELLO BAR^{*2} ORANGE No. 1^{*1}) | 0.3% |
| Vodka 40° | 37.5 |
| With addition of water | 100.0% |

### (2) Alcohol-containing beverage

| | |
|---|---|
| Concentrated syrup (3-fold) of (1) above | 33.3% |
| Carbonated water | 66.7% |
| Total | 100.0% |

### - Preparation Method

Step 1) Water was added to a container that contained high-fructose corn syrup, and a thickener was added thereto, followed by stirring for dissolution at 80°C for 10 minutes. Step 2) Acesulfame K, sucralose, citric acid, trisodium citrate, the colorant, the flavor, and vodka were added to the solution obtained in step 1) above, and the total amount was adjusted with the addition of water (3-fold concentrated syrup). Step 3) The 3-fold concentrated syrup obtained in step 2) above and carbonated water were poured into an aluminum can. Step 4) The resulting product was sterilized by heating at 70°C for 10 minutes.

**Table 5-3**

| | Thickener | | | Viscosity (mPa·s) | Evaluation of the quality of taste of beverage (sensory evaluation) |
|---|---|---|---|---|---|
| | Welan gum | Xanthan gum | HM pectin | | |
| Blank | | | | 5.5 | No richness |
| Ex. 5-8 | 0.03% | | | 13.9 | Richness was imparted, with a pleasantly sharp aftertaste |
| Ex. 5-9 | 0.05% | | | 24.0 | Sufficient richness was imparted, with a pleasantly sharp aftertaste |
| Ex. 5-10 | 0.08% | | | 45.2 | Sufficient richness and thickness were imparted |
| Ex. 5-11 | 0.1% | | | 68.0 | Sufficient richness was imparted, with increased alcoholic sensation |
| Comp. Ex. 5-5 | | 0.03% | | 10.2 | Sufficient richness was imparted, but with a specific slimminess |
| Comp. Ex. 5-6 | | 0.05% | | 25.2 | Sufficient richness was imparted, but with a specific slimminess |
| Comp. Ex. 5-7 | | 0.08% | | 32.3 | Richness was imparted, but with poor flavor release |
| Comp. Ex. 5-8 | | | 0.1% | 6.1 | Richness was not imparted |
| Comp. Ex. 5-9 | | | 0.2% | 8.9 | Richness was not imparted |
| Comp. Ex. 5-10 | | | 0.3% | 10.5 | Richness was slightly imparted, but with a pasty texture |

| | | | | | |
|---|---|---|---|---|---|
| Welan gum ... VIS TOP^{*2} W^{*1} Xanthan gum ... SAN ACE^{*2*1} HM pectin ... SM-666^{*1} | | | | | |

### - Results

The addition of 0.03% or more of welan gum provided alcoholic beverages with sufficient richness and increased alcoholic sensation. Even when the viscosity was increased, a pleasantly sharp aftertaste was achieved. The addition of xanthan gum (Comparative Examples 5-5 to 5-7) provided sufficient richness even with a small amount, but a specific slimy texture was also provided. The addition of HM pectin did not achieve sufficient richness, and the addition of 0.3% of HM pectin provided a noticeable pasty texture specific to pectin.

### - B. Preparation Examples of Dairy Component-Containing Neutral Beverages

### Test Example 5-4: Dairy Component-Containing Coffee Beverage

Various dairy component-containing canned coffee beverages were prepared with the addition of a thickener, based on the following formula and the preparation method described below. Welan gum or xanthan gum was added as a thickener. Table 5-4 shows the types and amounts of thickeners used. The obtained dairy component-containing coffee beverages were subjected to visual inspection to see the presence or absence of white floating matter after two-week storage at 60°C, a viscosity measurement (measurement conditions: a B-type rotational viscometer, 5°C, 60 rpm, rotor No. 1), and a sensory evaluation of the quality of taste (in particular richness). Table 5-4 shows the results.

### Formula

| | |
|---|---|
| Coffee solids content | 1.4% |
| Cow milk | 15.0% |
| Sugar | 6.0% |
| Emulsifier | 0.05% |
| (Ryoto Sugar Ester P-1670, Mitsubishi-Chemical Foods Corporation) | |
| Thickener | See Table 5-4 |
| Sodium bicarbonate an hydrous | 0.11% |
| Total with water | 100.0% |

### - Preparation Method

Step 1) Roasted coffee beans (Columbia SP, L value = 20) were coarsely ground, a 10-fold amount of boiling water was added thereto for drip extraction, and an 8-fold amount was extracted, followed by cooling down to 20°C.

Step 2) A powder mixture of sugar, the emulsifier, and a thickener was added to water, and the resulting mixture was stirred under heating at 80°C for 10 minutes for dissolution, followed by cooling to room temperature.

Step 3) Cow milk, sodium bicarbonate an hydrous, and the extract of step 1) above were sequentially added to the solution of step 2), and the mixture was mixed by stirring, followed by the addition of water to adjust the total amount.

Step 4) The resulting product was heated to 75°C under stirring, homogenized with a homogenizer (first step: 10 MPa, second step: 5 MPa), and poured into a can.

Step 5) Retort sterilization was performed at 123°C for 20 minutes.

**Table 5-4**

| | Thickener | | White floating matter^{(*1)} 60°C, 2 weeks | Viscosity (mPa·s) | Evaluation of the quality of taste of beverage (sensory evaluation) |
|---|---|---|---|---|---|
| | Welan gum | Xanthan gum | | | |
| Blank | | | - | 4.6 | Not rich |
| Ex. 5-12 | 0.002% | | - | 5.4 | Rich, with a pleasantly sharp aftertaste |
| Ex. 5-13 | 0.01% | | ± | 6.6 | Excellently rich, with increased milk sensation |
| Ex. 5-14 | 0.03% | | ± | 14.4 | Excellently rich, with increased milk sensation |
| Comp. Ex. 5-11 | | 0.002% | - | 5.0 | Not rich |
| Comp. Ex. 5-12 | | 0.01% | ± | 12.0 | Rich, but with an unpleasantly sharp aftertaste |
| Comp. Ex. 5-13 | | 0.03% | + | 19.6 | Rich, but with an unpleasantly sharp aftertaste |

| | | | | | |
|---|---|---|---|---|---|
| - Evaluation Criteria for Accelerated Storage Stability and Viscosity Measurement Conditions (*1) White floating matter: After storage, cooling was performed for one entire day and night, and the can was opened; the amount of the solidified milk fat floating on the upper surface was then visually observed. - ... None ± ... Developed slightly (within the acceptable range) + ... Greatly developed (outside the acceptable range) Welan gum ... VIS TOP^{*2} W^{*1} Xanthan gum ... SAN ACE^{*2*1} | | | | | |

### - Results

The addition of welan gum successfully provided excellent richness, a pleasantly sharp aftertaste, and increased milk sensation without deteriorating the stability after accelerated storage test. Unlike those in which welan gum was added, the systems in which xanthan gum was added (Comparative Examples 5-12 and 5-13) had a higher viscosity and insufficient stability compared to the same addition level of welan gum, with white floating matter being observed; satisfactory richness was not imparted.

### Test Example 5-5: Dairy Component-Containing Tea Beverage

Various milk component-containing tea beverages were prepared with the addition of a thickener, based on the following formula and the preparation method described below. Welan gum or xanthan gum was added as a thickener. Table 5-5 shows the types and amounts of thickeners used. The obtained dairy component-containing tea beverages were subjected to a viscosity measurement (measurement conditions: a B-type rotational viscometer, 5°C, 60 rpm, rotor No. 1) and a sensory evaluation of the quality of taste (in particular richness). Table 5-5 shows the results.

### Formula

| | |
|---|---|
| Tea solids content | 0.3% |
| Cow milk | 22.0% |
| Sugar | 5.2% |
| Emulsifier | 0.05% |
| (Ryoto Sugar Ester P-1670, Mitsubishi-Chemical Foods Corporation) | |
| Trisodium citrate dehydrate | 0.05% |
| L-sodium ascorbate^{*1} | 0.04% |
| Thickener | See Table 5 |
| Sodium bicarbonate an hydrous | 0.005% |
| Total with water | 100.0% |

### - Preparation Method

Step 1) Boiling water was added in an amount of 30 g per 1 g of Ceylon tea leaves, and immersion and extraction were performed for 5 minutes. The resulting product was then filtered through a filter paper to thus obtain a tea-leaf extract (containing tea solids content).

Step 2) A powder mixture of sugar, the emulsifier, and a thickener was added to water, and the resulting mixture was stirred at 80°C for 10 minutes for dissolution, followed by cooling down to room temperature.

Step 3) Cow milk, trisodium citrate, L-sodium ascorbate, and sodium bicarbonate an hydrous were added in this order to the solution obtained in step 2) above, and the mixture was mixed by stirring, followed by the addition of water to compensate water loss.

Step 4) The preparation product obtained in step 3) above was heated up to 75°C under stirring, homogenized with a homogenizer (first step: 10 MPa, second step: 5 MPa), and filled into a can. 5) Retort sterilization was performed at 123°C for 20 minutes.

**Table 5-5**

| | Thickener | | Viscosity (mPa·s) | Evaluation of the quality of taste of beverage (sensory evaluation) |
|---|---|---|---|---|
| | Welan gum | Xanthan gum | | |
| Blank | | | 4.8 | Not rich |
| Ex. 5-15 | 0.03% | | 11.7 | Excellently rich, with increased milk sensation |
| Ex. 5-16 | 0.05% | | 24.6 | Excellently rich |
| Ex. 5-17 | 0.1% | | 46.1 | Excellently rich, with feeling of richness due to the viscosity |
| Comp. Ex. 5-14 | | 0.03% | 19.5 | Rich, but with poor flavor release |
| Comp. Ex. 5-15 | | 0.05% | 41.5 | Reduced tea-like sensation and poor flavor release |
| Comp. | | 0.1% | 94.6 | High viscosity, an unpleasantly |
| Ex. 5-16 | | | | sharp aftertaste, and a lack of tea-like sensation |

| | | | | |
|---|---|---|---|---|
| Welan gum ... VIS TOP^{*2} W^{*1} Xanthan gum ... SAN ACE^{*2*1} | | | | |

### - Results

The addition of welan gum successfully imparted richness, as well as thickness with dairy component-containing tea beverage, to the flavor. The results also revealed that by controlling the amount of welan gum, it is possible to increase the milk-like sensation and impart richness by increasing viscosity with the beverage, without deteriorating the flavor release. In comparison, the dairy component-containing tea beverages that contained xanthan gum had richness when a small amount of xanthan gum was used (Comp. Ex. 5-14); however, an increase in the amount of xanthan gum resulted in less tea-like sensation and provided poor flavor release.

### Test Example 5-6: Dairy Component-Containing Green Tea Beverage

Various dairy component-containing green tea beverages were prepared with the addition of a thickener, based on the following formula and the preparation method described below. Welan gum or xanthan gum was added as a thickener. Table 5-6 shows the types and amounts of thickeners used. Each of the obtained dairy component-containing green tea beverages was subjected to an accelerated storage stability test, a viscosity measurement, and a sensory evaluation of the quality of taste (in particular richness). Table 5-6 shows the results.

### Formula

| | |
|---|---|
| Cow milk | 6.0% |
| Sugar | 6.0% |
| Green-tea powder | 0.5% |
| Emulsifier | 0.05% |
| (Ryoto Sugar Ester P-1670, Mitsubishi-Chemical Corporation) Foods | |
| Stabilizer | 0.4% |
| (Ceolus SC-900, Asahi Kasei Chemicals Corporation) | |
| Thickener | See Table 5-6 |
| Total with water | 100.0% |

### - Preparation Method

Step 1) A powder mixture of sugar, the emulsifier, the stabilizer, and a thickener was added to water, and the resulting mixture was stirred under heating at 80°C for 10 minutes for dissolution, followed by cooling down to room temperature.

Step 2) Cow milk and a green tea powder were added to the solution obtained in step 1) above, followed by adding water to compensate loss water.

Step 3) The preparation product obtained in step 2) above was homogenized with a homogenizer (first step: 15 MPa, second step: 5 MPa) at 75°C.

Step 4) The preparation product obtained in step 3) above was sterilized with a UHT sterilizer at 140°C for 60 seconds, and the resulting product was aseptically filled into a plastic bottle.

**Table 5-6**

| | Thickener | | Viscosity (mPa·s) | State after storage (37°C, 4 weeks) | Evaluation of the quality of taste of beverage (sensory evaluation) |
|---|---|---|---|---|---|
| | Welan gum | Xanthan gum | | | |
| Blank | | | 15.0 | Almost dispersed | Not rich |
| Ex. 5-18 | 0.05% | | 32.6 | Fully dispersed | Excellently rich, with a pleasantly sharp aftertaste |
| Ex. 5-19 | 0.1% | | 52.5 | Fully dispersed | Excellently rich, with thick sensation characteristic to green tea |
| Comp. Ex. 5-17 | | 0.05% | 31.2 | Partly aggregated | Gritty and pasty |

| | | | | | |
|---|---|---|---|---|---|
| Welan gum ... VIS TOP^{*2} W^{*1} Xanthan gum ... SAN ACE^{*2*1} | | | | | |

### - Results

In the blank, which contained a microcrystalline cellulose preparation alone as a stabilizer, the green tea powder was mostly dispersed, and a clean texture was provided. The use of welan gum in combination improved the stability and provided excellent richness, as well as thick sensation characteristic to green tea. In comparison, the use of xanthan gum caused the partial aggregation of milk protein and provided a gritty texture.

### - C. Preparation Examples of Dairy Component-Containing Acidic Beverages

### Test Example 5-7: Acidified Milk Beverage

Various acidified milk beverages were prepared with the addition of a thickener, based on the following formula and the preparation method described below. In this preparation example, a soybean soluble polysaccharide (SM-1200^{*1}) was used as a stabilizer, and welan gum or HM pectin was used as a thickener. Table 5-7 shows the types and amounts of thickeners used. Each of the obtained acidified dairy beverages was subjected to an accelerated storage stability test, a viscosity measurement (measurement conditions: a B-type rotational viscometer, 5°C, 60 rpm, rotor No. 1 or No. 2), and a sensory evaluation of the quality of taste (in particular richness). Table 5-7 shows the results.

### Formula

| | |
|---|---|
| Skimmed milk powder | 1.0% |
| Sugar | 8.0% |
| Stabilizer (soybean soluble polysaccharide, SM-1200^{*1}) | 0.3% |
| Thickener | See Table 5-7 |
| Citric acid aqueous solution | To a specified pH |
| Flavor | 0.1% |
| (YOGURT FLAVOR No. 92461^{*1}) | |
| Total with water | 100.0% |

### - Preparation Method

Step 1) Skimmed milk powder solution (20% (W/W)) was prepared.

Step 2) A powder mixture of sugar, the stabilizer, and a thickener was added to a container containing water, and the resulting mixture was stirred at 80°C for 10 minutes for dissolution, followed by cooling down to room temperature.

Step 3) The solution obtained in step 1) was added to the solution obtained in step 2), the pH was adjusted to a specified value with a 50% (W/V) citric acid aqueous solution, and the total amount was adjusted with the addition of water.

Step 4) After the preparation product obtained in step 3) was heated up to 75°C, the flavor was added, and homogenization was performed with a homogenizer (first step: 10 MPa, second step: 5 MPa). The resulting product was sterilized by heating up to 93°C, and hot-packed in a PET container.

**Table 5-7a**

| | Welan gum | HM pectin | pH | Viscosity (5°C, after 1 day) | Stability (5°C, 2 weeks) | Evaluation of richness of beverage |
|---|---|---|---|---|---|---|
| Blank 1 | | | 3.6 | 5.0 | Excellent, slight precipitation but excellent redispersibility | - |
| Ex. 5-20 | 0.1 | | | 42.7 | Excellent, slight precipitation but excellent redispersibility | Excellently rich |
| Ex. 5-21 | 0.2 | | | 136.5 | Excellent, no precipitation | Sufficiently rich, with a pleasantly sharp aftertaste |
| Ex. 5-22 | 0.3 | | | 273.0 | Excellent, no precipitation | Drink-yogurt-like thick sensation |
| Comp. Ex. 5-18 | | 0.2 | | 5.2 | Excellent | Very slightly rich, with a pasty texture |
| Comp. Ex. 5-19 | | 0.3 | | 9.0 | Excellent, slight precipitation but excellent redispersibility | Rich, but with a lingering aftertaste and a pasty texture |
| Blank 2 | | | 3.8 | 4.9 | Excellent, slight precipitation but excellent redispersibility | - |
| Ex. 5-23 | 0.1 | | | 40.0 | Excellent, slight precipitation but excellent redispersibility | Excellently rich |
| Ex. 5-24 | 0.2 | | | 142.5 | Excellent, no precipitation | Sufficiently rich, with a pleasantly sharp aftertaste |
| Ex. 5-25 | 0.3 | | | 263.0 | Excellent, no precipitation | Drink-yogurt-like thick sensation |
| Comp. Ex. 5-20 | | 0.2 | | 5.6 | Excellent | Very slightly rich, with a pasty texture |
| Comp. Ex. 5-21 | | 0.3 | | 9.2 | Excellent, slight precipitation but excellent redispersibility | Slightly rich, but with an unpleasantly sharp aftertaste |

**Table 5-7b**

| | | | | | | |
|---|---|---|---|---|---|---|
| Blank 3 | | | 4.0 | 5.0 | Excellent, slight precipitation | - |
| Ex. 5-26 | 0.1 | | | 46.2 | Excellent, slight precipitation but excellent redispersibility | Excellently rich |
| Ex. 5-27 | 0.2 | | | 158.0 | Excellent, no precipitation | Sufficiently rich |
| Ex. 5-28 | 0.3 | | | 273.0 | Excellent, no precipitation | A thick texture |
| Comp. Ex. 5-22 | | 0.2 | | 8.1 | Excellent | Very slightly rich, with a pasty texture |
| Comp. Ex. 5-23 | | 0.3 | | 9.4 | Excellent, slight precipitation but excellent redispersibility | Slightly rich, but with an unpleasantly sharp aftertaste and poor flavor release |
| Comp. Ex. 5-24 | | 0.4 | | 25.6 | Excellent | Rich, but pasty |
| Blank 4 | | | 4.2 | 5.1 | Excellent, slight precipitation but excellent redispersibility | - |
| Ex. 5-29 | 0.1 | | | 45.0 | Excellent, slight precipitation but excellent redispersibility | Excellently rich |
| Ex. 5-30 | 0.2 | | | 137.0 | Excellent, no precipitation | Sufficiently rich, but slightly light sourness |
| Ex. 5-31 | 0.3 | | | 253.5 | Excellent, no precipitation | Rich, but light sourness and less milk-like sensation |
| Comp. Ex. 5-25 | | 0.2 | | 8.6 | Excellent | Very slightly rich, with a pasty texture |
| Comp. Ex. 5-26 | | 0.3 | | 9.6 | Excellent, slight precipitation but excellent redispersibility | Slightly rich, but with an unpleasantly sharp aftertaste and a pasty texture |
| Comp. Ex. 5-27 | | 0.4 | | 23.1 | Excellent | Rich, but pasty |

| | | | | | | |
|---|---|---|---|---|---|---|
| Welan gum ... VIS TOP^{*2} W^{*1} HM pectin ... SM-666^{*1} | | | | | | |

### - Results

The acidified milk beverages of both the Examples and the Comparative Examples prepared based on the formula used in this preparation did not show, after 2-week storage at 5°C, supernatant (the formation of a low-turbidity layer at the upper portion) in its appearance, nor precipitation nor separation to an extent that would not allow re-dispersion; thereby, an excellent state was maintained.

The use of welan gum provided the acidified milk beverages of different pH values with excellent richness without impairing the stability. An increase in the amount of welan gum added provided yogurt-like thick sensation, sufficient body, as well as a smoothie-like sensation. In the Comparative Example, although the addition of HM pectin provided richness, an undesirable pasty texture specific to pectin was also provided.

### Test Example 5-8: Sterilized Probiotic Dairy Beverage (Nonfat Milk Solids: 3%)

Sterilized probiotic dairy beverages were prepared based on the formula shown in Table 5-8 and the preparation method described below. In this preparation example, a soybean soluble polysaccharide (SM-1200^{*1}) was used as a stabilizer, and welan gum or HM pectin was used as a thickener. Table 5-9 shows the types and amounts of thickeners used. The obtained sterilized probiotic dairy beverages were subjected to an accelerated storage stability test by visual inspection, a viscosity measurement (measurement conditions: a B-type rotational viscometer, 5°C, 60 rpm, rotor No. 1 or No. 2), and a sensory evaluation of the quality of taste (in particular richness). Table 5-9 shows the results.

**Table 5-8**

| | | (%) |
|---|---|---|
| Fermented milk | Skimmed milk powder | 21 |
| | Starter | 3 |
| Total with water | | 100 |
| Fermented milk (SNF20 mentioned above) | | 15 |
| Sugar | | 8 |
| Soybean soluble polysaccharide (SM-1200^{*1}) | | 0.4 |
| Thickener | | As stated elsewhere |
| Citric acid aqueous solution | | As stated elsewhere |
| Flavor (YOGURT FLAVOR No. 92461^{*1}) | | 0.1 |
| Total with water | | 100 |

### - Preparation Method

Step 1) Skimmed milk powder was added to water, and the resulting mixture was dissolved by stirring and sterilized by heating at 90°C for 10 minutes, followed by cooling down to 40°C.

Step 2) Fermented milk was prepared by adding a starter to the solution obtained in step 1) above, fermenting the resulting mixture in an incubator at 40°C for 6 hours (pH 4.4), and the obtained curd was stirred.
3) A powder mixture of sugar, the soybean soluble polysaccharide, and welan gum or HM pectin was added to water, and the resulting mixture was stirred for dissolution at 80°C for 10 minutes, followed by cooling down to room temperature.
4) The fermented milk obtained in 2) above was added to the solution obtained in 3) above, and the pH was adjusted with the citric acid aqueous solution (pH 4.0 for Blank 1, Examples 5-32 to 5-34, and Comp. Ex. 5-28; and pH 3.8 for Blank 2, Examples 5-35 to 5-37, and Comp. Ex. 5-29), followed by the addition of water to adjust the total amount. Thereafter, the flavor was added thereto, and homogenization was performed (homogenization conditions: first step: 10 MPa, second step: 5 MPa, with a homogenizer) at 75°C.
5) The homogenized mixture obtained in 4) above was sterilized by heating up to 93°C, and filled in a 200-ml PET container or a screw-capped bottle.

### - Evaluation Results

The sterilized probiotic dairy beverage obtained by using the preparation method above and filled in a screw-capped bottle was stored at 5°C; on the next day, a viscosity measurement and an evaluation of the quality of taste (in particular richness) were performed. Further, the sterilized probiotic dairy beverage filled in a PET container was stored at 5°C for two weeks, and then the appearance was visually evaluated. Table 5-9 shows the results.

**Table 5-9**

| | | | | 5°C, 1 day | | 5°C, 2 weeks |
|---|---|---|---|---|---|---|
| | Welan gum (%) | HM pectin (%) | pH | Viscosity (mPa·s) | Evaluation of the quality of taste of beverage | Appearance |
| Blank 1 | | | 4.0 | 6.0 | - | Excellent (slight precipitation) |
| Ex. 5-32 | 0.1 | | | 40.1 | Rich, with a pleasant clean aftertaste | Excellent (only slight precipitation, but excellent redispersibility) |
| Ex. 5-33 | 0.2 | | | 172.5 | Bodying sensation was imparted, with a pleasantly sharp aftertaste | Excellent (no precipitation) |
| Ex. 5-34 | 0.3 | | | 300.5 | A big difference between the body feeling in the middle and a sharp aftertaste in the last half | Excellent (no precipitation) |
| Comp. Ex. 5-28 | | 0.3 | | 11.4 | Rich, but with a residual pasty texture | Excellent (slight precipitation) |
| Blank 2 | | | 3.8 | 5.6 | - | Excellent (slight precipitation) |
| Ex. 5-35 | 0.1 | | | 38.0 | Slightly rich, with a pleasantly clean aftertaste | Excellent (only slight precipitation, but excellent redispersibility) |
| Ex. 5-36 | 0.2 | | | 148.0 | Excellently rich, with an excellent aftertaste | Excellent (no precipitation) |
| Ex. 5-37 | 0.3 | | | 297.0 | Creamy and foamy sensation and thickness were imparted, with a pleasantly sharp aftertaste, easy to drink | Excellent (no precipitation) |
| Comp. Ex. 5-29 | | 0.3 | | 11.5 | Rich, but with a residual pasty texture | Excellent(slight precipitation) |

### - Results

Both blanks 1 and 2 were not viscous, and had a light taste. At each pH, an increase in the amount of welan gum provided a bodying sensation, without impairing the pleasantly sharp aftertaste; in terms of storage stability, a precipitation-inhibiting effect over time was also achieved. When HM pectin was added (Comparative Examples 5-28 and 5-29), although the viscosity was increased, the texture was impaired, with an increased pasty texture.

### Test Example 5-9: Dairy Component-Containing Carbonated Beverage

Dairy component-containing carbonated beverages were prepared with the addition of a thickener based on the following formula and the preparation method described below. In this preparation example, soybean soluble polysaccharide was used as a stabilizer, and welan gum or HM pectin was used as a thickener. Table 5-10 shows the types and amounts of thickeners used. The obtained dairy component-containing carbonated beverages were subjected to visual inspection of appearance, a viscosity measurement, and a sensory evaluation of richness of the beverages. Table 5-10 shows the results.

### Formula

| | |
|---|---|
| Skimmed milk powder | 1.0 |
| High-fructose corn syrup | 8.5 |
| Sugar | 5.0 |
| Acidulant (Musashino lactic acid 50F, Musashino Chemical Laboratory, Ltd.) | 0.15 |
| Maltodextrin (SMART TASTE*2*1) | 0.1 |
| Stabilizer (Soybean soluble polysaccharide, SM-1200^{*1}) | 0.2 |
| Thickener | See Table 5-10 |
| Flavor (YOGURT FLAVOR No. 92461^{*1}) | 0.1 |
| With water | 50.0% |
| Carbonated water | 50.0 |
| Total | 100.0% |

### - Preparation Method

Step 1) A powder mixture of high-fructose corn syrup, sugar, the maltodextrin, the stabilizer, and a thickener was mixed with water and dissolved at 80°C for 10 minutes, followed by cooling.

Step 2) After skimmed milk powder was added to the solution obtained in step 1) above, and dissolved by stirring, the acidulant was added thereto, and the total amount was adjusted with water.

Step 3) After the preparation product obtained in step 2) above was heated up to 75°C, the flavor was added thereto, and homogenization was performed with a homogenizer (first step: 10 MPa, second step: 5 MPa).

Step 4) After cooling down to room temperature, carbonated water was added to the preparation product homogenized in 3) above, and heat sterilization was performed at 70°C for 20 minutes.

**Table 5-10**

| | Thickener | | Viscosity^{*} mPa·s | pH | Evaluation of richness | Appearance |
|---|---|---|---|---|---|---|
| | Welan gum (%) | HM pectin (%) | | | | |
| Blank | | | 5.4 | 3.6 | Not rich | Excellent, without formation of phase separation; transparent layer formation at the top |
| Ex. 5-38 | 0.1 | | 38.4 | | Sufficiently rich with thickness, providing a good harmony with refreshing sensation | Excellent, without formation of phase separation; transparent layer formation at the top |
| Ex. 5-39 | 0.15 | | 97.4 | | Excellently rich, with thickness and body | Excellent, without formation of phase separation; transparent layer formation at the top |
| Comp. Ex. 5-30 | | 0.1 | 6.5 | | Very slightly rich, and pasty | Excellent, without formation of phase separation; transparent layer formation at the top |
| Comp. Ex. 5-31 | | 0.2 | 8.5 | | Very slightly rich, and pasty | Excellent, without formation of phase separation; transparent layer formation at the top |

| | | | | | | |
|---|---|---|---|---|---|---|
| ** Viscosity measurement conditions: a B-type rotational viscometer, 5°C, 60 rpm, rotor No. 1 Soybean soluble polysaccharide ... SM-1200^{*1} Welan gum ... VIS TOP^{*2} W^{*1} HM pectin ... SM-666^{*1} | | | | | | |

### - Results

Compared with the use of a soybean soluble polysaccharide as a stabilizer alone (blank), the additional use of 0.1% or more of welan gum (Examples 5-38 and 5-39) in combination achieved both refreshing sensation specific to carbonated beverages and excellent richness, without impairing the stability. The additional use of HM pectin (Comparative Examples 5-30 and 5-31) provided only a small degree of richness although the stability was not impaired, and an increase in the amount of HM pectin added resulted in an unpleasantly sharp aftertaste, causing a loss of refreshing sensation characteristic to carbonated beverages.

### Test Example 5-10: Yogurt Beverage

Various yogurt drinks (SNF: 8%) were prepared based on the following formula and preparation method. In this preparation example, welan gum, HM pectin or fermentation-derived cellulose was used as a thickener. Table 5-11 shows the types and amounts of thickeners used. Each of the obtained yogurt drinks was subjected to a visual inspection, viscosity measurement (measurement conditions: a B-type rotational viscometer, 5°C, 60 rpm, rotor No. 1, No. 2, or No. 3), and sensory evaluation of the quality of taste. Table 5-11 shows the results.

### Formula

### (1) Fermented milk

| | |
|---|---|
| Skimmed milk powder | 21.0 |
| Starter | 3.0 |
| Total with water | 100.0% |

### (2) Yogurt beverage

| | |
|---|---|
| Fermented milk of (1) above (SNF 20%) | 40.0 |
| Sugar | 8.0 |
| Stabilizer (SM-666^{*1}) | 0.3 |
| Thickener | See Table 5-11 |
| 50% (W/V) citric acid aqueous solution | 0.25 |
| Total with water | 100.0% |

### - Preparation Method

Step 1) A skimmed milk powder was dissolved and sterilized by heating at 90°C for 10 minutes, and the resulting product was cooled to down 40°C, followed by the addition of a starter.

Step 2) The preparation product obtained in step 1) above was fermented in a incubator at 40°C for 6 hours (pH 4.4), and the curd was stirred to thus obtain fermented milk.

Step 3) A powder mixture of sugar, the stabilizer, and a thickener was added to water, and the resulting mixture was stirred under heating at 80°C for 10 minutes for dissolution, followed by cooling down to room temperature.

Step 4) The fermented milk was added to the solution obtained in step 3) above, a 50% (W/V) citric acid aqueous solution was added to adjust the pH to 4.2, and the total amount was adjusted.

Step 5) The preparation product obtained in step 4) above was homogenized (first step: 10 MPa, second step: 5 MPa), and filled in a container.

**Table 5-11**

| | Thickener | | | Viscosity** (mPa·s) | State after storage (5°C, 2 weeks) | Evaluation of the quality of taste of beverage (Sensory evaluation) |
|---|---|---|---|---|---|---|
| | Welan gum (%) | HM pectin (%) | Fermentation-derived cellulose blend(%) | | | |
| Blank | | | | 25.5 | Excellent, without formation of phase separation; transparent layer formation at the top | |
| Ex. 5-40 | 0.1% | | | 333.0 | Excellent, without formation of phase separation; transparent layer formation at the top | Excellently rich with thickness, body, and a pleasantly sharp aftertaste |
| Ex. 5-41 | 0.15% | | | 724.0 | Excellent, without formation of phase separation; transparent layer formation at the top | Excellently rich with thickness, body, and a pleasantly sharp aftertaste |
| Ex. 5-42 | 0.2% | | | 790.0 | Excellent, without formation of phase separation; transparent layer formation at the top | Excellently rich with thickness, foamy sensation, and body, as well as a pleasantly sharp aftertaste |
| Comp. Ex. 5-32 | | 0.3% | | 313.5 | Excellent, without formation of phase separation; transparent layer formation at the top | Rich, but a residual pasty texture with stickiness |
| Comp. Ex. 5-33 | | | 0.2% | 116.0 | Excellent, without formation | Rich, but with an unpleasantly |
| | | | | | of phase separation; transparent layer formation at the top | sharp aftertaste |

| | | | | | | |
|---|---|---|---|---|---|---|
| ** Viscosity measurement method: a B-type rotational viscometer, 5°C, 60 rpm, rotor No. 1 (blank), No. 2 (Example 5-40, Comparative Example 5-32 and 5-33), No. 3 (Example 5-41 and 5-42) Welan gum ... VIS TOP^{*2} W^{*1} HM pectin ... SM-666^{*1} Fermentation-derived cellulose blend ... SAN ARTIST^{*2} PG^{*1} | | | | | | |

### - Results

Compared with the use of HM pectin alone as a stabilizer (Blank), the use of welan gum in combination provided richness and a sharp aftertaste without impairing the stability, making it possible to produce a novel yogurt drink texture, such as a thickness and a cleaner aftertaste than known products.

Although the addition of HM pectin or fermentation-derived cellulose blend (Comparative Examples 5-32 or 5-33) did not impair the stability, the thickness was insufficient, and the aftertaste was not satisfactorily sharp; the addition of HM pectin made the beverage difficult to drink, with characteristic pasty texture.

### Test Example 5-11: Hot Fruit-Juice Beverage (Lemon Flavored)

Various hot fruit-juice beverages (lemon flavored) were prepared with the addition of a thickener, based on the following formula and the preparation method described below. In this preparation example, xanthan gum or welan gum was used as a thickener. Table 5-12 shows the types and amounts of thickeners used. The obtained hot fruit-juice beverages were subjected to a visual inspection, viscosity measurement, and sensory evaluation of richness. Table 5-12 shows the results.

### Formula

| | |
|---|---|
| Lemon juice from concentrate | 1.1 |
| Sugar | 5.0 |
| Sugar alcohol (PO-60, Mitsubishi Shoji Foodtech Co., Ltd.) | 3.5 |
| SUCRALOSE^{*1} | 0.008 |
| Thickener | See Table 5-12 |
| Citric acid (anhydrous) | 0.15 |
| Trisodium citrate dihydrate | 0.1 |
| L-ascorbic acid (crystal) | 0.05 |
| Colorant (MARIGOLD BASDE 35457^{*1}) | 0.03 |
| Flavor (LEMON FLAVOR 21-B^{*1}) | 0.1 |
| Flavor (FLAVOR CONTROLLER^{*2} LEMON 102786^{*1}) | 0.02 |
| Total with water | 100.0% |

### - Preparation Method

Step 1) A powder mixture of sugar and a thickener was added to water and a sugar alcohol, and the resulting mixture was stirred under heating at 80°C for 10 minutes for dissolution.

Step 2) Lemon juice from concentrate, citric acid (anhydrous), trisodium citrate, and L-ascorbic acid were added to the solution obtained in step 1) above, and the total amount was adjusted with water.

Step 3) The resulting mixture was heated to up 93°C, to which the colorant and the flavors were added, and the resulting product was hot-packed.

**Table 5-12**

| | Thickener | | Viscosity** (mPa·s) | Evaluation of the quality of taste of beverage (sensory evaluation at product temperature of 60°C) |
|---|---|---|---|---|
| | Welan gum (%) | Xanthan gum (%) | | |
| Blank | | | 3.5 | |
| Ex. 5-43 | 0.08 | | 33.0 | Excellently rich, with a pleasantly sharp aftertaste and excellent flavor release |
| Ex. 5-44 | 0.125% | | 71.6 | Excellently rich with thickness, body, and a pleasantly sharp aftertaste |
| Comp. Ex. 5-34 | | 0.1% | 10.8 | Neither rich nor thick, with a pasty aftertaste and a strong lingering taste |

| | | | | |
|---|---|---|---|---|
| ** Viscosity measurement conditions: a B-type rotational viscometer, 60°C, 60 rpm, rotor No. 1 Welan gum ... VIS TOP^{*2} W^{*1} Xanthan gum ... SAN ACE^{*2*1} | | | | |

### - Results

Even in hot fruit-juice beverages, the addition of welan gum achieved an increase in the viscosity, and provided thickness with a pleasantly sharp aftertaste. The addition of 0.125% of welan gum provided even greater thickness. However, the addition of xanthan gum (a Comparative Example 5-34) contributed to less viscosity increase or thickness, and its pasty texture and poor flavor release were emphasized.

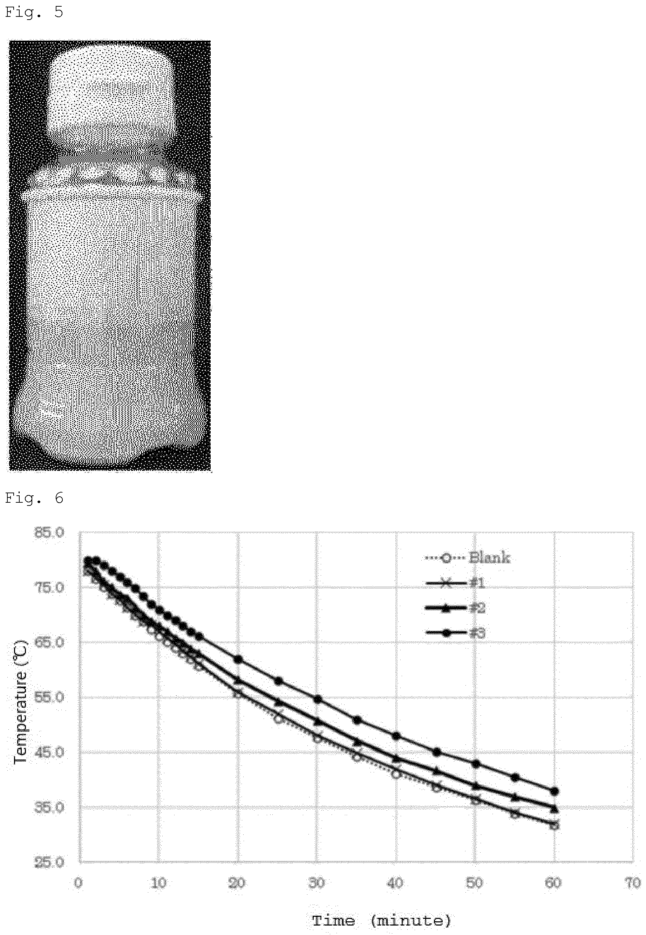

To obtain data showing the difficulty in cooling the prepared hot lemon beverage, the temporal change in temperature was noted under the following conditions. Fig. 6 shows the results. In Fig. 6, #1, #2, and #3 respectively represent the results of Comparative Example 5-34, Example 5-43, and Example 5-44.
Temperature: 4.5°C (in a refrigerator)
Humidity: 55%
Initial temperature: 80°C
Measuring time: 60 minutes

### Test Example 6-1: Preparation of Multilayer Food 1

Formulation A (brix: 26.2) was prepared using the formula shown in Table 6-1. Specifically, a powder mixture of sugar, the gelling agent, and trisodium citrate was added to water, and dissolved by stirring at 80°C for 10 minutes. Next, a 50% citric acid solution was added thereto, the total amount was adjusted with water, and the temperature thereof was then adjusted to 80°C.

**Table 6-1**

| Formulation A | (%) |
|---|---|
| Sugar | 25 |
| Gelling agent (Gel Up^{*2} WM-1 (F)^{*1}) | 1.0 |
| Trisodium citrate hihydrate | 0.1 |
| 50% citric acid aqueous solution | 0.13 |
| Total with water | 100 |

Subsequently, formulation B (brix 16.8) was prepared using the formula shown in Table 6-2. Specifically, a powder mixture of sugar, the gelling agent, and trisodium citrate, and a polysaccharide shown in Table 6-3 were added to water, and dissolved by stirring at 80°C for 10 minutes. Next, the colorant and a 50% citric acid aqueous solution were added thereto, the total amount was adjusted with water, and the temperature thereof was adjusted to 80°C.

**Table 6-2**

| Formulation B | (%) |
|---|---|
| Sugar | 15 |
| Polysaccharide | Table 6-3 |
| Gelling agent (GEL UP^{*2} WM-1 (F)^{*1}) | 1.0 |
| Trisodium citrate | 0.1 |
| Colorant (CAROTENE BASE 9400-SV^{*1}) | 0.1 |
| 50% citric acid aqueous solution | 0.13 |
| Total with water | 100 |

Subsequently, 70 ml of the formulation A was filled in a 100-ml container, followed by the addition of 30 ml of the formulation B. Next, the resulting mixture was sterilized by heating at 85°C for 30 minutes, then cooled at 8°C for 3 hours. In this manner, multilayer foods were obtained comprising a combination of a gel layer and another gel layer adjacent to each other (Test Example 6-1).

The state of separation between layers of the multilayer foods obtained above was visually inspected in accordance with the following criteria. Table 6-3 shows the results.

### - Evaluation of Separation State Between Layers

AA (particularly excellent): Extremely clear interface
A (excellent): Clear interface
B (good): Unclear interface
C (defect): Two layers were mixed, showing no boundary

The effect of the polysaccharides shown in Table 6-3 on the texture of the multilayer foods obtained above was evaluated using, as a control, a multilayer food that contained no polysaccharides. The evaluation of the effect of polysaccharides on the texture was performed only for those whose layer boundary was observable. Table 6-3 shows the results.

**Table 6-3**

| Polysaccharide | Test group | Amount (%) | State of separation between layers | Effect on texture |
|---|---|---|---|---|
| Welan gum | Ex. 6-1-1 | 0.5 | AA | Little effect on the texture |
| | Ex. 6-1-2 | 0.3 | AA | Little effect on the texture |
| | Ex. 6-1-3 | 0.25 | AA | Little effect on the texture |
| | Ex. 6-1-4 | 0.2 | AA | Little effect on the texture |
| | Ex. 6-1-5 | 0.16 | AA | Little effect on the texture |
| | Ex. 6-1-6 | 0.12 | AA | Little effect on the texture |
| Xanthan gum | Comp. Ex. 6-1-1 | 0.5 | AA | Sticky and very deformable |
| | Comp. Ex. 6-1-2 | 0.3 | AA | Sticky and very deformable |
| | Comp. Ex. 6-1-3 | 0.25 | AA | Sticky and very deformable |
| | Comp. Ex. 6-1-4 | 0.2 | AA | Sticky and very deformable |
| | Comp. Ex. 6-1-5 | 0.16 | AA | Sticky and very deformable |
| | Comp. Ex. 6-1-6 | 0.12 | AA | Sticky and very deformable |
| Sodium alginate | Comp. Ex. 6-1-7 | 0.5 | A | Sticky, pasty, and slimy |
| | Comp. Ex. 6-1-8 | 0.2 | C | Evaluation was not performed since the layer boundary was not observed |
| Guar gum | Comp. Ex. 6-1-9 | 0.5 | B | Pasty and sticky |
| | Comp. Ex. 6-1-10 | 0.3 | C | Evaluation was not performed since no layer boundary was observed |
| | Comp. Ex. 6-1-11 | 0.25 | C | Evaluation was not performed since no layer boundary was observed |
| | Comp. Ex. 6-1-12 | 0.16 | C | Evaluation was not performed since no layer boundary was observed |
| Locust bean gum | Comp. Ex. 6-1-13 | 0.5 | C | Evaluation was not performed since no layer boundary was observed |
| | Comp. Ex. 6-1-14 | 0.3 | C | Evaluation was not performed since no layer boundary was observed |
| | Comp. Ex. 6-1-15 | 0.25 | C | Evaluation was not performed since no layer boundary was observed |
| | Comp. Ex. 6-1-16 | 0.2 | C | Evaluation was not performed since no layer boundary was observed |
| | Comp. Ex. 6-1-17 | 0.16 | C | Evaluation was not performed since no layer boundary was observed |
| | Comp. Ex. 6-1-18 | 0.12 | C | Evaluation was not performed since no layer boundary was observed |
| Native gellan gum | Comp. Ex. 6-1-19 | 0.5 | C | Evaluation was not performed since no layer boundary was observed |
| Modified starch | Comp. Ex. 6-1-20 | 0.5 | C | Evaluation was not performed since no layer boundary was observed |
| Psyllium seed gum | Comp. Ex. 6-1-21 | 0.5 | C | Evaluation was not performed since no layer boundary was observed |
| HM pectin | Comp. Ex. 6-1-22 | 0.5 | C | Evaluation was not performed since no layer boundary was observed |
| LM pectin | Comp. Ex. 6-1-23 | 0.5 | C | Evaluation was not performed since no layer boundary was observed |

| | | | | |
|---|---|---|---|---|
| Welan gum: VIS TOP^{*2} W^{*1} Xanthan gum: VIS TOP^{*2} D-3800^{*1} Sodium alginate: Kimica algin I-1G (produced by Kimica Corporation) Guar gum: VIS TOP^{*2} D-20^{*1} Locust bean gum: VIS TOP^{*2} D-171^{*1} Native gellan gum: KELCOGEL LT100^{*1} Modified starch: NATIONAL FRIGEX (produced by Ingredion Incorporated) Psyllium seed gum: VIS TOP^{*2} D-2074^{*1} HM pectin: SM-666^{*1} LM pectin: VIS TOP^{*2} D-402^{*1} | | | | |

In Examples 6-1-1 to 6-1-6, which used welan gum as a polysaccharide, the interface was extremely clear, and the texture was excellent since the use of welan gum had little effect on the texture.

In contrast, in Comparative Examples 6-1-1 to 6-1-6, which used xanthan gum as a polysaccharide, although the interface was extremely clear, the texture was affected by the addition of xanthan gum, and was sticky and very deformable.

In Comparative Examples 6-1-7 and 6-1-8, sodium alginate was used as a polysaccharide. In Comparative Example 6-1-8, which used 0.2 mass% of sodium alginate, the two layers were mixed, and no interface was obserbed; in Comparative Example 6-1-7, which used 0.5 mass% of sodium alginate, although the interface was clear, the texture was affected by the addition of sodium alginate, and was sticky, pasty, and slimy.

In Comparative Examples 6-1-9 to 6-1-12, guar gum was used as a polysaccharide. In Comparative Examples 6-1-10 to 6-1-12, which used 0.3 to 0.16 mass% of guar gum, the two layers were mixed, and no interface was observed; and in Comparative Example 6-1-9, which used 0.5 mass% of guar gum, the interface was unclear, and the texture was affected by the addition of guar gum, and was pasty and sticky.

In Comparative Examples 6-1-13 to 6-1-23, which used locust bean gum, native gellan gum, modified starch, psyllium seed gum, HM pectin, or LM pectin, the two layers were mixed, and no interface was observed.

As is clear from the above, the use of polysaccharides other than welan gum resulted in either the interface between two layers being unrecognizable; or, even though the interface between two layers was clear, the texture being greatly affected by the addition of the polysaccharide, as in known techniques. However, the use of welan gum achieved excellent effects; i.e., the interface between two layers was extremely clear, and additionally, the texture was not affected by the use of welan gum.

Further, the state of separation between the layers was externally observed with respect to the multilayer food comprising a combination of a non-gel layer and a gel layer adjacent to each other, the multilayer food being produced as in the above manner, without using a gelling agent in the formulation A. The results of visual inspection and sensory evaluation were the same as those of multilayer foods shown in Table 6-3.

Further, the state of separation between the layers was externally observed with respect to the multilayer food comprising a combination of a gel layer and a non-gel layer adjacent to each other, the multilayer food being produced as in the above manner, without using a gelling agent in the formulation B. The results of visual inspection and sensory evaluation were the same as those shown in Table 6-3.

Further, the state of separation between the layers was externally observed with respect to the multilayer food comprising a combination of a non-gel layer and another non-gel layer adjacent to each other, the multilayer food being produced as in the above manner, without using a gelling agent in the formulations A B. The results of visual inspection and sensory evaluation were the same as those shown in Table 6-3.

### Test Example 6-2: Preparation of Multilayer Food 2

Multilayer foods were obtained by using the formulations A and B of the Test Example 6-1 in a different addition order from that used in the Test Example 6-1. Specifically, 30 ml of the formulation B was filled into a 100-ml container, followed by the addition of 70 ml of the formulation A. Next, the resulting mixture was sterilized by heating at 85°C for 30 minutes, and cooled at 8°C for 3 hours. In this manner, multilayer foods comprising a combination of a gel layer and another gel layer adjacent to each other were obtained (Test Example 6-2). The obtained multilayer foods were evaluated in a manner similar to that used in the Test Example 6-1. Table 6-4 shows the results.

**Table 6-4**

| Polysaccharide | Test group | Amount (%) | State of separation between layers | Effect on texture |
|---|---|---|---|---|
| Welan gum | Ex. 6-2-1 | 0.5 | A | Little effect on the texture |
| | Ex. 6-2-2 | 0.3 | A | Little effect on the texture |
| | Ex. 6-2-3 | 0.25 | A | Little effect on the texture |
| | Ex. 6-2-4 | 0.2 | A | Little effect on the texture |
| | Ex. 6-2-5 | 0.16 | A | Little effect on the texture |
| Xanthan gum | Comp. Ex. 6-2-1 | 0.5 | A | Sticky and very deformable texture |
| | Comp. Ex. 6-2-2 | 0.3 | B | Sticky and very deformable texture |
| | Comp. Ex. 6-2-3 | 0.25 | B | Sticky and very deformable texture |
| | Comp. Ex. 6-2-4 | 0.2 | B | Sticky and very deformable texture |
| | Comp. Ex. 6-2-5 | 0.16 | C | Evaluation was not performed since no layer boundary was obseved |
| Sodium alginate | Comp. Ex. 6-2-6 | 0.5 | A | Sticky, pasty, and slimy |
| | Comp. Ex. 6-2-7 | 0.2 | C | Evaluation was not performed since no layer boundary was observed |
| Guar gum | Comp. Ex. 6-2-8 | 0.5 | B | Pasty and sticky |
| | Comp. Ex. 6-2-9 | 0.3 | C | Evaluation was not performed since no layer boundary was not recognizable |
| | Comp. Ex. 6-2-10 | 0.25 | C | Evaluation was not performed since no layer boundary was observed |
| | Comp. Ex. 6-2-11 | 0.16 | C | Evaluation was not performed since no layer boundary was observed |
| Locust bean gum | Comp. Ex. 6-2-12 | 0.5 | C | Evaluation was not performed since no layer boundary was observed |
| | Comp. Ex. 6-2-13 | 0.3 | C | Evaluation was not performed since no layer boundary was observed |
| | Comp. Ex. 6-2-14 | 0.25 | C | Evaluation was not performed since no layer boundary was observed |
| | Comp. Ex. 6-2-15 | 0.2 | C | Evaluation was not performed since no layer boundary was observed |
| | Comp. Ex. 6-2-16 | 0.16 | C | Evaluation was not performed since no layer boundary was observed |
| Native gellan gum | Comp. Ex. 6-2-17 | 0.5 | C | Evaluation was not performed since no layer boundary was observed |
| Modified starch | Comp. Ex. 6-2-18 | 0.5 | C | Evaluation was not performed since no layer boundary was observed |
| Psyllium seed gum | Comp. Ex. 6-2-19 | 0.5 | C | Evaluation was not performed since no layer boundary was observed |
| HM pectin | Comp. Ex. 6-2-20 | 0.5 | C | Evaluation was not performed since no layer boundary was observed |
| LM pectin | Comp. Ex. 6-2-21 | 0.5 | C | Evaluation was not performed since no layer boundary was observed |

In Examples 6-2-1 to 6-2-5, which used welan gum as a polysaccharide, the interface was clear, and the texture was excellent since the use of welan gum had little effect on the texture.

In Comparative Examples 6-2-1 to 6-2-5, xanthan gum was used as a polysaccharide. While the interface was clear in Comparative Example 6-1-1, which used 0.5 mass% of xanthan gum, the interface was unclear in Comparative Examples 6-2-2 to 6-2-4, which used 0.3 to 0.2 mass% of xanthan gum. In Comparative Example 6-2-5, which used 0.16 mass% of xanthan gum, the two layers were mixed, and no interface was observed. In Comparative Examples 6-2-1 to 6-2-5, the texture was affected by the addition of the polysaccharide, and was sticky and very deformable.

In Comparative Examples 6-2-6 and 6-2-7, sodium alginate was used as a polysaccharide. In Comparative Example 6-2-7, which used 0.2 mass% of sodium alginate, the two layers were mixed, and no interface was observed. In Comparative Example 6-2-6, which used 0.5 mass% of sodium alginate, although the interface was clear, the texture was affected by the addition of the polysaccharide and was sticky, pasty, and slimy.

In Comparative Examples 6-2-8 to 6-2-11, guar gum was used as a polysaccharide. In Comparative Examples 6-2-9 to 6-2-11, which used 0.3 to 0.16 mass% of guar gum, the two layers were mixed, and no interface was observed. In Comparative Example 6-2-8, which used 0.5 mass% of guar gum, the interface was unclear; and the texture was affected by the addition of the polysaccharide, and was pasty and sticky.

In Comparative Examples 6-2-12 to 6-2-21, which used locust bean gum, native gellan gum, modified starch, psyllium seed gum, HM pectin, or LM pectin, the two layers were completely mixed, and no interface was observed.

As is clear from the above, the use of polysaccharides other than welan gum resulted in either the interface between two layers being unobservable; or, even though the interface between two layers was clear, the texture being greatly affected by the addition of the polysaccharide, as in known techniques. However, the use of welan gum achieved excellent effects; i.e., the interface between two layers was extremely clear, and additionally, the texture was not affected by the use of welan gum.

Further, the state of separation into layers was observed with respect to the multilayer food comprising a combination of a non-gel layer and a gel layer adjacent to each other, the multilayer food being produced as in the above manner, without using the gelling agent in the formulation A. The results of visual inspection and sensory evaluation were the same as those shown in the Test Example 6-2.

Further, the state of separation into layers was observed with respect to the multilayer food comprising a combination of a gel layer and a non-gel layer adjacent to each other, the multilayer food being produced as in the above manner, without using the gelling agent in the formulation B. The results of visual inspection and sensory evaluation were the same as those shown in the Test Example 6-2.

Further, the state of separation into layers was observed with respect to the multilayer food comprising a combination of a non-gel layer and another non-gel layer adjacent to each other, the multilayer food being produced as in the above manner, without using the gelling agent in the formulations A and B. The results of visual inspection and sensory evaluation were the same as those shown in the Test Example 6-2.

### Test Example 6-3: Preparation of Multilayer Food 3

Formulation C (brix 16.6) was prepared using the formula shown in Table 6-5. Specifically, high-fructose corn syrup was mixed with water, and a powder mixture of sugar, a gelling agent, and trisodium citrate was further added thereto with stirring, followed by dissolution by stirring at 80°C for 10 minutes. Next, calcium lactate, 50% citric acid aqueous solution, 5-fold concentrated apple juice (clarified), a colorant, and the flavor were added thereto, the total amount was adjusted with water, and the temperature thereof was adjusted to 80°C.

**Table 6-5**

| Formulation C | (%) |
|---|---|
| High-fructose corn syrup | 10 |
| Sugar | 7 |
| Gelling agent (GEL UP^{*2} G-S^{*1}) | 0.35 |
| Trisodium citrate dihydrate | 0.05 |
| Calcium lactate pentahydrate | 0.2 |
| 50% citric acid aqueous solution | 0.34 |
| 5-fold concentrated apple juice (clarified) | 2.5 |
| Colorant (LYCOPENE BASE No. 35153^{*1}) | 0.02 |
| Flavor (APPLE BASE 3087FA) | 0.2 |
| Total with water | 100 |

Subsequently, formulation D (brix 25.3) was prepared using the formula shown in Table 6-6. Specifically, high-fructose corn syrup was added to water, and a powder mixture of corn syrup solid, sugar, two gelling agents, trisodium citrate dihydrate, and welan gum was further added thereto with stirring, followed by dissolution by stirring at 80°C for 10 minutes. Next, calcium lactate pentahydrate, 50% citric acid aqueous solution, 5-fold concentrated muscat juice (clarified), the colorant, and the flavor were added thereto, the total amount was adjusted with water, and the temperature thereof was adjusted to 80°C.

**Table 6-6**

| Formulation D | (%) |
|---|---|
| High-fructose corn syrup | 10 |
| Corn syrup solid | 10 |
| Sugar | 5 |
| Gelling agent (GEL UP^{*2} G-S^{*1}) | 0.05 |
| Gelling agent (GEL UP^{*2} SA-55^{*1}) | 0.2 |
| Welan gum (VIS TOP^{*2} W^{*1}) | 0.15 |
| Trisodium citrate dehydrate | 0.05 |
| Calcium lactate pentahydrate | 0.1 |
| 50% citric acid aqueous solution | 0.18 |
| 5-fold concentrated muscat juice (clarified) | 4 |
| Colorant (SAN GREEN^{*2} GC-EM^{*1}) | 0.03 |
| Flavor (MUSCAT FLAVOR No. 60040 (P)^{*1}) | 0.15 |
| Total with water | 100 |

Subsequently, 50 ml of the formulation C was filled into a 100-ml container, followed by the addition of 50 ml of the formulation D. Next, the resulting mixture was sterilized by heating at 85°C for 30 minutes, and cooled at 8°C for 3 hours. In this manner, a multilayer food was obtained comprising a combination of a gel layer and another gel layer adjacent to each other (Test Example 6-3).

In Examples 6-3, which used welan gum as a polysaccharide, the interface was extremely clear; and the texture was not affected by the additional use of welan gum, and was excellent.

Further, the state of separation into layers was observed with respect to the multilayer food comprising a combination of a non-gel layer and a gel layer adjacent to each other, the multilayer food being produced in the same manner as in the Test Example 6-3, without using a gelling agent in raw material mix C. The results of visual inspection and sensory evaluation were the same as those shown in the Test Example 6-3.

Further, the state of separation into layers was observed with respect to the multilayer food comprising a combination of a gel layer and a non-gel layer adjacent to each other, the multilayer food being produced in the same manner as in the Test Example 6-3, without using a gelling agent in the formulation D. The results of visual inspection and sensory evaluation were the same as those shown in the Test Example 6-3.

Further, the state of separation into layers was observed with respect to the multilayer food comprising a combination of a non-gel layer and another non-gel layer adjacent to each other, the multilayer food being produced in the same manner as in the Test Example 6-3, without using a gelling agent in the formulations C and D. The evaluation results were the same as those shown in the Test Example 6-3.

Subsequently, 50 ml of raw material mix D was filled into a 100-ml container, followed by the addition of 50 ml of formulation C. Next, the resulting mixture was sterilized by heating at 85°C for 30 minutes, and cooled at 8°C for 3 hours. In this manner, a multilayer food was obtained comprising a combination of a gel layer and another gel layer adjacent to each other (Test Example 6-4).

In the Test Example 6-4, which used welan gum as a polysaccharide, the interface was extremely clear, and the texture was not affected by the additional use of welan gum, and was excellent.

Further, the state of separation into layers was observed with respect to the multilayer food comprising a combination of a non-gel layer and a gel layer adjacent to each other, the multilayer food being produced in the same manner as in Example 6-4, without using a gelling agent in the formulation C. The results of visual inspection and sensory evaluation were the same as those shown in the Test Example 6-4.

Further, the state of separation into layers was observed with respect to the multilayer food comprising a combination of a gel layer and a non-gel layer adjacent to each other, the multilayer food being produced in the same manner as in the Test Example 6-4, without using a gelling agent in the formulation D. The results of visual inspection and sensory evaluation were the same as those shown in the Test Example 6-4.

Further, the state of separation into layers was observed with respect to the multilayer food comprising a combination of a non-gel layer and another non-gel layer adjacent to each other, the multilayer food being produced in the same manner as in the Test Example 6-4, without using a gelling agent in the formulations C and D. The results of visual inspection and sensory evaluation were the same as those shown in the Test Example 6-4.

### Test Example 7: Carbonara sauce

Carbonara sauces of Comparative Example 7-1 and Example 7-1 were prepared using the formula of the following table (Table 7).

**Table 7**

| Formulation example of sauce | | Comp. Ex. 7-1 | Ex. 7-1 | Manufacturer or seller |
|---|---|---|---|---|
| | | kg | kg | |
| Ingredient 1. | Egg yolk | 8.0 | 8.0 | |
| Ingredient 2. | White sauce base | 3.0 | 3.0 | NOF Corporation |
| Ingredient 3. | Cream (milk fat content: 48%) | 2.0 | 2.0 | |
| Ingredient 4. | Butter (salt free) | 2.0 | 2.0 | |
| Ingredient 5. | Cheese powder Gouda CR13813^{*1} | 1.5 | 1.5 | Kerry Japan KK |
| Ingredient 6. | Salt | 0.7 | 0.7 | |
| Ingredient 7. | Sweetener (SAN SWEET^{*2} SU-100^{*1}) | 0.01 | 0.01 | San-Ei Gen F.F.I. |
| Ingredient 8. | Seasoning (SAN-LIKE^{*2} PORK RX-22^{*1}) | 1.0 | 1.0 | San-Ei Gen F.F.I. |
| Ingredient 9. | Seasoning (SAN-LIKE^{*2} SAUTEED ONION 9Y55E^{*1} | 0.2 | 0.2 | San-Ei Gen F.F.I. |
| Ingredient 10. | Seasoning (SAN-LIKE^{*2} CHEESE ENHANCER CHEDDAR^{*1}) | 0.2 | 0.2 | San-Ei Gen F.F.I. |
| Ingredient 11. | Seasoning (SAN-LIKE^{*2} EGG ENHANCER VN-43^{*1}) | 0.1 | 0.1 | San-Ei Gen F.F.I. |
| Ingredient 12. | Black pepper coarse^{*1} | 0.1 | 0.1 | |
| Ingredient 13. | Acetylated distarch adipate (Suehiro 200) | 1.5 | 1.5 | Oji Cornstarch Co., Ltd. |
| Ingredient 14. | Maltodextrin (SMART TASTE^{*2*1}) | 0.5 | 0.5 | Our product |
| Ingredient 15. | Flavor (BACON OIL SV-3650^{*1}) | 0.07 | 0.07 | San-Ei Gen F.F.I. |
| Ingredient 16. | Flavor (PEPPER BASE SP-6523FG (P)^{*1}) | 0.05 | 0.05 | San-Ei Gen F.F.I. |
| Ingredient 17. | Xanthan gum (VIS TOP^{*2} D-3500^{*1}) | 0.2 | - | San-Ei Gen F.F.I. |
| Ingredient 18. | Welan gum (VIS TOP^{*2} W^{*1}) | - | 0.2 | San-Ei Gen F.F.I. |
| Ingredient 19. | Water | 78.87 | 78.87 | |
| | Total | 100.0 | 100.0 | |

| | | | | |
|---|---|---|---|---|
| Xanthan gum: VIS TOP^{*2} D-3500^{*1} Welan gum: VIS TOP^{*2} W^{*1} | | | | |

### - Production Method

Step (1): Ingredients 13 and 17 or 18 were added to ingredient 19, followed by stirring with heating at 80°C for 10 minutes.

Step (2): Ingredient 1 was gradually added to the preparation product obtained in step (1), followed by stirring.

Step (3): The other ingredients were added to the preparation material obtained in step (2), and dissolved by stirring.

A bacon-containing sauce prepared using either Comparative Example 7-1 or Example 7-1 was filled into a container and retort-sterilized (at 121°C for 20 minutes/140 g) in accordance with the following formulation.

### Formulation example of one pouch

| | G |
|---|---|
| 1. Sauce obtained above | 135.0 |
| 2. Bacon (cut into 1 cm slices) | 5.0 |
| Total | 140.0 |

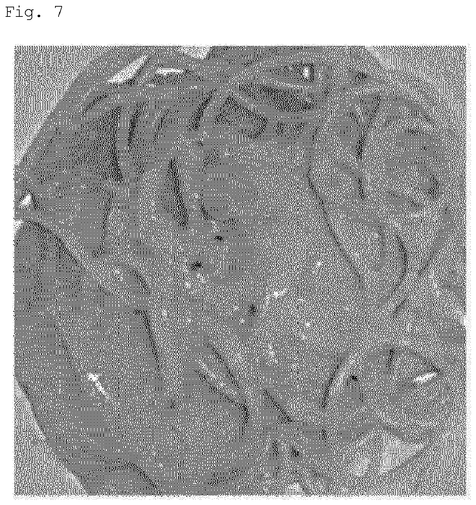

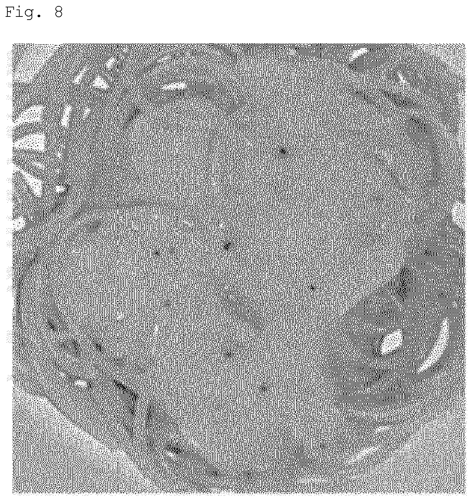

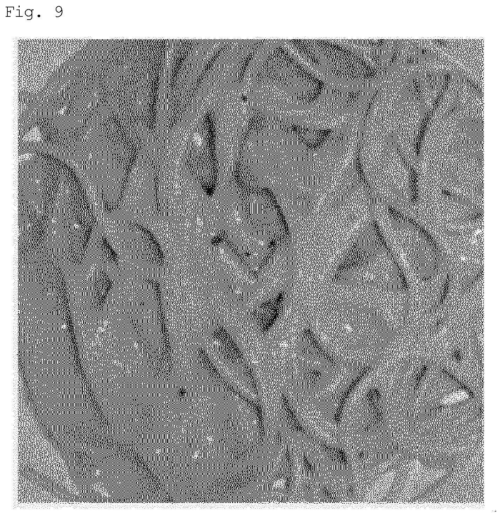

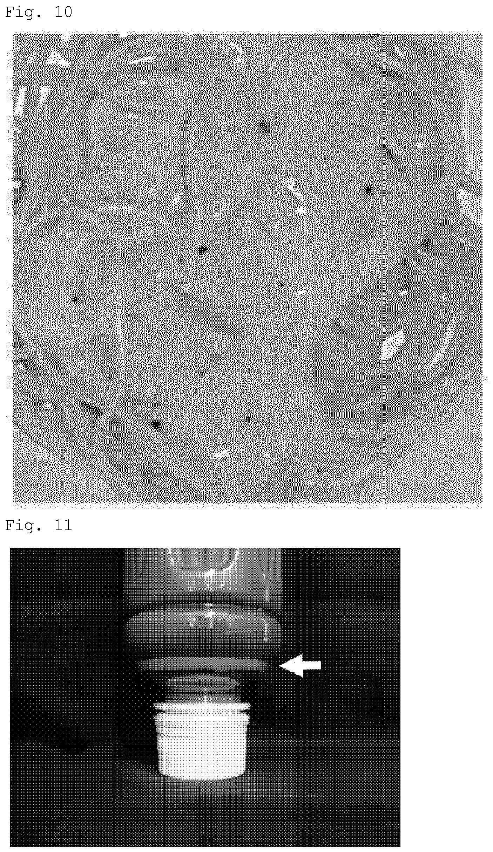

The obtained bacon-containing sauce was poured over the pasta and allowed to stand; afterward, the appearance was observed. The photographs thereof were shown in Fig. 7 (immediately after the sauce of Comparative Example 7-1 was poured over the pasta), Fig. 8 (immediately after the sauce of Example 7-1 was poured over the pasta), Fig. 9 (one hour after the sauce of Comparative Example 7-1 was poured over the pasta), and Fig. 10 (one hour after the sauce of Example 7-1 was poured over the pasta).

With the formula that used xanthan gum, the sauce had poor shape retention; when allowed to stand for 1 hour after the sauce was poured over the pasta, the sauce undesirably dropped inside the pasta noodles (Comparative Example 7-1).

In contrast, with the formula that used welan gum, the sauce had excellent shape retention; even when allowed to stand for 1 hour after the sauce was poured over the pasta, the sauce stayed on top of the pasta noodles (Example 7-1).

### Test Example 8-1: Preparation of Separate-Type Dressing

Separate-type dressings were prepared using the formula shown in Table 8-1. The following are details.
Step 1) Welan gum or xanthan gum was added to water at 80°C, followed by stirring at 80°C for 10 minutes.
Step 2) The ingredients other than salad oil was added to the mixture obtained in step 1), followed by stirring for another 5 minutes.
Step 3) Salad oil and the preparation product obtained in step 2) were filled into a container, followed by cooling to room temperature.

The prepared separate-type dressing was stirred and subjected to each evaluation. More specifically, 10 g of the separate-type dressing was poured over 10 g of commercially available cut vegetables (mixed vegetables), and the state after 5 minutes was observed to evaluate the shape retention. Further, the viscosity of the separate-type dressing was measured after 1 minute rotation using a B-type rotational viscometer (60 rpm, 10°C). Additionally, the separate-type dressing was subjected to sensory evaluation to examine the flavor release and texture.

Table 8-1 shows the results.

**Table 8-1**

| | Comp. Ex. 8-1 (%) | Ex. 8-1 (%) |
|---|---|---|
| Salad oil | 35.0 | 35.0 |
| Dark soy sauce | 7.0 | 7.0 |
| High-fructose corn syrup | 6.0 | 6.0 |
| Clarified lemon juice | 4.0 | 4.0 |
| Brewed vinegar (acidity: 10%) | 5.5 | 5.5 |
| Salt | 2.5 | 2.5 |
| L-monosodium glutamate | 0.5 | 0.5 |
| White pepper | 0.3 | 0.3 |
| DL-malic acid | 0.2 | 0.2 |
| Seasoning (SAN-LIKE^{*2} AMINO BASE NAG^{*1}) | 0.2 | 0.2 |
| Flavor (CHINESE SAVORY OIL No. 3^{*1}) | 0.6 | 0.6 |
| Flavor (ROAST ONION OIL SV-1^{*1}) | 0.03 | 0.03 |
| Garlic powder | 0.03 | 0.03 |
| Xanthan gum (SAN ACE^{*2*1}) | 0.3 | - |
| Welan gum (VIS TOP^{*2} W^{*1}) | - | 0.3 |
| Total with water | 100.0 % | 100.0 % |
| Shape retention | The liquid condiment dropped below the vegetables | The liquid condiment stayed over the vegetables; the shape retention was excellent |
| Viscosity | 565 mPa·s | 678 mPa·s |
| Flavor release | Flavor enhancement was insufficient | Flavor enhancement was excellent |
| Texture | A slimy texture that lingered in the mouth | Not slimy, but clean |

The separate-type dressing that contained xanthan gum (Comparative Example 8-1) had poor shape retention, and undesirably easily dropped below the cut vegetables. In contrast, the separate-type dressing of the present invention, which contained welan gum (Example 8-1), had improved shape retention, and did not drop below the cut vegetables, allowing the cut vegetables to be consumed together with the dressing.

In Comparative Example 8-1, the enhancement of flavor such as spiciness and sourness was insufficient, the initiation of flavor enhancement was slightly slow, and thus the flavor release was poor. In contrast, the separate-type dressing of the present invention, which contained welan gum (Example 8-1), had excellent flavor release, and the flavor characteristic to separate-type dressings was easily perceived, compared with Comparative Example 8-1.

Further, Comparative Example 8-1 had a slimy texture that lingered in the mouth. However, Example 8-1 did not have a slimy texture but a clean texture.

These results reveal that the present invention enables the shape retention of liquid condiments to be improved without greatly deteriorating the flavor release or damaging the texture.

### Test Example 8-2: Preparation of Ankake Sauce

*Ankake* sauces were prepared using the formula shown in Table 8-2. The following are details.
Step 1) The mixture of acetylated distarch adipate and welan gum or xanthan gum was added to water, followed by stirring at 85°C for 10 minutes.
Step 2) The other ingredients were added to the mixture obtained in step 1), followed by stirring for another 5 minutes.
Step 3) The preparation product obtained in step 2) was filled into a heat-resistant bag, and sterilized in a hot-water bath at 85°C for 30 minutes, followed by cooling down to room temperature.

The thus-prepared *ankake* sauces were subjected to each evaluation. More specifically, 5 g of the *ankake* sauce was dropped onto a stainless steel tray, and allowed to stand at 60°C for 1 hour. Then, the degree of the spread (diameter) was measured to evaluate the shape retention. Further, the viscosity of the *ankake* sauce was measured after 1 min's rotation of a B-type rotational viscometer (60 rpm, 60°C). Additionally, the *ankake* sauce was subjected to sensory evaluation to examine the flavor release and texture.

Table 8-2 shows the results.

**Table 8-2**

| Formula | Comp. Ex. 8-2 (%) | Ex. 8-2 (%) |
|---|---|---|
| Dark soy sauce | 10.0 | 10.0 |
| Sugar | 15.0 | 15.0 |
| Salt | 1.0 | 1.0 |
| Brewed vinegar (acidity: 10%) | 6.0 | 6.0 |
| Sesame oil | 0.5 | 0.5 |
| Seasoning (SAN-LIKE^{*2} Sauteed onion 9Y55E^{*1}) | 0.1 | 0.1 |
| Seasoning (SAN-LIKE^{*2} TASTE BASE^{*2} A (RENEWED)^{*1}) | 0.1 | 0.1 |
| Flavor (PEPPER SP-61524^{*1}) | 0.05 | 0.05 |
| Acetylated distarch adipate | 3.8 | 2.0 |
| Welan gum (VIS TOP^{*2} W^{*1}) | - | 0.2 |
| Total with water | 100.0% | 100.0% |
| Shape retention | 55 mm | 40 mm |
| Viscosity | 900 mPa·s | 840 mPa·s |
| Flavor release | The development of flavor was insufficient | The development of flavor was excellent |
| Texture | Pasty and sticky, with a lingering aftertaste | Not pasty nor sticky, but clean |

According to the evaluation of the shape retention for the *ankake* sauce that contained 3.8% of modified starch (Comparative Example 8-2), the diameter after being allowed to stand at 60°C for 1 hour was 55 mm. In contrast, the diameter of the *ankake* sauce of the present invention (Example 8-2), which contained 0.2% of welan gum and 2% of modified starch, after being allowed to stand at 60°C for 1 hour, was 40 mm; thus, the *ankake* sauce of the present invention had excellent shape retention, compared with Comparative Example 8-2.

Moreover, in Comparative Example 8-2, the enhancement of flavor such as spiciness and sourness sauces was insufficient, the initiation of the flavor enhancement was slightly slow, and thus the flavor release was poor. In contrast, Example 8-2 had excellent flavor release, and the flavor characteristic to *ankake* sauces was easily perceived, compared with Comparative Example 8-2.

Further, Comparative Example 8-2 had a pasty texture with strong stickiness, while Example 8-2 did not have a pasty texture or stickiness.

The above results reveal that the present invention enables the shape retention of liquid condiments to be improved without greatly deteriorating the flavor release or damaging the texture.

### Test Example 8-3: Preparation of Sauce

Sauces were prepared using the formula shown in Table 8-3. The preparation method is as follows.
Step 1) The mixture of acetylated distarch adipate and welan gum or xanthan gum was added to water, followed by stirring at 85°C for 10 minutes.
Step 2) The other ingredients were added thereto, followed by stirring for another 5 minutes.
Step 3) The preparation product obtained in step 2) was filled into a heat-resistant bag, and sterilized in a hot-water bath at 85°C for 30 minutes, followed by cooling to room temperature.

The thus-prepared sauces were subjected to each evaluation. More specifically, the viscosity of the sauce was measured after 1 min's rotation using a B-type rotational viscometer was pressed (60 rpm, 20°C). Additionally, the sauce was subjected to sensory evaluation to examine the flavor release and texture.

Table 8-3 shows the results.

The prepared sauce was mixed with cooked *yakisoba* noodles to prepare *yakisoba.* The preparation method is as follows.
Step 1) A pan was heated on medium heat, and cooked *yakisoba* noodles were added to the pan.
Step 2) Fifty grams of water was added thereto to loosen the *yakisoba* noodles sticking each other.
Step 3) Fifty grams of the sauce prepared above was added thereto and mixed with the *yakisoba* noodles.
Step 4) The prepared *yakisoba* was cooled and allowed to stand for 24 hours at 10°C, followed by heating with a microwave oven (500 W, 2 minutes) before evalutation.

The prepared *yakisoba* was subjected to sensory evaluation to examine the texture of the sauce after being mixed with the *yakisoba* noodles.

Table 8-3 shows the results.

**Table 8-3**

| Formula | Comp. Ex. 8-3 (%) | Ex. 8-3 (%) |
|---|---|---|
| High-fructose corn syrup | 20.0 | 20.0 |
| Brewed vinegar (acidity: 10%) | 7.0 | 7.0 |
| Salt | 2.0 | 2.0 |
| L-monosodium glutamate | 0.5 | 0.5 |
| Seasoning (SAN-LIKE^{*2} SAUCE POWDER^{*1}) | 20.0 | 20.0 |
| Seasoning (SAN-LIKE^{*2} PORK 5801P^{*1}) | 2.0 | 2.0 |
| Seasoning (SAN-LIKE^{*2} DARK SOY SAUCE M^{*1}) | 1.0 | 1.0 |
| Seasoning (SAN-LIKE^{*2} KAZUO M^{*1}) | 1.0 | 1.0 |
| Seasoning (SAN-LIKE^{*2} YEAST 0409P^{*1}) | 0.5 | 0.5 |
| Acetylated distarch adipate | 2.5 | 1.0 |
| Welan gum (VIS TOP^{*2} W^{*1}) | - | 0.2 |
| Total with water | 100.0% | 100.0% |
| Viscosity | 1100 mPa·s | 1020 mPa·s |
| Flavor release | The development of flavor was insufficient | The development of flavor was excellent |
| Texture | Sticky | Not sticky, but clean |
| Texture after mixed | Sticky | Not sticky, but |
| with *yakisoba* noodles | | slippery on the tongue |

In the sauce that contained 2.5% of modified starch (Comparative Example 8-3), the enhancement of flavor such as spiciness and sourness c was insufficient, and the flavor release was poor. In contrast, the sauce of the present invention (Example 8-3), which contained 0.2% of welan gum and 1% of modified starch, had excellent flavor release, and the flavor characteristic to the sauce was easily perceived, compared with Comparative Example 8-3.

Comparative Example 8-3 had a sticky texture, and the stickiness was maintained after the sauce was mixed with *yakisoba* noodles. In contrast, the sauce of Example 8-3 did not have a sticky texture, and even after the sauce was mixed with *yakisoba* noodles, the texture was not sticky, but slippery on the tongue.

The above results reveal that the present invention can impart viscosity to liquid condiments without greatly deteriorating the flavor release or damaging the texture.

### Test Example 9-1: Fat-Containing Liquid Food Stability Evaluation 1

Fat-containing liquid foods (acidified milk beverages) were prepared in accordance with the formulas shown in Tables 9-1 and 9-2. The details are as follows.
Step 1) Sugar, soybean soluble polysaccharide, HM pectin, the emulsifier, and a thickener were added to water, and the resulting mixture was dissolved by stirring at 80°C for 10 minutes, followed by cooling down to room temperature.
Step 2) Cow milk was added to the preparation product obtained in step 1), and the pH was adjusted to 3.8 with 50% citric acid.
Step 3) After a further addition of colorant, the total amount was adjusted with water, followed by heating up to 75°C.
Step 4) Homogenization was performed at 15 MPa.
Step 5) The resulting product was sterilized by heating up to 93°C, and hot-packed in a PET bottle.

After the prepared acidified milk beverage was stored at 5°C for 2 weeks, the creaming-prevention effect was evaluated. More specifically, the thickness (mm) of the neck ring formed as a result of the occurrence of creaming was measured to evaluate the creaming-prevention effect. A thinner neck ring represents a higher creaming-prevention effect.

Table 9-2 shows the results.

**Table 9-1**

| | Formula (%) |
|---|---|
| Cow milk (fat content: 3.8%) | 30.0 |
| Sugar | 8.0 |
| Soybean soluble polysaccharide (SM-1200^{*1}) | 0.3 |
| HM pectin (SM-666^{*1}) | 0.1 |
| Thickener | Table 2 |
| Emulsifier (HOMOGEN^{*2} No. 2597^{*1}) | 0.1 |
| 50% citric acid aqueous solution | Up to pH 3.8 |
| Colorant (SAN RED^{*2} YMF^{*1}) | 0.02 |
| Total with water | 100.0% |

**Table 9-2**

| Thickener | Ex. 9-1-1 | Ex. 9-1-2 | Ex. 9-1-3 | Ex. 9-1-4 | Ex. 9-1-5 | Ex. 9-1-6 | Ex. 9-1-7 | Comp. Ex. 9-1-1 | Comp. Ex. 9-1-2 | Comp. Ex. 9-1-3 | Comp. Ex. 9-1-4 |
|---|---|---|---|---|---|---|---|---|---|---|---|
| Welan gum (%) (VIS TOP^{*2} W^{*1}) | 0.005 | 0.01 | 0.02 | 0.03 | 0.05 | 0075 | 0.1 | - | - | - | - |
| Microcrystalline cellulose blend (%) | - | - | - | - | - | - | - | - | 0.1 | 0.2 | 0.3 |
| Neck ring thickness (mm) | 3.5 | 2.9 | 0.0 | 0.0 | 0.0 | 0.0 | 0.0 | 5.4 | 6.22 | 5.33 | 4.7 |

### Microcrystalline cellulose blend:

Ceolus SC-900 (Asahi Chemical Industry Co., Ltd.),
73.0% of microcrystalline cellulose blend,
5.0% of CMC-Na,
2.8% of xanthan gum,
19.0% of dextrin, and
0.2% of edible oil.

As shown in Table 9-2, a very thick neck ring was formed in the acidified milk beverage that did not contain a thickener (Comparative Example 9-1-1). Although the acidified milk beverages of Comparative Examples 9-1-2 to 9-1-4 contained a large amount of the microcrystalline cellulose blend as a thickener, the neck ring thickness did not sufficiently decrease, demonstrating an insufficient creaming-prevention effect.

In contrast, in the acidified milk beverages that contained welan gum as a thickener (Examples 9-1-1 to 9-1-7), the neck ring thickness significantly decreased, which indicates that the occurrence of creaming was significantly prevented, even by a small addition. Further, in Examples 9-1-3 to 9-1-7, which contained 0.02 to 0.1% of welan gum, no neck ring was formed, demonstrating a particularly remarkable creaming-prevention effect.

### Test Example 9-2: Fat-Containing Liquid Food Stability Evaluation 2

Fat-containing liquid foods (milk-containing coffee beverages) were prepared in accordance with the formulas shown in Tables 9-3 and 9-4. The details are as follows.

### - Preparation of Coffee Extract

Step 1) Boiling water (95°C) was added to coarsely ground coffee beans, followed by filtration.

Step 2) The extraction was stopped when an amount of collected extract reached to 8-fold of that of beans, and thus a coffee extract was obtained.

### - Preparation of Milk-Containing Coffee Beverage

Step 1) Sugar, the milk powder, the emulsifier, and a thickener were gradually added to water heated up to 75°C, and the resulting mixture was dissolved by stirring at 70°C for 10 minutes, followed by cooling to room temperature.

Step 2) The coffee extract and cow milk were added to the preparation product obtained in step 1), and the pH was adjusted to 6.8 with a sodium bicarbonate solution.

Step 3) The total amount was adjusted with water, followed by heating up to 75°C.

Step 4) Homogenization was performed at 15 MPa.

Step 5) After sterilization was performed at 140°C for 30 seconds with a UHT plate sterilizer, the resulting product was aseptically filled into a plastic container.

After the prepared milk-containing coffee beverage was stored at 37°C for 4 weeks, the creaming-prevention effect was evaluated. More specifically, the thickness (mm) of the neck ring formed as a result of the occurrence of creaming was measured to evaluate the creaming-prevention effect. A thinner neck ring represents a higher creaming-prevention effect.

After the neck ring thickness was evaluated, the plastic bottle was inverted, and the state of the neck ring immediately after the inversion was observed to evaluate the dispersibility of the neck ring.

Table 9-4 shows the results.

**Table 9-3**

| | (%) |
|---|---|
| Raw coffee beans (solid) | 1.0 |
| Cow milk (fat content: 3.8%) | 10.0 |
| Whole milk powder | 1.5 |
| Sugar | 7.0 |
| Thickener | Table 9-4 |
| Emulsifier (HOMOGEN^{*2} No. 3136^{*1}) | 0.12 |
| Sodium bicarbonate an hydrous | Up to pH 6.8 |
| Total with water | 100.0 % |

**Table 9-4**

| Thickener | Ex. 9-2 | Comp. Ex. 9-2-1 | Comp. Ex. 9-2-2 |
|---|---|---|---|
| Welan gum (%) (VIS TOP^{*2} W^{*1}) | 0.01 | - | - |
| Iota carrageenan (%) | - | - | 0.01 |
| Neck ring thickness (mm) | 1.5 | 6.0 | 4.5 |
| State of neck ring immediately after inversion | Easily dispersed | Hardly dispersed | Slightly dispersed, but remaining |

As shown in Table 9-4, a very thick neck ring was formed in the milk-containing coffee beverage that did not contain a thickener (Comparative Example 9-2-1). Even when the bottle was inverted, the neck ring was hardly dispersed (Fig. 11-1).

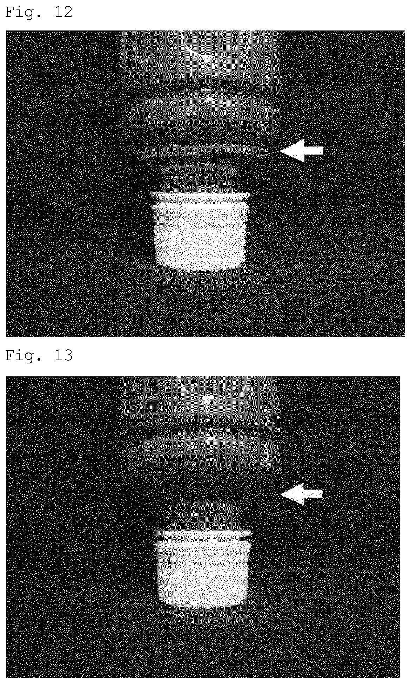

Regarding the milk-containing coffee beverage that contained iota carrageenan as a thickener (Comparative Example 9-2-2), the neck ring thickness did not sufficiently decrease, and the creaming-prevention effect was not sufficient. Even when the bottle was inverted, the neck ring mostly remained without being dispersed (Fig. 12-2).

In the milk-containing coffee beverage that contained welan gum as a thickener (Example 9-2), the neck ring thickness significantly decreased, demonstrating that the occurrence of creaming was significantly prevented with only a small amount of welan gum (i.e. 0.01%). A slightly formed neck ring was easily dispersed when the bottle was inverted (Fig. 13-3).

## Claims

1. A dispersion stabilizer comprising welan gum.

2. A processed food product or a material composition thereof, comprising the dispersion stabilizer according to claim 1.

3. A deep-fried food burst inhibitor comprising welan gum.

4. A deep-fried food comprising 0.1 to 1 mass% of the deep-fried food burst inhibitor according to claim 3.

5. A fruit preparation comprising welan gum.

6. The fruit preparation according to claim 5, wherein the fruit preparation is a fruit preparation for stirred yogurt.

7. An acidic oil-in-water emulsified condiment comprising welan gum.

8. A method for improving the texture of an acidic oil-in-water emulsified condiment, the method comprising adding welan gum.

9. A beverage to which richness is imparted, the beverage comprising welan gum.

10. The beverage according to claim 9, wherein the beverage is a milk component-free soft drink, a milk component-containing neutral beverage, or a milk component-containing acidic beverage.

11. A multilayer food comprising welan gum in at least one layer.

12. The multilayer food according to claim 11, wherein at least one layer is gel.

13. A stabilizer for a fat-containing liquid food, the stabilizer comprising welan gum.

14. The stabilizer for a fat-containing liquid food according to claim 13, wherein the liquid food is a beverage.
